# EUROPÄISCHE PATENTSCHRIFT

(11) **EP 3 090 001 B1**
(45) Veröffentlichungstag und Bekanntmachung des Hinweises auf die Patenterteilung: **09.10.2019**
(21) Anmeldenummer: 14828483.9
(22) Anmeldetag: 29.12.2014
(51) Int. Cl.: C08C 2/04, C08C 19/20, B01J 31/24

(54) **HYDRIERTER NITRILKAUTSCHUK ENTHALTEND PHOSPHAN- ODER DIPHOSPHANSULFID**
HYDROGENATED NITRILE RUBBER CONTAINING PHOSPHINE OR DIPHOSPHANE SULFIDE
CAOUTCHOUC AU NITRILE HYDROGÉNÉ CONTENANT DU SULFURE DE PHOSPHANE OU DE DIPHOSPHANE

(30) Priorität: 30.12.2013 EP 13199839
(43) Veröffentlichungstag der Anmeldung: 09.11.2016
(73) Patentinhaber: ARLANXEO Deutschland GmbH, 41540 Dormagen (DE)
(72) Erfinder: OBRECHT, Werner, 47447 Moers (DE)
(86) Internationale Anmeldenummer: PCT/EP2014/079377
(87) Internationale Veröffentlichungsnummer: WO 2015/101602

(56) Entgegenhaltungen:
- EP-A1- 1 203 777
- EP-A1- 2 614 887
- WO-A1-2004/035669
- WO-A1-2013/098056
- US-A- 4 985 540
- DATABASE WPI Week 200425 Thomson Scientific, London, GB; AN 2004-258068 XP002724834, & CN 1 443 784 A (CHINA NAT PETROLEUM CORP) 24. September 2003 (2003-09-24)

## Beschreibung

Die Erfindung betrifft hydrierte Nitrilkautschuke, die entweder keinen oder einen reduzierten Gehalt an Phosphanen bzw. Diphosphanen aufweisen und zusätzlich Phosphansulfid bzw. Diphosphansulfid enthalten, ein Verfahren zu ihrer Herstellung, vulkanisierbare Mischungen auf Basis dieser hydrierten Nitrilkautschuke sowie hierbei erhaltene Vulkanisate.

Nitrilkautschuke sind Co- und Terpolymere aus mindestens einem ungesättigten Nitril-Monomeren, mindestens einem konjugierten Dien und gegebenenfalls einem oder mehreren copolymerisierbaren Monomeren. Verfahren zur Herstellung von Nitrilkautschuk sowie Verfahren zur Hydrierung von Nitrilkautschuk in geeigneten organischen Lösungsmitteln sind aus der Literatur bekannt **(z.B.** Ullmann's Encyclopedia of Industrial Chemistry, VCH Verlagsgesellschaft, Weinheim, 1993, S. 255-261 sowie S. 320 - 324**).**

Unter hydriertem Nitrilkautschuk, abgekürzt "HNBR", werden Kautschuke verstanden, die aus Nitrilkautschuken, abgekürzt "NBR", durch Hydrierung erhalten werden. Entsprechend sind in HNBR die C=C Doppelbindungen der einpolymerisierten Dien-Einheiten ganz oder teilweise hydriert. Der Hydriergrad der einpolymerisierten Dien-Einheiten liegt üblicherweise in einem Bereich von 50 bis 100%. Von sogenannten "vollhydrierten Typen" wird in der Fachwelt bereits gesprochen, wenn der Restdoppelbindungsgehalt ("RDB") maximal bei ca. 0,9 % liegt. Die am Markt kommerziell erhältlichen HNBR Typen weisen üblicherweise eine Mooney-Viskosität (ML 1+4 bei 100°C) im Bereich von 10 bis 120 Mooney-Einheiten auf.

Hydrierter Nitrilkautschuk ist ein Spezialkautschuk, der über eine sehr gute Hitzebeständigkeit, eine sehr gute Beständigkeit gegen Ozon und Chemikalien sowie eine ausgezeichnete Ölbeständigkeit verfügt. Die vorgenannten physikalischen und chemischen Eigenschaften des HNBR gehen einher mit sehr guten mechanischen Eigenschaften, insbesondere einer hohen Abriebfestigkeit.

Aufgrund dieses Eigenschaftsprofils hat HNBR breite Verwendung in den verschiedensten Anwendungsgebieten gefunden. HNBR wird z.B. eingesetzt für Dichtungen, Schläuche, Riemen, Kabelmäntel, Walzenbeläge und Dämpfungselemente im Automobilsektor, ferner für Statoren, Bohrlochdichtungen und Ventildichtungen im Bereich der Ölförderung sowie für zahlreiche Teile der Luftfahrtindustrie, der Elektroindustrie, des Maschinen- und des Schiffsbaus.

Eine besondere Rolle spielen Vulkanisate des hydrierten Nitrilkautschuks mit hohem Modulniveau (gemessen als Spannungswert bei verschiedenen Dehnungen) sowie niedrigem Compression Set, insbesondere nach langen Lagerzeiten bei hohen Temperaturen. Diese Eigenschaftskombination ist wichtig in Einsatzgebieten, in denen für die Gewährleistung der Funktionsfähigkeit der Gummiartikel sowohl bei statischer als auch bei dynamischer Belastung auch nach langen Zeiten und gegebenenfalls hohen Temperaturen hohe Rückstellkräfte gefordert werden. Dies trifft insbesondere auf unterschiedliche Dichtungen wie O-Ringe, Flanschdichtungen, Wellendichtringe, Statoren in Rotor/Statorpumpen, Ventilschaftdichtungen, Dichtungsmanschetten wie Achsmanschetten, Schlauchdichtungen, Motorlager, Brückenlager und Bohrlochdichtungen (blowout-preventer) zu. Des Weiteren sind Vulkanisate mit hohem Modul wichtig z. B. für dynamisch belastete Artikel insbesondere für Riemen wie Antriebs- und Steuerriemen, wie z.B. Zahnriemen, und auch für Walzenbeläge.

Das bisher erreichte Niveau der mechanischen Eigenschaften von HNBR basierten Vulkanisaten, insbesondere in Bezug auf das Modulniveau und den Compression Set ist noch nicht zufriedenstellend.

Für die Hydrierung von Nitrilkautschuk mit homogen löslichen rhodium- und/oder rutheniumhaltigen Hydrierkatalysatoren hat sich der Zusatz von Phosphanen oder Diphosphanen als Co-Katalysator bewährt. Bevorzugt ist der Einsatz von Triphenylphosphan ("TPP"). Der Einsatz eines Cokatalysators hat eine Reihe positiver Auswirkungen: Möglich wird eine Reduktion des zur Hydrierung notwendigen Drucks, ferner kann eine Erhöhung der Hydriergeschwindigkeit (Raum/Zeit Ausbeute) und eine Reduktion der für die Hydrierung notwendigen Menge an Hydrierkatalysator erreicht werden. Allerdings haben Restmengen des im hydrierten Nitrilkautschuk verbleibenden Phosphans oder Diphosphans negative Auswirkungen auf die Vulkanisateigenschaften, insbesondere das Modulniveau und den Compression Set.

In DE 25 39 132 A wird ein Verfahren zur Hydrierung statistischer Acrylnitril/Butadien-Copolymerisate beschrieben. Für die Hydrierung wird die Komplexverbindung eines 1- oder 3-wertigen Rhodium-(I)-halogenids in Kombination mit 5 bis 25 Gew.% Triphenylphosphan verwendet, wobei in den Beispielen jeweils 10 phr Triphenylphosphan eingesetzt werden. In DE 25 39 132 A wird die Menge an Triphenylphosphan nicht variiert. Auch werden auf Basis dieser hydrierten Nitrilkautschuke keine Vulkanisate hergestellt und bzgl. der Eigenschaften charakterisiert. DE 25 39 132 A liefert keine Angaben über die Gehalte an Triphenylphosphan, die nach der Hydrierung im aufgearbeiteten hydrierten Nitrilkautschuk verbleiben. Nicht untersucht wird ferner, ob und wenn ja welchen Einfluss TPP auf die Eigenschaften, insbesondere das Modulniveau und den Compression Set hieraus hergestellter Vulkanisate hat. Es findet sich darüber hinaus keinerlei Anhaltspunkt zur Entfernung des bei der Hydrierung eingesetzten TPP.

In US-A-4,965,323 wird der Compression Set von HNBR basierten Vulkanisaten, die durch peroxidische Vulkanisation oder durch Schwefelvulkanisation erhalten werden, dadurch verbessert, dass der Nitrilkautschuk nach der Polymerisation oder nach der Hydrierung mit einer wässriger Alkalilösung oder der wässrigen Lösung eines Amins in Kontakt gebracht wird. In Beispiel 1 werden Kautschukkrümel, die nach Entfernung des Lösungsmittels erhalten werden, in einem separaten Verfahrensschritt mit wässrigen Sodalösungen unterschiedlicher Konzentration gewaschen. Als Maß für den Alkaligehalt wird der pH-Wert einer wässrigen THF-Lösung herangezogen, die man erhält, indem man 3 g des Kautschuks in 100 ml THF löst und unter Rühren 1 ml Wasser zugibt. Der pH-Wert wird mittels einer Glaselektrode bei 20°C bestimmt. Für die Herstellung von Vulkanisaten des hydrierten Nitrilkautschuks mit niedrigem Compression Set soll der pH-Wert der wässrigen THF-Lösung > 5, bevorzugt > 5,5, besonders bevorzugt > 6 betragen. In US-A-4,965,323 gibt es keinen Hinweis zur Abhängigkeit des Compression Sets von der bei der Hydrierung eingesetzten TPP-Menge oder eine Lehre zur Verbesserung des Compression-Sets durch Entfernung von TPP nach der Hydrierung.

In US-A-4,503,196 wird ein Verfahren zur Hydrierung von Nitrilkautschuk unter Verwendung von Rhodium-Katalysatoren des Typs (H)Rh(L)₃ oder (H)Rh(L)₄ beschrieben. L stellt phosphan- oder arsanhaltige Liganden dar. Das Hydrierverfahren zeichnet sich dadurch aus, dass für die Hydrierung keine Zusätze der Liganden als Co-Katalysatoren erforderlich sind, wobei die Hydrierung mit relativ hohen Katalysatormengen (2,5 bis 40 Gew.%) erfolgt. Für die Isolierung des hydrierten Nitrilkautschuks aus der chlorbenzolischen Lösung wird die hydrierte Lösung abgekühlt und der Kautschuk durch Zugabe von Isopropanol koaguliert. In US-A-4,503,196 werden keine Angaben über die Vulkanisateigenschaften der bei diesem Verfahren resultierenden hydrierten Nitrilkautschuke gemacht. Aus diesem Grund liefert US-A-4,503,196 keine Lehre zur Herstellung von hydriertem Nitrilkautschuk, nach der Vulkanisate mit hohem Modulniveau und niedrigem Compression-Set erhalten werden.

In DE-OS-3 921 264 wird die Herstellung hydrierten Nitrilkautschuks beschrieben, der nach peroxidischer Vernetzung Vulkanisate mit niedrigem Compression Set liefert. Hierfür werden für die Hydrierung Rutheniumkatalysatoren unterschiedlichster chemischer Konstitution eingesetzt, wobei bei der Hydrierung ein Lösungsmittelgemisch aus einem C₃-C₆-Keton und einem sekundären oder tertiären C₃-C₆-Alkohol verwendet wird. Der Anteil des sekundären bzw. tertiären Alkohols im Lösungsmittelgemisch soll 2 bis 60 Gew.% betragen. Gemäß DE-OS-3 921 264 kann es während der Hydrierung oder bei der Abkühlung der hydrierten Lösung zur Bildung von zwei Phasen kommen. Als Folge werden die gewünschten Hydriergrade nicht erzielt und/oder der hydrierte Nitrilkautschuk vergelt während der Hydrierung. Das in DE-OS-3 921 264 beschriebene Verfahren ist nicht breit anwendbar, da die bei der Hydrierung stattfindende Phasentrennung und die Vergelung in unvorhersehbarer Weise von verschiedenen Parametern abhängt. Hierzu gehören der Acrylnitrilgehalt und die Molmasse des Nitrilkautschuk-Feedstocks, die Zusammensetzung des Lösungsmittelgemischs, der Feststoffgehalt der Polymerlösung bei der Hydrierung, der Hydriergrad sowie die Temperatur bei der Hydrierung. Auch bei der Abkühlung der Polymerlösung im Anschluss an die Hydrierung oder bei der Lagerung der Polymerlösung kann es zu einer unvorhergesehen Phasentrennung und zu einer Kontamination der entsprechenden Anlagenteile oder Behälter kommen.

In WO-A-2004/101671 wird gezeigt, dass hydrierter carboxylierter Nitril/Butadien-Kautschuk, der molekulardispers verteiltes TPP enthält, vorteilhaft als Vernetzer für Elastomere, Kunststoffe und als Klebstoffe eingesetzt werden kann. Auf der Basis von WO-A-2004/101671**,** in der explizit auf die Notwendigkeit der Anwesenheit von TPP hingewiesen wird, kann keine Lehre zur Verbesserung des Compression Sets sowie Moduls von Vulkanisaten abgeleitet werden.

In EP-A-1 894 946 wird ein Verfahren zum Metatheseabbau von NBR beschrieben, bei dem die Aktivität des Metathese-Katalysators durch TPP-Zusätze gesteigert wird. Bezogen auf den Metathese-Katalysator werden 0,01 bis 1 Äquivalente Phosphan wie z.B. TPP eingesetzt. Derart hergestellte Nitrilkautschuke mit verringertem Molekulargewicht können laut EP-A-1 894 946 unter Einsatz aus dem Stand der Technik bekannter Methoden hydriert werden. Als Katalysator kann z.B. der Wilkinson Katalysator in Gegenwart von Co-Katalyatoren wie TPP eingesetzt werden. Angaben über die Vulkanisateigenschaften und deren Optimierung, insbesondere bezüglich des Niveaus von Modul und Compression-Set, der bei der Hydrierung erhaltenen hydrierten Nitrilkautschuke finden sich nicht.

Auch in EP-A-1 083 197 werden Maßnahmen zur Reduktion des Compression Sets von Vulkanisaten, die für die Herstellung von Walzenbelägen eingesetzt werden, beschrieben. Das Ziel wird erreicht, indem bei der Herstellung der Kautschukmischungen die Methacrylate mehrwertiger Alkohole z.B. Trimethylolpropantrimethacrylat eingesetzt werden. Auch in EP-A-1 083 197 findet sich kein Hinweis zur Verbesserung des Compression Sets bzw. Moduls durch Eliminierung des durch Triphenylphosphan verursachten schädlichen Einflusses.

In EP-A-1 524 277 wird ein Ultrafiltrationsverfahren zur Entfernung niedermolekularer Bestandteile aus Kautschuken beschrieben. Hierzu werden die Kautschuke in einem organischen Lösungsmittel gelöst und einem Ultrafiltrationsverfahren ausgesetzt. Das Verfahren ist sowohl zur Entfernung von Emulgatorresten aus Nitrilkautschuk als auch zur Entfernung von Katalysatorresten aus hydriertem Nitrilkautschuk geeignet. Nach Beispiel 2 von EP-A-1 524 277 gelingt mit Hilfe dieser Methode eine Reduktion des Phosphorgehalts von hydriertem Nitrilkautschuk von 1300 mg/kg auf 120 mg/kg. In EP-A-1 524 277 werden keine Angaben darüber gemacht, ob durch dieses zudem wirtschaftlich aufwändige Verfahren eine Verbesserung des Modulniveaus und des Compression Sets von Vulkanisaten hydrierter Nitrilkautschuke möglich ist.

In EP-A-0 134 023 wird ein Verfahren zur Hydrierung von NBR mit 0,05 bis 0,6 Gew.%, bezogen auf den Festkautschuk, an Tris-(triphenylphosphan)-rhodium(I)halogenid als Katalysator beschrieben, bei dem höchstens 2 Gew.%, ebenfalls bezogen auf den Festkautschuk, Triphenylphosphan zugesetzt werden. In den Beispielen der Tabelle 3 wird gezeigt, dass eine Erhöhung der Triphenylphosphan Menge auf bis zu 5 Gew. % zu einer Verschlechterung wichtiger Eigenschaften peroxidisch vulkanisierter hydrierter Nitrilkautschuke führt. So nehmen die Modulwerte bei 100%, 200% und 300% Dehnung sowie die Härte bei 23°C ab. Die Bruchdehnung und die Compression-Set-Werte nach einer Lagerung für 70h bei 23°C, für 70h bei 125°C bzw. für 70h bei 150°C nehmen zu. Um den schädlichen Einfluss von Triphenylphosphan zu begrenzen, wird nach der Lehre von EP-A-134 023 die bei der Hydrierung eingesetzten TPP-Menge begrenzt. Unvorteilhafterweise müssen dann bei dieser Hydrierung zwecks Erzielung gleicher Hydrierzeiten höhere Mengen an Katalysator und damit an teurem Rhodiummetall eingesetzt werden. EP-A-0 134 023 gibt keine Lehre zur Entfernung des TPP nach der Hydrierung.

In US-A-5,244,965 wird Nitrilkautschuk unter Verwendung von Rhodiumhydridotetrakis (triphenylphosphan) in Gegenwart erheblicher molarer Überschüsse an TPP hydriert. Aufgrund vermuteter negativer Einflüsse von TPP auf die Eigenschaften des vulkanisierten Kautschuks (Seite 1, Zeile 26-28: "Furthermore, there is some indication that phosphines cause problems with polymer vulcanization") wird TPP nach der Hydrierung von der Kautschuklösung abgetrennt. Hierzu wird TPP unter Zugabe äquimolarer Mengen organischer Halogenverbindungen, die zur Bildung von Triphenylphosphoniumsalzen geeignet sind, insbesondere Methylbromid, Ethylbromid, Benzylchlorid oder Benzylbromid, in einem Zeitraum von 4-8 h bei Temperaturen von 70°C-120°C zu den entsprechenden Phosphoniumsalzen umgesetzt. Bei Abkühlung der Polymerlösung auf 20°C bis 40°C fallen die Phosphoniumsalze aus und werden anschließend mechanisch durch Filtration oder durch Sedimentation von der Polymerlösung abgetrennt. Es wird gezeigt, dass sowohl im erfindungsgemäß hergestellten hydrierten Nitrilkautschuk als auch im entsprechenden Vergleichsversuch, der ohne Zusätze von organischen Halogeniden hergestellt wurde, Triphenylphosphanoxid enthalten ist. Das in US-A-5,244,965 beschriebene Verfahren ist aus wirtschaftlicher Sicht unvorteilhaft, da für die Umsetzung des TPP zum Triphenylphosphoniumsalz lange Kesselbelegzeiten erforderlich sind. Ferner ist die Abtrennung des Phosphoniumsalzes aus der hochviskosen Polymerlösung durch Sedimentation bzw. Filtration verfahrenstechnisch aufwändig. Zum anderen ist es nicht vorteilhaft, dass der Ansatz abgekühlt und ferner verdünnt werden muss, um das gebildete Triphenylphosphoniumsalz abzuscheiden. Triphenylphosphoniumhalogenid kristallisiert zudem in unreproduzierbarer Weise. Oft fällt es in sehr feinteiliger Form an, was die Abtrennung aus der Lösung erschwert und eine unvollständige Abtrennung aus der Polymerlösung nach sich zieht, so dass zwangsläufig größere Restmengen der Triphenylphosphoniumhalogenide im hydrierten Nitrilkautschuk verbleiben. Dies wird in Beispiel 2, Experiment 1) und 2) (Tabelle 1) der US-A-5,244,965 deutlich. Nach Beispiel 2 werden für die Experimente 1) und 2) jeweils 5,5 g (20,87 mmol) TPP auf 100 g Kautschuk eingesetzt, wobei der in Beispiel 2 ebenfalls beschriebene TPP-Nachsatz nicht quantitativ nachvollziehbar ist und bei einer quantitativen Betrachtung nicht berücksichtigt werden kann. In Beispiel 2, Experiment 1) werden 20,87 mmol TPP mit 4 ml Methylbromid umgesetzt. Bei einer Dichte von 3,97 g/cm³ entspricht dies 15,88 g bzw. 167,3 mmol Methylbromid (Molmasse von Methylbromid: 94,94 g/mol); d. h. in Experiment 1 wird ein gut 8-facher molarer Überschuss von Methylbromid bezogen auf TPP eingesetzt. Bei quantitativer Umsetzung von TPP zu Triphenylmethylphosphoniumbromid (Molmasse: 356,8 g/mol) resultiert eine theoretische Ausbeute von 7,5 g Triphenylmethylphosphoniumbromid. Da nach Experiment 1) nur 3,2 g Triphenylmethylphosphoniumbromid isoliert werden, entspricht dies einer Ausbeute von 43%. Bei Berücksichtigung des TPP-Nachsatzes, der mit dem Überschuss an Methylbromid reagiert, liegt die Gesamtausbeute an isoliertem Triphenyl-phosphoniumbromid nach Beispiel 2, Experiment 1) erheblich unter 40%. Nach Beispiel 2, Experiment 2) werden bezogen auf 5,5 g (20,87 mmol) TPP 3 ml Ethylbromid (Dichte: 1,46 g/cm³) entsprechend 4,38 g (40,2 mmol) eingesetzt. Ebenfalls ohne Berücksichtigung eines nicht quantifizierbaren TPP-Nachsatzes werden aus 5,5 g TPP theoretisch 7,8 g Triphenylethylphosphoniumbromid (Molmasse: 371,3 g/mol) erhalten. Die in Beispiel 2, Experiment 2) beschriebene Ausbeute von 3,7 g entspricht somit höchstens 47,4 % der theoretischen Ausbeute. Aufgrund der schlechten Abtrennungseffizienz des Triphenylphosphoniumbromids in den beiden Experimenten des Beispiels 2 verbleiben bei der in US-A-5,244,965 beschriebenen Methode zur Abtrennung an TPP erhebliche Mengen an Triphenylphosphoniumhalogeniden im hydrierten Nitrilkautschuk, die zu einer Verschlechterung der Vulkanisateigenschaften, insbesondere der Korrosivität von hieraus hergestellten Dichtungen führen. In US-A5,244,965 wird ein positiver Einfluss der TPP-Abtrennung auf die Vulkanisateigenschaften nicht nachgewiesen.

In US-A-5,244,965**,** Beispiel 3, Tabelle 2 werden außerdem Angaben über Gehalte an Triphenylphosphan und Triphenylphosphanoxid ("TPP=O") im hydrierten Nitrilkautschuk gemacht, die in nachfolgender Tabelle zusammengefasst sind:

| **Experiment** | **TPP-Einsatz bei Hydrierung [Gew.%]** | **Reagenz** | **TPP im isolierten HNBR [Gew.%]** | **TPP=O im isolierten HNBR [Gew.%]** |
|---|---|---|---|---|
| 3-1 | 5,5 | C₂H₅Br | 0,75 | 1,41 |
| 3-2 | 5,5 | Benzylbromid | nicht nachgewiesen | 0,94 |
| 3-3 | 5,5 | - | 1,33 | 2,17 |

In US-A-5,244,965 bleibt unklar, ob die Abtrennung bzw. Abtrennbarkeit der Triphenylphosphoniumsalze in einem Zusammenhang mit der Bildung von Triphenylphosphanoxid steht, bzw. wie es zur Bildung von Triphenylphosphanoxid kommt und wie diese beeinflusst werden kann. Des Weiteren bleibt ungeklärt, welchen Einfluss TPP, Triphenylphosphanoxid, Phosphoniumhalogenide sowie Restmengen der für die Abtrennung eingesetzten organischen Halogenide auf die Vulkanisateigenschaften hydrierter Nitrilkautschuke haben. Insgesamt ist der Lehre von US-A-5,244,965 nicht zu entnehmen, wie Vulkanisate des hydrierten Nitrilkautschuks mit hohen Modulwerten und mit niedrigem Compression Set herzustellen sind.

CN 1 443 784 A betrifft ein Verfahren zur Entfernung von Rhodiumkatalysatoren aus einem Kautschuklatex eines hydrierten Nitrilkautschuks. Dabei wird der Kautschuklatex mit einem spezielle funktionelle Gruppen aufweisenden makroporösen Harz behandelt, um Katalysatorreste zu entfernen. Bei den speziellen funktionellen Gruppen handelt es sich um mindestens zwei Gruppen ausgewählt aus Mercaptogruppen, Thioharnstoffgruppen und Isothioharnstoffgruppen. Trotz umfangreicher Literatur zur Herstellung hydrierter Nitrilkautschuke sind bis heute keine hydrierten Nitrilkautschuke verfügbar, die zum einen Vulkanisate mit einem guten Modulniveau und guten Compression Set Werten liefern und trotzdem gleichzeitig über Hydrierverfahren mit kurzen Reaktionszeiten unter Einsatz von Cokatalysatoren auf Phosphan- oder Diphosphanbasis mit niedrigen Katalysatormengen hergestellt werden können. Bisher sind keine hydrierten Nitrilkautschuke bekannt, bei denen die negativen Auswirkungen der in der Hydrierung eingesetzten Phosphan- bzw. Diphosphan-Co-Katalysatoren auf die jeweiligen Vulkanisateigenschaften insbesondere auf das Modulniveau und die Compression-Set-Werte nach Lagerung bei hohen Temperaturen vermieden werden können.

### Aufgabe der vorliegenden Erfindung:

Die **Aufgabe der vorliegenden Erfindung** bestand somit darin, hydrierte Nitrilkautschuke bereitzustellen, deren Vulkanisate sehr gute Moduli und Compression-Set-Werte, letztere insbesondere nach Lagerung bei hohen Temperaturen, aufweisen. Die **Aufgabe der vorliegenden Erfindung** bestand ferner darin, diese hydrierten Nitrilkautschuke durch ein ökonomisches Herstellverfahren bereitzustellen, bei dem Phosphane oder Diphosphane als Cokatalysator bei der Hydrierung eingesetzt, anschließend aber in geeigneter Weise unschädlich gemacht werden können, ohne dass größere Mengen an Halogeniden abgetrennt werden müssen bzw. in den hydrierten Nitrilkautschuk eingeschleppt werden.

### Lösung:

**Überraschenderweise wurde gefunden,** dass die verbesserten Eigenschaften von Vulkanisaten auf Basis hydrierter Nitrilkautschuke in Form sehr guter Modul-Werte und verbesserter Compression Set-Werte, insbesondere nach Lagerung bei höherer Temperatur, erreicht werden können, wenn der hydrierte Nitrilkautschuk keinen bzw. einen reduzierten Phosphan- oder Diphosphangehalt sowie einen bestimmten Phosphansulfid- bzw. Diphosphansulfidgehalt besitzt. Diese hydrierten Nitrilkautschuke können auf ökonomische Weise erhalten werden, indem man das bei der Hydrierung eingesetzte Phosphan bzw. Diphosphan nach der Hydrierung durch Umsetzung mit besonderen Schwefeldonoren zu Phosphansulfiden bzw. Diphosphansulfiden umsetzt. Überraschend ist es, dass das Phosphansulfid bzw. Diphosphansulfid keinen negativen Einfluss auf die Vulkanisateigenschaften hat, sondern gerade Vulkanisate mit sehr guten Modul- und Compression Set-Werten liefert.

### Gegenstand der vorliegenden Erfindung sind hydrierte Nitrilkautschuke enthaltend

(i) einen Gehalt an **Phosphanen, Diphosphanen** oder Mischungen davon, bevorzugt Triphenylphosphan, im Bereich von 0 bis 1,0 Gew.%, bevorzugt von 0 bis 0,8 Gew.%, besonders bevorzugt von 0 bis 0,6 Gew.%, ganz besonders bevorzugt von 0 bis 0,5 Gew.% und insbesondere von 0 bis 0,4 Gew.%, bezogen auf den hydrierten Nitrilkautschuk, und
(ii) einen Gehalt an **Phosphansulfiden, Diphosphansulfiden** oder Mischungen davon, bevorzugt Triphenylphosphansulfid, im Bereich von 0,075 bis 10 Gew.%, bevorzugt von 0,1 bis 9 Gew.%, besonders bevorzugt von 0,2 bis 8 Gew.%, ganz besonders bevorzugt 0,3 bis 6 Gew.% und insbesondere von 0,4 bis 5 Gew.%, bezogen auf den hydrierten Nitrilkautschuk.

**Gegenstand der vorliegenden Erfindung** sind ferner **vulkanisierbare Mischungen** dieser hydrierten Nitrilkautschuke sowie **Verfahren zur Herstellung darauf basierender Vulkanisate** sowie die dabei erhältlichen **Vulkanisate,** insbesondere als Formkörper.

**Gegenstand der vorliegenden Erfindung** ist ferner ein **Verfahren zur Herstellung der erfindungsgemäßen hydrierten Nitrilkautschuke** enthaltend
(i) einen Gehalt an **Phosphanen, Diphosphanen** oder Mischungen davon, bevorzugt Triphenylphosphan, im Bereich von 0 bis 1,0 Gew.%, bevorzugt von 0 bis 0,8 Gew.%, besonders bevorzugt von 0 bis 0,6 Gew.%, ganz besonders bevorzugt von 0 bis 0,5 Gew.% und insbesondere von 0 bis 0,4 Gew.%, bezogen auf den hydrierten Nitrilkautschuk, und
(ii) einen Gehalt an **Phosphansulfiden, Diphosphansulfiden** oder Mischungen davon, bevorzugt Triphenylphosphansulfid, im Bereich von 0,075 bis 10 Gew.%, bevorzugt von 0,1 bis 9 Gew.%, besonders bevorzugt von 0,2 bis 8 Gew.%, ganz besonders bevorzugt 0,3 bis 6 Gew.% und insbesondere von 0,4 bis 5 Gew.%, bezogen auf den hydrierten Nitrilkautschuk,
indem man einen hydrierten Nitrilkautschuk, der einen Gehalt an Phosphanen, Diphosphanen oder Mischungen davon in einem Bereich von 0,15-5 Gew.%, bevorzugt im Bereich von 0,25-4,75 Gew.%, besonders bevorzugt im Bereich von 0,3-4,5 Gew.%, ganz besonders bevorzugt im Bereich von 0,4-4,25 Gew.% und insbesondere im Bereich von 0,5-4 Gew.%, bezogen auf den hydrierten Nitrilkautschuk besitzt, mit **mindestens einem Schwefeldonor,** der mindestens zwei direkt kovalent miteinander verbundene Schwefelatome aufweist, umsetzt.

Soweit im Rahmen dieser Anmeldung der Begriff "substituiert" verwendet wird, so bedeutet dies, dass ein Wasserstoff-Atom an einem angegebenen Rest oder Atom durch eine der jeweils angegebenen Gruppen ersetzt ist, mit der Maßgabe, dass die Wertigkeit des angegebenen Atoms nicht überschritten wird und die Substitution zu einer stabilen Verbindung führt.

Aufgrund der Vielzahl der verwendeten chemischen Formeln sind gleich benannte bzw. abgekürzte Reste in verschiedenen Formeln enthalten, besitzen jedoch für die jeweilige Formel nur die allgemeinen, bevorzugten, besonders bevorzugten bzw. insbesondere bevorzugten Bedeutungen, die im Zusammenhang mit dieser Formel jeweils genannt sind. Sofern vom vorgenannten Grundsatz Ausnahmen gelten sollen, ist dies explizit erwähnt. Abgesehen von dieser Thematik gleich abgekürzter Reste in verschiedenen Formeln können im Rahmen dieser Anmeldung und Erfindung alle genannten allgemeinen oder in Vorzugsbereichen genannten Definitionen von Parametern, Definitionen oder Erläuterungen untereinander, also auch zwischen den jeweiligen Bereichen und Vorzugsbereichen in beliebiger Weise kombiniert werden und gelten in diesem Umfang als offenbart.

### Erfindungsgemäßer hydrierter Nitrilkautschuk:

Der erfindungsgemäße hydrierte Nitrilkautschuk besitzt
(i) einen Gehalt an **Phosphanen, Diphosphanen** oder Mischungen davon, bevorzugt Triphenylphosphan, im Bereich von 0 bis 1,0 Gew.%, bevorzugt von 0 bis 0,8 Gew.%, besonders bevorzugt von 0 bis 0,6 Gew.%, ganz besonders bevorzugt von 0 bis 0,5 Gew.% und insbesondere von 0 bis 0,4 Gew.%, bezogen auf den hydrierten Nitrilkautschuk, und
(ii) einen Gehalt an **Phosphansulfiden, Diphosphansulfiden** oder Mischungen davon, bevorzugt Triphenylphosphansulfid, im Bereich von 0,075 bis 10 Gew.%, bevorzugt von 0,1 bis 9 Gew.%, besonders bevorzugt von 0,2 bis 8 Gew.%, ganz besonders bevorzugt 0,3 bis 6 Gew.% und insbesondere von 0,4 bis 5 Gew.%, bezogen auf den hydrierten Nitrilkautschuk.

Der erfindungsgemäße hydrierte Nitrilkautschuk besitzt typischerweise einen hohen Hydriergrad, üblicherweise von 80 bis 100%, bevorzugt von 90 bis 100%, besonders bevorzugt von 92 bis 100%, und ganz besonders bevorzugt von 94 bis 100%. Alternativ bevorzugt handelt es sich um einen vollhydrierten Nitrilkautschuk, der sich durch einen Hydriergrad von mindestens 99,1% auszeichnet.

Die Bestimmung des Gehalts der Phosphan/Diphosphan Komponente (i) bzw. der Phosphansulfid/Diphosphansulfid Komponente (ii) erfolgt gaschromatographisch entsprechend der in den Beispielen beschriebenen Methode für die Bestimmung des Triphenylphosphan-("TPP") und Triphenylphosphansulfid- ("TPPS") Gehalts.

Die Phosphan-Komponente (i) besitzt üblicherweise die allgemeine Formel (1-a), 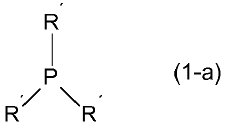 wobei
- R': gleich oder verschieden sind und Alkyl, Alkenyl, Alkadienyl, Alkoxy, Aryl, Heteroaryl, Cycloalkyl, Cycloalkenyl, Cycloalkadienyl, Halogen oder Trimethylsilyl bedeuten,
und die Diphosphan-Komponente (i) besitzt üblicherweise die allgemeine Formel (1-b), 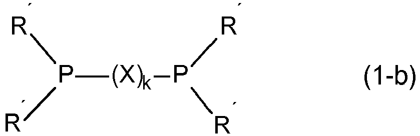 worin
- R': gleich oder verschieden sind und die gleichen Bedeutungen besitzen wie in der allgemeinen Formel (1-a),
- k: 0 oder 1 ist und
- X: für eine geradkettige oder verzweigte Alkandiyl-, Alkendiyl- oder Alkindiylgruppe steht.

Die Reste R' können dabei sowohl in Formel (1-a) als auch (1-b) unsubstituiert, einfach oder mehrfach substituiert sein.

Derartige Phosphane oder Diphosphane der allgemeinen Formeln (1-a) und (1-b) sind nach dem Fachmann bekannten Methoden herstellbar oder aber käuflich erhältlich.

Unter **Alkyl-Resten** in den Resten R' der Phosphane bzw. Diphosphane der allgemeinen Formeln (1-a) und (1-b) versteht man üblicherweise geradkettige oder verzweigte C₁-C₃₀-Alkylreste, bevorzugt C₁-C₂₄-Alkylreste, besonders bevorzugt C₁-C₁₈-Alkylreste. C₁-C₁₈-Alkyl umfasst beispielsweise Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, 1,1-Dimethylpropyl, 1,2-Dimethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, n-Heptyl, n-Octyl, n-Nonyl, n-Decyl, n-Undexyl, n-Dodecyl, n-Tridecyl, n-Tetradecyl, n-Hexadecyl und n-Octadecyl.

Unter **Alkenyl-Resten** in den Resten R' der Phosphane bzw. Diphosphane der allgemeinen Formeln (1-a) und (1-b) versteht man üblicherweise C₂-C₃₀-Alkenyl-Reste, bevorzugt C₂-C₂₀-Alkenyl-Reste. Besonders bevorzugt handelt es sich bei einem Alkenylrest um einen Vinylrest oder einen Allylrest.

Unter **Alkadienyl-Resten** in den Resten R' der Phosphane bzw. Diphosphane der allgemeinen Formeln (1-a) und (1-b) versteht man üblicherweise C₄-C₃₀-Alkadienyl-Reste, bevorzugt C₄-C₂₀-Alkadienyl-Reste. Besonders bevorzugt handelt es sich bei einem Alkadienylrest um Butadienyl oder Pentadienyl.

Unter **Alkoxy-Resten** in den Resten R' der Phosphane bzw. Diphosphane der allgemeinen Formeln (1-a) und (1-b) versteht man üblicherweise C₁-C₂₀-Alkoxy-Reste, bevorzugt C₁-C₁₀-Alkoxy-Reste, besonders bevorzugt Methoxy, Ethoxy, n-Propoxy, iso-Propoxy, n-Butoxy, sec.-Butoxy, tert.-Butoxy, n-Pentoxy und n-Hexoxy.

Unter **Aryl-Resten** in den Resten R' der Phosphane bzw. Diphosphane der allgemeinen Formeln (1-a) und (1-b) versteht man üblicherweis e C₅-C₂₄-Arylreste, bevorzugt C₆-C₁₄-Arylreste, besonders bevorzugt C₆-C₁₂-Arylreste. Beispiele für C₅-C₂₄-Aryl sind Phenyl, o-, p-, m-Tolyl, Naphthyl, Phenanthrenyl, Anthracenyl und Fluorenyl.

**Heteroaryl-Reste** in den Resten R*"* der Phosphane bzw. Diphosphane der allgemeinen Formeln (1-a) und (1-b) besitzen die gleiche Bedeutung wie zuvor für Aryl-Reste angegeben, wobei jedoch ein- oder mehrere der Gerüstkohlenstoff-Atome durch ein Heteroatom, ausgewählt aus der Gruppe Stickstoff, Schwefel und Sauerstoff, ersetzt sind. Beispiele für solche Heteroaryl-Reste sind Pyridinyl, Oxazolyl, Benzofuranyl, Dibenzofuranyl und Chinolinyl.

Alle vorgenannten **Alkyl, Alkenyl, Alkadienyl, und Alkoxy-Reste** können unsubstituiert, ein- oder mehrfach substituiert sein, beispielsweise durch C₅-C₂₄-Aryl-Reste, bevorzugt Phenyl (bei Alkylresten resultiert hierbei z.B. Arylalkyl, bevorzugt ein Phenylalkyl-Rest), Halogen, bevorzugt Fluor, Chlor oder Brom, CN, OH, NH₂ oder NR"₂-Reste, wobei R" wiederum C₁-C₃₀-Alkyl oder C₅-C₂₄-Aryl bedeutet.

Sowohl die **Arylreste als auch die Heteroarylreste** sind entweder unsubstituiert, ein- oder mehrfach substituiert, z.B. durch geradkettiges oder verzweigtes C₁-C₃₀-Alkyl (es resultieren sogenannte Alkylaryl-Reste), Halogen, bevorzugt Fluor, Chlor oder Brom, Sulfonat (SO₃Na), geradkettiges oder verweigtes C₁-C₃₀-Alkoxy, bevorzugt Methoxy oder Ethoxy, Hydroxy, NH₂ oder N(R")₂-Reste, wobei R" wiederum geradkettiges oder verzweigtes C₁-C₃₀-Alkyl oder C₅-C₂₄-Aryl bedeutet, oder durch weitere C₅-C₂₄-Aryl- oder -Heteroarylreste, womit Bisarylreste, bevorzugt Biphenyl oder Binaphthyl, Heteroaryl-Aryl-Reste, Aryl-heteroaryl-Reste oder Bisheteroarylreste resultieren. Auch diese C₅-C₂₄-Aryl- oder -Heteroaryl-Substituenten sind erneut wiederum entweder unsubstituiert oder ein- oder mehrfach durch alle vorgenannten Substituenten substituiert.

Unter **Cycloalkyl-Resten** in den Resten R' der Phosphane bzw. Diphosphane der allgemeinen Formeln (1-a) und (1-b) versteht man üblicherweise einen C₃-C₂₀-Cycloalkylrest, bevorzugt einen C₃-C₈-Cycloalkylrest, besonders bevorzugt Cyclopentyl und Cyclohexyl.

**Cycloalkenyl-Reste** in den Resten R' der Phosphane bzw. Diphosphane der allgemeinen Formeln (1-a) und (1-b) sind gleich oder verschieden, weisen im Ringgerüst eine C=C Doppelbindung auf und bedeuten üblicherweise C₅-C₈ Cycloalkenyl, bevorzugt Cyclopentenyl und Cyclohexenyl.

**Cycloalkadienyl-Reste** in den Resten R der Phosphane bzw. Diphosphane der allgemeinen Formeln (1-a) und (1-b) sind gleich oder verschieden, weisen im Ringgerüst zwei C=C Doppelbindungen auf und stehen üblicherweise für C₅-C₈ Cycloalkadienyl, bevorzugt für Cyclopentadienyl oder Cyclohexadienyl.

Auch die vorgenannten **Cycloalkyl, Cycloalkenyl und Cycloalkadienyl-Reste** sind entweder unsubstituiert, ein- oder mehrfach substituiert, z.B. durch geradkettiges oder verzweigtes C₁-C₃₀-Alkyl (dann resultieren sogenannte Alkylaryl-Reste), Halogen, bevorzugt Fluor, Chlor oder Brom, Sulfonat (SO₃Na), geradkettiges oder verzweigtes C₁-C₃₀-Alkoxy, bevorzugt Methoxy oder Ethoxy, Hydroxy, NH₂ oder NR"₂-Reste, wobei R" wiederum geradkettiges oder verzweigtes C₁-C₃₀-Alkyl oder C₅-C₂₄-Aryl bedeutet, oder durch C₅-C₂₄-Aryl- oder Heteroarylreste, die wiederum entweder unsubstituiert oder ein.- oder mehrfach durch alle vorgenannten Substituenten substituiert sind.

Die **Halogen Reste** in den Resten R' der Phosphane bzw. Diphosphane der allgemeinen Formeln (1-a) und (1-b) sind gleich oder verschieden und bedeuten Fluor, Chlor oder Brom.

Besonders bevorzugt sind als Phosphane der allgemeinen Formel (1-a) Trialkyl-, Tricycloalkyl-, Triaryl-, Trialkaryl-, Triaralkyl-, Diaryl-monoalkyl-, Diaryl-monocycloalkyl-, Dialkyl-monoaryl-, Dialkyl-monocycloalkyl- oder Dicycloalkyl-monoaryl-Phosphane, wobei alle vorgenannten Reste wiederum entweder unsubstituiert, ein- oder mehrfach durch die zuvor genannten Substituenten substituiert sind.

Inbesondere bevorzugt sind Phosphane der allgemeinen Formel (1-a), bei denen die Reste R' gleich oder verschieden sind und für Phenyl, Cyclohexyl, Cyclohexenyl, Cyclopentyl, Cyclopentadienyl, Phenylsulfonat oder Cyclohexylsulfonat stehen.

Ganz besonders bevorzugt werden als Phosphane der allgemeinen Formel (1-a) PPh₃, P(p-Tol)₃, P(o-Tol)₃, PPh(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na)₃, P(iso-Pr)₃, P(CHCH₃(CH₂CH₃))₃, P(cyclopentyl)₃, P(cyclohexyl)₃, P(neopentyl)₃, P(C₆H₅CH₂)(C₆H₅)₂, P(NCCH₂CH₂)₂(C₆H₅), P[(CH₃)₃C]₂Cl, P[(CH₃)₃C]₂(CH₃), P(tert.-Bu)₂(biph), P(C₆H₁₁)₂Cl, P(CH₃)(OCH₂CH₃)₂, P(CH₂=CHCH₂)₃, P(C₄H₃O)₃, P(CH₂OH)₃, P(m-CH₃OC₆H₄)₃, P(C₆F₅)₃, P[(CH₃)₃Si]₃, P[(CH₃O)₃C₆H₂]₃ eingesetzt, wobei Ph für Phenyl, Tol für Tolyl, biph für Biphenyl, Bu für Butyl und Pr für Propyl stehen. Insbesondere bevorzugt ist Triphenylphosphan. In den Diphosphanen der allgemeinen Formel (1-b) steht k für 0 oder 1, bevorzugt für 1.

X steht in der allgemeinen Formel (1-b) für eine geradkettige oder verzweigte Alkandiyl-, Alkendiyl- oder Alkindiylgruppe, bevorzugt für eine geradkettige oder verzweigte C₁-C₂₀-Alkandiyl-, C₂-C₂₀-Alkendiyl- oder C₂-C₂₀-Alkindiylgruppe, besonders bevorzugt für eine geradkettige oder verzweigte C₁-C₈-Alkandiyl-, C₂-C₆-Alkendiyl- oder C₂-C₆-Alkindiylgruppe. **C₁-C₈-Alkandiyl** steht für einen geradkettigen oder verzweigten Alkandiylrest mit 1 bis 8 Kohlenstoffatomen. Besonders bevorzugt ist ein geradkettiger oder verzweigter Alkandiylrest mit 1 bis 6 Kohlenstoffatomen, insbesondere mit 2 bis 4 Kohlenstoffatomen. Bevorzugt sind Methylen, Ethylen, Propylen, Propan-1,2-diyl, Propan-2,2-diyl, Butan-1,3-diyl, Butan-2,4-diyl, Pentan-2,4-diyl und 2-Methyl-pentan-2,4-diyl.

**C₂-C₆-Alkendiyl** steht für einen geradkettigen oder verzweigten Alkendiylrest mit 2 bis 6 Kohlenstoffatomen. Bevorzugt ist ein geradkettiger oder verzweigter Alkendiylrest mit 2 bis 4, besonders bevorzugt 2 bis 3 Kohlenstoffatomen. Vorzugsweise seien genannt: Vinylen, Allylen, Prop-1-en-1,2-diyl und But-2-en-1,4-diyl.

**C₂-C₆-Alkindiyl** steht für einen geradkettigen oder verzweigten Alkindiylrest mit 2 bis 6 Kohlenstoffatomen. Bevorzugt ist ein geradkettiger oder verzweigter Alkindiylrest mit 2 bis 4, besonders bevorzugt mit 2 bis 3 Kohlenstoffatomen. Vorzugsweise seien genannt: Ethindiyl und Propindiyl.

Besonders bevorzugte Diphosphane der allgemeinen Formel (1-b) sind Cl₂PCH₂CH₂PCl₂, (C₆H₁₁)₂PCH₂P(C₆H₁₁), (CH₃)₂PCH₂CH₂P(CH₃)₂, (C₆H₅)₂PCCP(C₆H₅)₂, (C₆H₅)₂PCH=CHP(C₆H₅)₂, (C₆F₅)₂P(CH₂)₂P(C₆F₅)₂, (C₆H₅)₂P(CH₂)₂P(C₆H₅)₂, (C₆H₅)₂P(CH₂)₃P(C₆H₅)₂, (C₆H₅)₂P(CH₂)₄P(C₆H₅)₂, (C₆H₅)₂P(CH₂)₅P(C₆H₅)₂, (C₆H₅)₂PCH(CH₃)CH(CH₃)P(C₆H₅)₂ und (C₆H₅)₂PCH(CH₃)CH₂P(C₆H₅)₂.

Besondere, ebenfalls erfindungsgemäß einsetzbare Diphosphane sind ferner publiziert in **Chem. Eur. J. 2008, 14, 9491-9494.** Zu nennen sind beispielsweise:

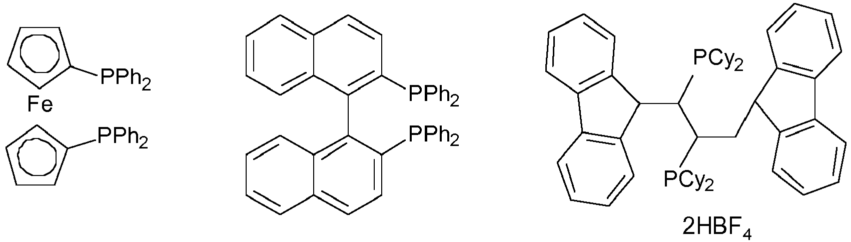

Bei der Phosphansulfid- bzw. Diphosphansulfid-Komponente (ii) im erfindungsgemäßen hydrierten Nitrilkautschuk handelt es sich typischerweise um Sulfide der vorstehend definierten Phosphane bzw. Diphosphane.

Insbesondere handelt es sich bei Komponente (i) um ein Phosphan, insbesondere bevorzugt um Triphenylphosphan und entsprechend bei Komponente (ii) gleichzeitig um ein Phosphansulfid, insbesondere bevorzugt um Triphenylphosphansulfid.

### Wiederholungseinheiten des hydrierten Nitrilkautschuks:

Die erfindungsgemäßen hydrierten Nitrilkautschuke weisen Wiederholungseinheiten mindestens eines α,β-ungesättigten Nitril-Monomeren und mindestens eines konjugierten Dien-Monomeren auf. Sie können darüber hinaus noch Wiederholungseinheiten von einem oder mehreren weiteren copolymerisierbaren Monomeren aufweisen.

Der erfindungsgemäße hydrierte Nitrilkautschuk umfasst ganz oder teilweise hydrierte Nitrilkautschuke. Der Hydriergrad kann in einem Bereich von mindestens 50% und bis zu 100 % oder von 75 % bis 100 % liegen. Typischerweise besitzt der erfindungsgemäße hydrierte Nitrilkautschuk einen hohen Hydriergrad, üblicherweise von 80 bis 100%, bevorzugt von 90 bis 100%, besonders bevorzugt zu 92 bis 100% und insbesondere 94% bis 100%. Von sogenannten "vollhydrierten Typen", die ebenfalls von der vorliegenden Erfindung als bevorzugte Ausführungsform erfasst sind, wird in der Fachwelt bereits gesprochen, wenn der C=C Restdoppelbindungsgehalt (auch als "RDB" abgekürzt) maximal bei ca. 0,9 % liegt, d.h. der Hydriergrad größer gleich 99.1% beträgt.

Die Wiederholungseinheiten des mindestens einen **konjugierten Diens** gehen bevorzugt auf (C₄-C₆)-konjugierte Diene oder Mischungen davon zurück. Besonders bevorzugt sind 1,2-Butadien, 1,3-Butadien, Isopren, 2,3-Dimethylbutadien, Piperylen und Gemische daraus. Insbesondere bevorzugt sind 1,3-Butadien, Isopren und Gemische daraus. Ganz besonders bevorzugt ist 1,3-Butadien.

Als **α,β-ungesättigtes Nitril** kann jedes bekannte α,β-ungesättigte Nitril zur Herstellung der erfindungsgemäßen Nitrilkautschuke eingesetzt werden, bevorzugt sind (C₃-C₅)-α,β-ungesättigte Nitrile wie Acrylnitril, Methacrylnitril, Ethacrylnitril oder Mischungen davon. Besonders bevorzugt ist Acrylnitril.

Soweit ein oder mehrere weitere copolymerisierbare Monomere eingesetzt werden, können dies z.B. **aromatische Vinylmonomere,** bevorzugt Styrol, α-Methylstyrol und Vinylpyridin, **fluorhaltige Vinylmonomere,** bevorzugt Fluorethylvinylether, Fluorpropylvinylether, o-Fluormethylstyrol, Vinylpentafluorbenzoat, Difluoroethylen und Tetrafluoroethylen, oder auch **copolymerisierbare Antiageing Monomere,** bevorzugt N-(4-anilinophenyl) acrylamid, N-(4-anilinophenyl) methacrylamid, N-(4-anilinphenyl) cinnamid, N-(4-anilinophenyl) crotonamid, N-phenyl-4-(3-vinylbenzyloxy) anilin und N-phenyl-4-(4-vinylbenzyloxy) anilin sein sowie **nichtkonjugierte Diene,** wie 4-Cyanocyclohexen und 4-Vinylcyclohexen, oder auch **Alkine,** wie 1- oder 2-Butin.

Weiterhin können als copolymerisierbare Termonomere Hydroxylgruppen-haltige Monomere eingesetzt werden, vorzugsweise Hydroxyalkyl(meth)acrylate. Es können aber auch entsprechend substituierte (Meth)acrylamide eingesetzt werden.

Beispiele geeigneter Hydroxyalkylacrylatmonomere sind 2-Hydroxyethyl(meth)acrylat, 2-Hydroxy-propyl(meth)acrylat, 3 -Hydroxypropyl(meth)acrylat, 3 -Chlor-2-hydroxypropyl(meth)-acrylat, 3-Phenoxy-2-hydroxypropyl(meth)acrylat, Glycerinmono(meth)acrylat, Hydroxybutyl-(meth)acrylat, 3-Chlor-2-hydroxypropyl(meth)acrylat, Hydroxyhexyl(meth)acrylat, Hydroxyoctyl-(meth)acrylat, Hydroxymethyl(meth)acrylamid, 2-Hydroxypropyl(meth)acrylat, 3-Hydroxypropyl-(meth)acrylamid, Di-(Ethylenglykol)itaconat, Di-(Propylenglykol)itaconat, Bis(2-Hydroxypropyl)-itaconat, Bis(2-Hydroxyethyl)itaconat, Bis(2-Hydroxyethyl)fumarat, Bis(2-Hydroxyethyl)maleat und Hydroxy-methylvinylketon.

Weiterhin können als copolymerisierbare Termonomere Epoxygruppen-haltige Monomere eingesetzt werden, vorzugsweise Glycidyl(meth)acrylate.

Beispiele Epoxygruppen-haltiger Monomere sind Diglycidylitaconat, Glycidyl-p-styrencaboxylat, 2-Ethylglycidylacrylat, 2-Ethylglycidylmethacrylat, 2-(n-Propyl)glycidylacrylat, 2-(n-Propyl) glycidylmethacrylat, 2-(n-Butyl)glycidylacrylat, 2-(n-Butyl)glycidylmethacrylat, Glycidylmethylacrylat, Glycidylmethylmethacrylat, Glycidylacrylat, (3',4'-Epoxyheptyl)-2-ethylacrylat, (3',4'-Epoxyheptyl)-2-ethyl-methacrylat, (6',7'-Epoxyheptyl)acrylat, (6',7'-Epoxyheptyl)methacrylat, Allylglycidylether, Allyl-3,4-epoxyheptylether, 6,7-Epoxyheptylallylether, Vinylglycidylether, Vinyl-3,4-epoxyheptylether, 3,4-Epoxyheptylvinylether, 6,7-Epoxyheptylvinylether, o-Vinylbenzyl glycidylether, m-Vinylbenzylglycidylether, p-Vinylbenzylglycidylether und 3-Vinylcyclohexenoxid.

Alternativ können als weitere copolymerisierbare Monomere carboxygruppenhaltige, copolymerisierbare Termonomere eingesetzt werden, beispielsweise α,β-ungesättigte Monocarbonsäuren, deren Ester, α,β-ungesättigte Dicarbonsäuren, deren Mono- oder -Diester oder deren entsprechenden Anhydride oder Amide.

Als **α,β-ungesättigte Monocarbonsäuren** können bevorzugt Acrylsäure und Methacrylsäure eingesetzt werden.

Einsetzbar sind auch **Ester der α,β-ungesättigten Monocarbonsäuren,** bevorzugt deren Alkylester und Alkoxyalkylester. Bevorzugt sind die Alkylester, insbesondere C₁-C₁₈ Alkylester der α,β-ungesättigten Monocarbonsäuren, Besonders bevorzugt sind Alkylester, insbesondere C₁-C₁₈ Alkylester der Acrylsäure oder der Methacrylsäure, insbesondere Methylacrylat, Ethylacrylat, Propylacrylat, n-Butylacrylat, tert.-Butylacrylat, 2-Ethylhexylacrylat, n-Dodecylacrylat, Methylmethacrylat, Ethylmethacrylat, Butylmethacrylat und 2-Ethylhexyl-methacrylat. Bevorzugt sind auch Alkoxyalkylester der α,β-ungesättigten Monocarbonsäuren, besonders bevorzugt Alkoxyalkylester der Acrylsäure oder der Methacrylsäure, insbesondere C₂-C₁₂-Alkoxyalkylester der Acrylsäure oder der Methacrylsäure, ganz besonders bevorzugt Methoxymethylacrylat, Ethoxyethyl(meth)acrylat und Methoxyethyl-(meth)acrylat. Einsetzbar sind auch Mischungen von Alkylestern, wie z.B. den vorgenannten, mit Alkoxyalkylestern, z.B. in Form der vorgenannten. Einsetzbar sind auch Cyanoalkylacrylate and Cyanoalkylmethacrylate, in denen die C-Atom-Zahl der Cyanoalkylgruppe 2-12 beträgt, vorzugsweise α-Cyanoethylacrylat, β-Cyanoethylacrylat und Cyanobutylmethacrylat. Einsetzbar sind auch Hydroxyalkylacrylate and Hydroxyalkylmethacrylate, in denen die C-Atom-Zahl der Hydroxyalkylgruppen 1-12 beträgt, vorzugsweise 2-Hydroxyethylacrylat, 2-Hydroxyethylmethacrylat und 3-Hydroxypropylacrylat; Einsetzbar sind auch Fluor-substituierte Benzylgruppenhaltige Acrylate oder Methacrylate, vorzugsweise Fluorobenzylacrylat, und Fluorobenzylmethacrylat. Einsetzbar sind auch Fluoroalkylgruppenhaltige Acrylate und Methacrylate, vorzugsweise Trifluoroethylacrylat und Tetrafluoropropylmethacrylat. Einsetzbar sind auch Aminogruppenhaltige α,β-ungesättigte Carbonsäureester wie Dimethylaminomethyl-acrylat und Diethylaminoethylacrylat.

Als weitere Monomere können **α,β-ungesättigte Dicarbonsäuren,** bevorzugt Maleinsäure, Fumarsäure, Crotonsäure, Itaconsäure, Citraconsäure und Mesaconsäure, eingesetzt werden.

Eingesetzt werden können ferner **α,β-ungesättigte Dicarbonsäureanhydride,** bevorzugt Maleinsäureanhydrid, Itaconsäureanhydrid, Citraconsäureanhydrid und Mesaconsäureanhydrid.

Eingesetzt werden können ferner **Mono- oder Diester von α,β-ungesättigten Dicarbonsäuren.** Bei diesen α,β-ungesättigten Dicarbonsäuremono- oder diestern kann es sich z.B. handeln um **Alkyl-,** bevorzugt C₁-C₁₀-Alkyl, insbesondere Ethyl-, n-Propyl-, iso-Propyl, n-Butyl-, tert.-Butyl, n-Pentyl- oder n-Hexyl-, **Alkoxyalkyl-,** bevorzugt C₂-C₁₂ Alkoxyalkyl-, besonders bevorzugt C₃-C₈- Alkoxyalkyl, **Hydroxyalkyl,** bevorzugt C₁-C₁₂ Hydroxyalkyl-, besonders bevorzugt C₂-C₈-Hydroxyalkyl, **Cycloalkyl-,** bevorzugt C₅-C₁₂-Cycloalkyl-, besonders bevorzugt C₆-C₁₂-Cycloalkyl, **Alkylcycloalkyl-,** bevorzugt C₆-C₁₂-Alkylcycloalkyl-, besonders bevorzugt C₇-C₁₀-Alkylcycloalkyl, **Aryl-,** bevorzugt C₆-C₁₄-Aryl-Mono- oder -Diester, wobei es sich im Fall der Diester jeweils auch um gemischte Ester handeln kann.

Besonders bevorzugte **Alkylester von α,β-ungesättigten Monocarbonsäuren** sind Methyl(meth)acrylat, Ethyl(meth)acrylat, Propyl(meth)acrylat, n-Butyl(meth)acrylat, t-Butyl(meth)acrylat, Hexyl(meth)acrylat, 2-Ethlyhexyl(meth)acrylat, Octyl(meth)acrylat, 2-Propylheptylacrylat und Lauryl(meth)acrylat. Insbesondere wird n-Butylacrylat eingesetzt.

Besonders bevorzugte **Alkoxyalkylester der α,β-ungesättigten Monocarbonsäuren** sind Methoxyethyl(meth)acrylat, Ethoxyethyl(meth)acrylat und Methoxyethyl(meth)acrylat. Insbesondere wird Methoxyethylacrylat eingesetzt.

Als sonstige Ester der α,β-ungesättigten Monocarbonsäuren werden ferner beispielsweise Polyethylenglykol(meth)acrylat, Polypropylenglykol(meth)acrylat, N-(2-Hydroxyethyl)acrylamid, N-(2-Hydroxymethyl)acrylamid und Urethan(meth)acrylat eingesetzt.

Beispiele von **α,β-ungesättigten Dicarbonsäuremonoestern** umfassen
- Maleinsäuremonoalkylester, bevorzugt Monomethylmaleat, Monoethylmaleat, Monopropylmaleat und Mono-n-butylmaleat;
- Maleinsäuremonocycloalkylester, bevorzugt Monocyclopentylmaleat, Monocyclohexyl maleat und Monocycloheptylmaleat;
- Maleinsäuremonoalkylcycloalkylester, bevorzugt Monomethylcyclopentylmaleat und Monoethylcyclohexylmaleat;
- Maleinsäuremonoarylester, bevorzugt Monophenylmaleat;
- Maleinsäuremonobenzylester, bevorzugt Monobenzylmaleat;
- Fumarsäuremonoalkylester, bevorzugt Monomethylfumarat, Monoethylfumarat, Monopropyl fumarat und Mono-n-butylfumarat;
- Fumarsäuremonocycloalkylester, bevorzugt Monocyclopentylfumarat, Monocyclohexyl fumarat und Monocycloheptylfumarat;
- Fumarsäuremonoalkylcycloalkylester, bevorzugt Monomethylcyclopentylfumarat und Monoethylcyclohexylfumarat;
- Fumarsäuremonoarylester, bevorzugt Monophenylfumarat;
- Fumarsäuremonobenzylester, bevorzugt Monobenzylfumarat;
- Citraconsäuremonoalkylester, bevorzugt Monomethylcitraconat, Monoethylcitraconat, Monopropylcitraconat und Mono-n-butylcitraconat;
- Citraconsäuremonocycloalkylester, bevorzugt Monocyclopentylcitraconat, Monocyclohexyl citraconat und Monocycloheptylcitraconat;
- Citraconsäuremonoalkylcycloalkylester, bevorzugt Monomethylcyclopentylcitraconat und Monoethylcyclohexylcitraconat;
- Citraconsäuremonoarylester, bevorzugt Monophenylcitraconat;
- Citraconsäuremonobenzylester, bevorzgut Monobenzylcitraconat;
- Itaconsäuremonoalkylester, bevorzugt Monomethylitaconat, Monoethylitaconat, Monopropyl itaconat und Mono-n-butylitaconat;
- Itaconsäuremonocycloalkylester, bevorzugt Monocyclopentylitaconat, Monocyclohexyl itaconat und Monocycloheptylitaconat;
- Itaconsäuremonoalkylcycloalkylester, bevorzugt Monomethylcyclopentylitaconat und Monoethylcyclohexylitaconat;
- Itaconsäuremonoarylester, bevorzugt Monophenylitaconat;
- Itaconsäuremonobenzylester, bevorzugt Monobenzylitaconat;
- Mesaconsäuremonoalkylester, bevorzugt Mesaconsäuremonoethylester.

Als **α,β-ungesättigte Dicarbonsäurediester** können die analogen Diester basierend auf den zuvor genannten Monoestergruppen eingesetzt werden, wobei es sich bei den Estergruppen auch um chemisch verschiedene handeln kann.

Als **weitere copolymerisierbare Monomere** kommen ferner radikalisch polymerisierbare Verbindungen in Betracht, die pro Molekül mindestens zwei olefinische Doppelbindungen enthalten. Beispiele mehrfach ungesättigter Verbindungen sind Acrylate, Methacrylate oder Itaconate von Polyolen wie z.B. Ethylenglykoldiacrylat, Diethylenglykoldimethacrylat, Triethylenglylkoldiacrylat, Butandiol-1,4-diacrylat, Propandiol-1,2-diacrylat, Butandiol-1,3-dimethacrylat, Neopentylglykoldiacrylat, Trimethylolpropandi(meth)acrylat, Trimethylolethandi(meth)acrylat, Glycerindi- und -triacrylat, Pentaerythritdi-, -tri- und tetraacrylat oder - methacrylat, Dipentaerythrittetra, -penta- und hexaacrylat oder -methacrylat oder -itaconat, Sorbittetraacrylat, Sorbithexamethacrylat, Diacrylate oder Dimethacrylate von 1,4-Cyclohexandiol, 1,4-Dimethylolcyclohexan, 2,2-Bis(4-hydroxyphenyl)propan, von Polyethylenglykolen oder Oligoestern oder Oligourethanen mit endständigen Hydroxylgruppen. Als mehrfach ungesättigte Monomere können auch Acrylamide verwendet werden wie z.B. Methylen-bisacrylamid, Hexamethylen-1,6-bisacrylamid, Diethylentriamin-tris-methacrylamid, Bis(methacrylamidopropoxy)ethan oder 2-Acrylamido-ethylacrylat. Beispiele für mehrfach ungesättigte Vinyl- und Allylverbindungen sind Divinylbenzol, Ethylenglykoldivinylether, Diallylphthalat, Allylmethacrylat, Diallylmaleat, Triallylisocyanurat oder Triallylphosphat.

Die Anteile an konjugiertem Dien und α,β-ungesättigtem Nitril in den im erfindungsgemäßen Verfahren einzusetzenden hydrierten Nitrilkautschuken bzw. den erfindungsgemäßen hydrierten Nitrilkautschuken können in weiten Bereichen variieren. Der Anteil des oder der Summe der konjugierten Diene liegt üblicherweise im Bereich von 20 bis 95 Gew.%, bevorzugt im Bereich von 45 bis 90 Gew.%, besonders bevorzugt im Bereich von 50 bis 85 Gew.%, bezogen auf das Gesamtpolymer. Der Anteil des oder der Summe der α,β-ungesättigten Nitrile liegt üblicherweise bei 5 bis 80 Gew.%, bevorzugt bei 10 bis 55 Gew.%, besonders bevorzugt bei 15 bis 50 Gew.%, bezogen auf das Gesamtpolymer. Die Anteile der Wiederholungseinheiten an konjugiertem Dien und α,β-ungesättigtem Nitril in den erfindungsgemäß einzusetzenden hydrierten Nitrilkautschuken bzw. den erfindungsgemäßen hydrierten Nitrilkautschuken summieren sich jeweils zu 100 Gew.% auf.

Die zusätzlichen Monomere können in Mengen von 0 bis 40 Gew.%, bevorzugt 0 bis 30 Gew.%, besonders bevorzugt 0 bis 26 Gew.%, bezogen auf das Gesamtpolymer, vorliegen. In diesem Fall werden entsprechende Anteile der Wiederholungseinheiten des oder der konjugierten Diene und/oder der Wiederholungseinheiten des oder der α,β-ungesättigten Nitrile durch die Anteile dieser zusätzlichen Monomere ersetzt, wobei sich die Anteile aller Wiederholungseinheiten der Monomere weiterhin jeweils zu 100 Gew.% aufsummieren müssen.

Werden als zusätzliche Monomere Ester der (Meth)acrylsäure eingesetzt, so erfolgt dies üblicherweise in Mengen von 1 bis 25 Gew.%. Werden als zusätzliche Monomere α,β-ungesättigte Mono- oder Dicarbonsäuren eingesetzt, so erfolgt dies üblicherweise in Mengen von weniger als 10 Gew.%.

Bevorzugt sind erfindungsgemäße hydrierte Nitrilkautschuke, die Wiederholungseinheiten abgeleitet von Acrylnitril und 1,3-Butadien aufweisen. Bevorzugt sind ferner erfindungsgemäße hydrierte Nitrilkautschuke, die Wiederholungseinheiten von Acrylnitril, 1,3-Butadien und einem oder mehreren weiteren copolymerisierbaren Monomeren aufweisen. Ebenso bevorzugt sind hydrierte Nitrilkautschuke, die Wiederholungseinheiten von Acrylnitril, 1,3-Butadien und einer oder mehreren α,β-ungesättigten Mono- oder Dicarbonsäure, deren Estern oder Amiden aufweisen, und insbesondere Wiederholungseinheiten eines Alkylesters einer α,β-ungesättigten Carbonsäuren, ganz besonders bevorzugt von Methyl(meth)acrylat, Ethyl(meth)acrylat, Propyl(meth)acrylat, n-Butyl(meth)acrylat, t-Butyl(meth)acrylat, Hexyl(meth)acrylat, 2-Ethylhexyl(meth)acrylat, Octyl(meth)acrylat oder Lauryl(meth)acrylat.

In einer bevorzugten Ausführungsform sind die erfindungsgemäßen hydrierten Nitrilkautschuke im Wesentlichen füllstoff-frei. "Im Wesentlichen füllstoff-frei" bedeutet im Rahmen dieser Anmeldung, dass die erfindungsgemäßen hydrierten Nitrilkautschuke weniger als 5 Gew.% Füllstoffe, bezogen auf 100 Gew.% hydrierten Nitrilkautschuk, enthalten.

In einer besonders bevorzugten Ausführungsform enthalten die erfindungsgemäßen hydrierten Nitrilkautschuke bezogen auf 100 Gew.% hydrierten Nitrilkautschuk, weniger als 5 Gew.% Füllstoffe ausgewählt aus der Gruppe bestehend aus Ruß, Kieselsäure, Bariumsulfat, Titandioxid, Zinkoxid, Calciumoxid, Calciumcarbonat, Magnesiumoxid, Aluminiumoxid, Eisenoxid, Aluminiumhydroxid, Magnesiumhydroxid, Aluminiumsilikate, Diatomeenerde, Talkum, Kaoline, Bentonite, Kohlenstoff Nanotubes, Teflon (letzteres bevorzugt in Pulverform), Silikaten und Mischungen der vorgenannten.

Der Stickstoffgehalt wird in den erfindungsgemäß einzusetzenden Nitrilkautschuke bzw. den erfindungsgemäßen hydrierten Nitrilkautschuken gemäß DIN 53 625 nach Kjeldahl bestimmt. Aufgrund des Gehalts an polaren Comonomeren sind die Nitrilkautschuke üblicherweise in Methylethylketon bei 20°C ≥ 85 Gew.% löslich.

Die Glastemperaturen der erfindungsgemäßen hydrierten Nitrilkautschuken liegen im Bereich - 70°C bis +10°C, vorzugsweise im Bereich -60°C bis 0°C.

Die hydrierten Nitrilkautschuke weisen Mooney-Viskositäten ML 1+4 bei 100°C von 10 bis 150 Mooney- Einheiten (MU), vorzugsweise von 20 bis 100 MU auf. Die Mooneyviskosität der hydrierten Nitrilkautschuke wird in einem Scherscheibenviskosimeter nach DIN 53523/3 bzw. ASTM D 1646 bei 100°C bestimmt.

In einer alternativen Ausführungsform besitzt der erfindungsgemäße hydrierte Nitrilkautschuk
i) einen Gehalt an **Phosphanen, Diphosphanen** oder Mischungen davon, bevorzugt Triphenylphosphan, im Bereich von größer 0 bis 1,0 Gew.%, bevorzugt von größer 0 bis 0,8 Gew.%, besonders bevorzugt von größer 0 bis 0,6 Gew.%, ganz besonders bevorzugt von 0,05 bis 0,5 Gew.% und insbesondere von 0,1 bis 0,4 Gew.%, bezogen auf den hydrierten Nitrilkautschuk, und
ii) einen Gehalt an **Phosphansulfiden, Diphosphansulfiden** oder Mischungen davon, bevorzugt Triphenylphosphansulfid, im Bereich von 0,075 bis 10 Gew.%, bevorzugt von 0,1 bis 9 Gew.%, besonders bevorzugt von 0,2 bis 8 Gew.%, ganz besonders bevorzugt 0,3 bis 6 Gew.% und insbesondere von 0,4 bis 5 Gew.%, bezogen auf den hydrierten Nitrilkautschuk.

Bei dieser alternativen Ausführungsform liegt der Hydriergrad des hydrierten Nitrilkautschuks im Bereich von 80 bis 100%, bevorzugt von 90 bis 100%, besonders bevorzugt von 92 bis 100% und ganz besonders bevorzugt von 94 bis 100%.

### Verfahren zur Herstellung der erfindungsgemäßen hydrierten Nitrilkautschuke:

Die erfindungsgemäßen hydrierten Nitrilkautschuke mit
(i) einem Gehalt an **Phosphanen, Diphosphanen** oder Mischungen davon, bevorzugt Triphenylphosphan, im Bereich von 0 bis 1,0 Gew.%, bevorzugt von 0 bis 0,8 Gew.%, besonders bevorzugt von 0 bis 0,6 Gew.%, ganz besonders bevorzugt von 0 bis 0,5 Gew.% und insbesondere von 0 bis 0,4 Gew.%, bezogen auf den hydrierten Nitrilkautschuk, und
(ii) einem Gehalt an **Phosphansulfiden, Diphosphansulfiden** oder Mischungen davon, bevorzugt Triphenylphosphansulfid, im Bereich von 0,075 bis 10 Gew.%, bevorzugt von 0,1 bis 9 Gew.%, besonders bevorzugt von 0,2 bis 8 Gew.%, ganz besonders bevorzugt 0,3 bis 6 Gew.% und insbesondere von 0,4 bis 5 Gew.%, bezogen auf den hydrierten Nitrilkautschuk,
können hergestellt werden, in dem man einen hydrierten Nitrilkautschuk, der einen Gehalt an Phosphanen, Diphosphanen oder Mischungen davon in einem Bereich von 0,15-5 Gew.%, bevorzugt im Bereich von 0,25-4,75 Gew.%, besonders bevorzugt im Bereich von 0,3-4,5 Gew.%, ganz besonders bevorzugt im Bereich von 0,4-4,25 Gew.% und insbesondere im Bereich von 0,5-4 Gew.%, bezogen auf den hydrierten Nitrilkautschuk besitzt, mit **mindestens einem Schwefeldonor** umsetzt, der mindestens zwei direkt kovalent miteinander verbundene Schwefelatome aufweist.

Dies gilt gleichermaßen für die Herstellung der alternativen erfindungsgemäßen hydrierten Nitrilkautschuke, die sich von den im vorgenannten Absatz genannten nur dahingehend unterscheiden, dass (i) der Gehalt an Phosphanen, Diphosphanen oder Mischungen davon, bevorzugt Triphenylphosphan, im Bereich von größer 0 bis 1,0 Gew.%, bevorzugt von größer 0 bis 0,8 Gew.%, besonders bevorzugt von größer 0 bis 0,6 Gew.%, ganz besonders bevorzugt von 0,05 bis 0,5 Gew.% und insbesondere von 0,1 bis 0,4 Gew.%, bezogen auf den hydrierten Nitrilkautschuk ist.

Die erfindungsgemäße Umsetzung des Phosphan- und/oder Diphosphanhaltigen hydrierten Nitrilkautschuks mit **mindestens einem Schwefeldonor,** der mindestens zwei direkt kovalent miteinander verbundene Schwefelatome aufweist, kann in verschiedenen Varianten durchgeführt werden.

Es hat sich bewährt,
(1) zunächst einen Nitrilkautschuk einer katalytischen Hydrierung in organischer Lösung und in Gegenwart eines Phosphans und/oder Diphosphans der vorgenannten Definitionen zu unterziehen, wobei das Phosphan bzw. Diphosphan entweder (a) als Ligand im Hydrierkatalysator vorliegt ohne weiteren Zusatz von Phosphan bzw. Diphosphan als Co-Katalysator, oder (b) als Ligand im Hydrierkatalysator vorliegt und zusätzlich noch als Co-Katalysator zugesetzt wird, oder (c) als Cokatalysator zugesetzt wird, der Hydrierkatalysator jedoch kein Phosphan oder Diphosphan als Ligand(en) aufweist, und
(2) anschließend den erhaltenen hydrierten Nitrilkautschuk entweder vor, während oder nach der Isolierung, bevorzugt vor oder während der Isolierung, insbesondere im Rahmen einer Wasserdampfdestillation, oder alternativ bevorzugt nach Isolierung in einem separaten Mischvorgang mit dem mindestens einen Schwefeldonor, der mindestens zwei direkt kovalent miteinander verbundene Schwefelatome aufweist, in Kontakt zu bringen und umzusetzen.

### Schritt 1:

Es hat sich bewährt, den hydrierten Nitrilkautschuk, der einen Gehalt an Phosphanen, Diphosphanen oder Mischungen davon im Bereich von 0,15-5 Gew.%, bevorzugt im Bereich von 0,25-4,75 Gew.%, besonders bevorzugt im Bereich von 0,3-4,5 Gew.%, ganz besonders bevorzugt im Bereich von 0,4-4,25 Gew.% und insbesondere im Bereich von 0,5-4 Gew.% bezogen auf den hydrierten Nitrilkautschuk aufweist, **in einem ersten Schritt durch Hydrierung** herzustellen.

### Hydrierkatalysator:

Bei der katalytischen Hydrierreaktion des erfindungsgemäßen Verfahrens ist mindestens ein Phosphan oder Diphosphan anwesend:
In einer **ersten Ausführungsform** ist dieses Phosphan und/oder Diphosphan als Ligand im eingesetzten Hydrierkatalysator anwesend. Es ist kein separater Zusatz eines Phosphans oder Diphosphans erforderlich.

In einer **zweiten Ausführungsform** wird in der Hydrierreaktion neben dem Phosphan- oder Diphosphan Liganden-haltigen Hydrierkatalysator ein Phosphan- oder Diphosphan als sogenannter Cokatalysator zugesetzt.

In einer **dritten Ausführungsform** kann ein beliebiger Hydrierkatalysator eingesetzt werden, der kein Phosphan oder Diphosphan enthält, und das Phosphan bzw. Diphosphan wird als Cokatalysator zugesetzt.

In einer bevorzugten Ausführungsform wird die Hydrierung unter Einsatz mindestens eines Katalysators durchgeführt, der mindestens einen Phosphan- bzw. Diphosphan-Liganden aufweist.

Bevorzugt ist weiterhin die Hydrierung unter Einsatz mindestens eines Katalysators, der mindestens einen Phosphan- bzw. Diphosphan-Liganden aufweist, und zusätzlich in Gegenwart mindestens eines Phosphans oder Diphosphans als Cokatalysator.

Bei allen Ausführungsformen basieren die Hydrierkatalysatoren typischerweise auf den Edelmetallen Rhodium, Ruthenium, Osmium, Palladium, Platin oder Iridium, wobei Rhodium, Ruthenium und Osmium bevorzugt sind. Die im Folgenden genannten Katalysatoren sind bei allen Ausführungsformen einsetzbar.

Einsetzbar sind **rhodiumhaltige Komplexkatalysatoren** der allgemeinen Formel (A),

Rh(X)ₙ(L)ₘ (A)

wobei
- **X**: gleich oder verschieden sind und Wasserstoff, Halogen, Pseudohalogen, SnCl₃ oder Carboxylat bedeutet,
- **n**: gleich 1, 2 oder 3 ist, bevorzugt 1 oder 3,
- **L**: gleich oder verschieden sind und für mono- oder bidentate Liganden auf der Basis von Phosphor, Arsen oder Antimon stehen,
- **m**: soweit L für monodentate Liganden steht, gleich 2, 3 oder 4 ist, oder soweit L für bidentate Liganden steht, gleich 1 oder 1,5 oder 2 oder 3 oder 4 ist

In der allgemeinen Formel (A) sind X gleich oder verschieden und bedeuten bevorzugt Wasserstoff oder Chlor.

**L** steht in der allgemeinen Formel (A) bevorzugt für ein Phosphan oder Diphosphan entsprechend den weiter oben dargestellten allgemeinen Formeln (I-a) und (I-b) inklusive der dort genannten allgemeinen, bevorzugten und besonders bevorzugten Bedeutungen.

Besonders bevorzugte Katalysatoren der allgemeinen Formel (A) sind Tris(triphenylphosphan)rhodium-(I)-chlorid, Tris(tripenylphosphan)rhodium-(III)-chlorid, Tris(dimethylsulfoxid)rhodium-(III)-chlorid, Hydridorhodiumtetrakis(triphenylphosphan) und die entsprechenden Verbindungen, in denen Triphenylphosphin ganz oder teilweise durch Tricyclohexylphosphin ersetzt ist.

Einsetzbar sind ferner **rutheniumhaltige Komplexkatalysatoren.** Diese sind z.B. in DE-A 39 21 264 und EP-A-0 298 386 beschrieben. Sie weisen typischerweise die allgemeine Formel (B) auf,

RuXₙ[(L¹)m(L²)_{5-z}] (B)

worin
- **X**: gleich oder verschieden sind und für Wasserstoff, Halogen, SnCl₃, CO, NO oder R⁶-COO stehen,
- **L¹**: gleich oder verschieden sind und für Wasserstoff, Halogen, R⁶-COO, NO, CO oder ein Cyclopentadienyl-Ligand der folgenden allgemeinen Formel (2)stehen, 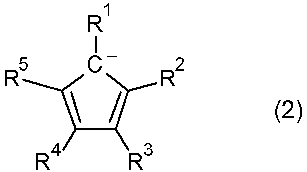
worin
- **R¹ bis R⁵**: gleich oder verschieden sind und Wasserstoff, Methyl, Ethyl, Propyl, Butyl, Hexyl oder Phenyl bedeuten oder alternativ zwei benachbarte Reste aus R¹ bis R⁵ verbrückt sind, so dass ein Indenyl oder Fluorenylsystem resultiert,
- **L²**: ein Phosphan, Diphosphan oder Arsan und
- **n**: 0, 1 oder 2 ist,
- **m**: 0, 1, 2 oder 3,
- **z**: 1, 2, 3 oder 4 ist, und
- **R⁶**: einen Rest mit 1 bis 20 C-Atome darstellt, der verzweigt oder unverzweigt, verbrückt oder unverbrückt und/oder teilweise aromatisch sein kann, und bevorzugt C₁-C₄ Alkyl bedeutet.

Beispiele für **L¹ Liganden** in der allgemeinen Formel (B) vom Typ des Cyclopentadienyl Liganden der allgemeinen Formel (2) umfassen Cyclopentadienyl, Pentamethylcyclopentadienyl, Ethyltetramethylcyclopentadienyl, Pentaphenylcyclopentadienyl, Dimethyltriphenylcyclopentadienyl, Indenyl und Fluorenyl. Die Benzolringe in den L¹-Liganden vom Indenyl- und Fluorenyl-Typ können durch C₁-C₆-Alkylreste, insbesondere Methyl, Ethyl und Isopropyl, C₁-C₄-Alkoxyreste, insbesondere Methoxy und Ethoxy, Arylreste, insbesondere Phenyl, und Halogene, insbesondere Fluor und Chlor, substituiert sein. Bevorzugte L¹-Liganden vom Typ Cyclopentadienyl sind die jeweils unsubstituierten Reste Cyclopentadienyl, Indenyl und Fluorenyl.

Im **L¹-Liganden** in der allgemeinen Formel (B) vom Typ (R⁶-COO) umfasst R⁶ beispielsweise geradkettige oder verzweigte, gesättigte Kohlenwasserstoffreste mit 1 bis 20, bevorzugt 1 bis 12, insbesondere 1 bis 6 C-Atomen, cyclische, gesättigte Kohlenwasserstoffreste mit 5 bis 12, bevorzugt 5 bis 7 C-Atomen, ferner aromatische Kohlenwasserstoffreste mit 6 bis 18, bevorzugt 6 bis 10 C-Atomen, oder Aryl-substituierte Alkylreste, die bevorzugt einen geradkettigen oder verzweigten C₁-C₆ Alkylrest und einen C₆-C₁₈ Arylrest, vorzugsweise Phenyl, aufweisen.

Die vorstehend erläuterten **Reste R⁶** in (R⁶-COO) im Liganden L¹ der allgemeinen Formel (B) können gegebenenfalls durch Hydroxy, C₁-C₆-Alkoxy, C₁-C₆-Carbalkoxy, Fluor, Chlor oder Di-C₁-C₄-alkylamino, substituiert sein, die Cycloalkyl-, Aryl- und Aralkylreste darüber hinaus durch C₁-C₆-Alkyl, Alkyl-, Cycloalkyl- und Aralkylgruppen können Ketogruppen enthalten. Beispiele für den Rest R⁶ sind Methyl, Ethyl, Propyl, iso-Propyl, tert.-Butyl, Cyclohexyl, Phenyl, Benzyl und Trifluormethyl. Bevorzugte Reste R⁶ sind Methyl, Ethyl und tert.-Butyl.

Der **L² Ligand** steht in der allgemeinen Formel (B) bevorzugt für ein Phosphan oder Diphosphan entsprechend den oben dargestellten allgemeinen Formeln (1-a) und (1-b) inklusive der dort genannten allgemeinen, bevorzugten und besonders bevorzugten Bedeutungen oder für ein Arsan der allgemeinen Formel (3)

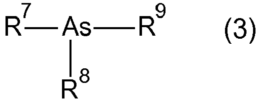

Bevorzugte **Liganden L²** der allgemeinen Formel (3) sind Triphenylarsan, Ditolylphenylarsan, Tris-(4-ethoxyphenyl)-arsan, Diphenylcyclohexylarsan, Dibutylphenylarsan und Diethylphenylarsan.

Bevorzugte **rutheniumhaltige Katalysatoren der allgemeinen Formel (B)** sind aus der nachfolgenden Gruppe ausgewählt, wobei "Cp" für Cyclopentadienyl, d.h. C₅H₅⁻, "Ph" für Phenyl, "Cy" für Cyclohexyl und "dppe" für 1,2-bis(diphenylphosphino)ethan steht: RuCl₂(PPh₃)₃; RuHCl(PPh₃₎₃; RuH₂(PPh₃)₃; RuH₂(PPh₃)₄; RuH₄(PPh₃)₃; RuH(CH₃COO)(PPh₃)₃; RuH(C₂H₅COO)(PPh₃)₃; RuH(CH₃COO)₂(PPh₃)₂; RuH(NO)₂(PPh₃)₂; Ru(NO)₂(PPh₃)₂; RuCl(Cp)(PPh₃)₂; RuH(Cp)(PPh₃)₂; Ru(SnCl₃)(Cp)(PPh₃)₂; RuCl(µ⁵-C₉H₇)(PPh₃)₂; RuH(µ⁵-C₉H₇)(PPh₃)₂; Ru(SnCl₃)(µ⁵-C₉H₇)(PPh₃)₂; RuCl(µ⁵-C₁₃H₉)(PPh₃)₂; RuH(µ⁵-C₁₃H₉)(PPh₃)₂; Ru(SnCl₃)(µ⁵-C₁₃H₉)(PPh₃)₂; RuCl(µ⁵-C₉H₇)(dppe); RuHCl(CO)(PCy₃); RuH(NO)(CO)(PCy₃)₃; RuHCl(CO)₂(PPh₃)₂; RuCl₂(CO)(dppe) RuHCl(CO)(PCy₃), RuHCl(CO)(dppe)₂, RuH(CH₃COO)(PPh₃)₃; RuH(CH₃COO)₂(PPh₃)₂; und RuH(CH₃COO)(PPh₃)₃.

Als Katalysatoren sind ferner solche der **allgemeinen Formel (C)** geeignet, 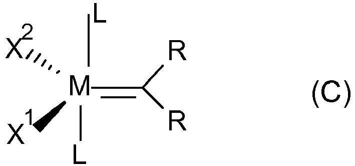 worin
- M: Osmium oder Ruthenium bedeutet,
- X¹ und X²: gleich oder verschieden und zwei Liganden, bevorzugt anionische Liganden, sind,
- L: gleiche oder verschiedene Liganden, bevorzugt neutrale Elektronen-Donoren sind,
- R: gleich oder verschieden sind und Wasserstoff, Alkyl, bevorzugt C₁-C₃₀-Alkyl, Cycloalkyl, bevorzugt C₃-C₂₀-Cycloalkyl, Alkenyl, bevorzugt C₂-C₂₀-Alkenyl, Alkinyl, bevorzugt C₂-C₂₀-Alkinyl, Aryl, bevorzugt C₆-C₂₄-Aryl, Carboxylat, bevorzugt C₁-C₂₀-Carboxylat, Alkoxy, bevorzugt C₁-C₂₀-Alkoxy, Alkenyloxy, bevorzugt C₂-C₂₀-Alkenyloxy, Alkinyloxy, bevorzugt C₂-C₂₀-Alkinyloxy, Aryloxy, bevorzugt C₆-C₂₄-Aryloxy, Alkoxycarbonyl, bevorzugt C₂-C₂₀-Alkoxycarbonyl, Alkylamino, bevorzugt C₁-C₃₀-Alkylamino, Alkylthio, bevorzugt C₁-C₃₀-Alkylthio, Arylthio, bevorzugt C₆-C₂₄-Arylthio, Alkylsulfonyl, bevorzugt C₁-C₂₀-Alkylsulfonyl, oder Alkylsulfinyl, bevorzugt C₁-C₂₀-Alkylsulfinyl, darstellen, wobei diese Reste alle jeweils optional durch ein oder mehrere Alkyl-, Halogen-, Alkoxy-, Aryl- oder Heteroaryl-Reste substituiert sein können, oder alternativ beide Reste R unter Einbindung des gemeinsamen C-Atoms, an das sie gebunden sind, zu einer cyclischen Gruppe verbrückt sind, die aliphatischer oder aromatischer Natur sein kann, gegebenenfalls substituiert ist und ein oder mehrere Heteroatome enthalten kann.

In einer Ausführungsform der Katalysatoren der allgemeinen Formel (C) ist der eine Rest R Wasserstoff und der andere Rest R bedeutet C₁-C₂₀-Alkyl, C₃-C₁₀-Cycloalkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₃₀-Alkylamino, C₁-C₃₀-Alkylthio, C₆-C₂₄-Arylthio, C₁-C₂₀-Alkylsulfonyl oder C₁-C₂₀-Alkylsulfinyl, wobei diese Reste alle jeweils durch ein oder mehrere Alkyl-, Halogen-, Alkoxy-, Aryl- oder Heteroaryl-Reste substituiert sein können.

In den Katalysatoren der allgemeinen Formel (C) sind **X¹ und X²** gleich oder verschieden und stellen zwei Liganden, bevorzugt anionische Liganden, dar.

X¹ und X² können z.B. Wasserstoff, Halogen, Pseudohalogen, geradkettige oder verzweigte C₁-C₃₀-Alkyl, C₆-C₂₄-Aryl, C₁-C₂₀-Alkoxy, C₆-C₂₄-Aryloxy, C₃-C₂₀-Alkyldiketonat, C₆-C₂₄-Aryldiketonat, C₁-C₂₀-Carboxylat, C₁-C₂₀- Alkylsulfonat, C₆-C₂₄-Arylsulfonat, C₁-C₂₀- Alkylthiol, C₆-C₂₄-Arylthiol, C₁-C₂₀-Alkylsulfonyl, C₁-C₂₀-Alkylsulfinyl, Mono- oder Dialkylamid, Mono- oder Dialkylcarbamat, Mono- oder Dialkylthiocarbamat, Mono-oder Dialkyldithiocarbamat oder Mono-oder Dialkylsulfonamid Reste bedeuten.

Die vorgenannten Reste X¹ und X² können ferner durch ein oder mehrere weitere Reste substituiert sein, beispielsweise durch Halogen, bevorzugt Fluor, C₁-C₁₀-Alkyl, C₁-C₁₀-Alkoxy oder C₆-C₂₄-Aryl, wobei auch diese Reste gegebenenfalls wiederum durch ein oder mehrere Substituenten substituiert sein können, die aus der Gruppe umfassend Halogen, bevorzugt Fluor, C₁-C₅-Alkyl, C₁-C₅-Alkoxy und Phenyl ausgewählt sind.

In einer weiteren Ausführungsform sind X¹ und X² gleich oder verschieden und bedeuten Halogen, insbesondere Fluor, Chlor, Brom oder Jod, Benzoat, C₁-C₅-Carboxylat, C₁-C₅-Alkyl, Phenoxy, C₁-C₅-Alkoxy, C₁-C₅-Alkylthiol, C₆-C₂₄-Arylthiol, C₆-C₂₄-Aryl oder C₁-C₅-Alkylsulfonat.

In einer weiteren Ausführungsform sind X¹ und X² identisch und bedeuten Halogen, insbesondere Chlor, CF₃COO, CH₃COO, CFH₂COO, (CH₃)₃CO, (CF₃)₂(CH₃)CO, (CF₃)(CH₃)₂CO, PhO (Phenoxy), MeO (Methoxy), EtO (Ethoxy), Tosylat (p-CH₃-C₆H₄-SO₃), Mesylat (CH₃SO₃) oder CF₃SO₃ (Trifluormethansulfonat).

In der allgemeinen Formel (C) sind **L** gleiche oder verschiedene Liganden und sind bevorzugt neutrale Elektronen-Donoren.

Die beiden Liganden L können beispielsweise unabhängig voneinander einen Phosphan-, sulfonierten Phosphan-, Phosphat-, Phosphinit-, Phosphonit-, Arsan-, Stiban-, Ether-, Amin-, Amid-, Sulfoxid-, Carboxyl-, Nitrosyl-, Pyridin-, Thioether-, einen Imidazolin- oder einen Imidazolidin-Liganden darstellen.

Bevorzugt bedeuten die beiden Liganden L unabhängig voneinander einen C₆-C₂₄-Aryl-, C₁-C₁₀-Alkyl- oder C₃-C₂₀-Cycloalkyl-Phosphan-Liganden, einen sulfonierten C₆-C₂₄-Aryl- oder sulfonierten C₁-C₁₀-Alkyl-Phosphan-Liganden, einen C₆-C₂₄-Aryl- oder C₁-C₁₀-Alkyl-Phosphinit-Liganden, einen C₆-C₂₄-Aryl- oder C₁-C₁₀-Alkylphosphonit-Liganden, einen C₆-C₂₄-Aryl- oder C₁-C₁₀-Alkylphosphit-Liganden, einen C₆-C₂₄-Aryl- oder C₁-C₁₀-Alkylarsan-Liganden, einen C₆-C₂₄-Aryl- oder C₁-C₁₀-Alkylamin-Liganden, einen Pyridin-Liganden, einen C₆-C₂₄-Aryl- oder C₁-C₁₀-Alkyl-Sulfoxid-Liganden, einen C₆-C₂₄-Aryl- oder C₁-C₁₀-Alkyl-Ether-Liganden oder einen C₆-C₂₄-Aryl- oder C₁-C₁₀-Alkylamid-Liganden, die alle jeweils durch eine Phenylgruppe substituiert sein können, die wiederum entweder unsubstituiert oder durch einen oder mehrere Halogen-, C₁-C₅-Alkyl- oder C₁-C₅-Alkoxy-Rest(e) substituiert ist.

Die Bezeichnung "Phosphan" schließt beispielsweise PPh₃, P(p-Tol)₃, P(o-Tol)₃, PPh(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na)₃, P(iso-Propyl)₃, P(CHCH₃(CH₂CH₃))₃, P(Cyclopentyl)₃, P(Cyclohexyl)₃, P(Neopentyl)₃ und P(Neophenyl)₃ ein, wobei "Ph" für Phenyl und "Tol" für Tolyl steht.

Die Bezeichnung "Phosphinit" schließt beispielsweise Triphenylphosphinit, Tricyclohexylphosphinit, Triisopropylphosphinit und Methyldiphenylphosphinit ein.

Die Bezeichnung "Phosphit" schließt beispielsweise Triphenylphosphit, Tricyclohexylphosphit, Tri-tert.-Butylphosphit, Triisopropylphosphit und Methyldiphenylphosphit ein.

Die Bezeichnung "Stiban" schließt Triphenylstiban, Tricyclohexylstiban und Trimethylstiban ein.

Die Bezeichnung "Sulfonat" schließt z.B. Trifluoromethansulfonat, Tosylat und Mesylat ein.

Die Bezeichnung "Sulfoxid" schließt beispielsweise (CH₃)₂S(=O) und (C₆H₅)₂S=O ein.

Die Bezeichnung "Thioether" schließt beispielsweise CH₃SCH₃, C₆H₅SCH₃, CH₃OCH₂CH₂SCH₃ und Tetrahydrothiophen ein.

Die Bezeichnung "Pyridin" soll im Rahmen dieser Anmeldung als Oberbegriff sämtliche Liganden auf Basis von Pyridin einschließen, wie sie z.B. von Grubbs in der WO-A-03/011455 genannt werden. Hierzu gehören, Pyridin sowie Pyridin, welches ein- oder mehrfach substituiert ist in Form der Picoline (α-, β-, und γ-Picolin), Lutidine (2,3-, 2,4-, 2,5-, 2,6-, 3,4- und 3,5-Lutidin), Collidin (2,4,6-Trimethylpyridin), Trifluormethylpyridin, Phenylpyridin, 4-(Dimethylamino)pyridin, Chlorpyridine, Brompyridine, Nitropyridine, Chinolin, Pyrimidin, Pyrrol, Imidazol und Phenylimidazol.

Handelt es sich bei einem oder beiden der Liganden L in Formel (C) um einen Imidazolin- und/oder Imidazolidinrest (nachfolgend auch gemeinsam als "Im"-Ligand(en) bezeichnet), so weist dieser üblicherweise eine Struktur der allgemeinen Formeln (4a) oder (4b) auf, 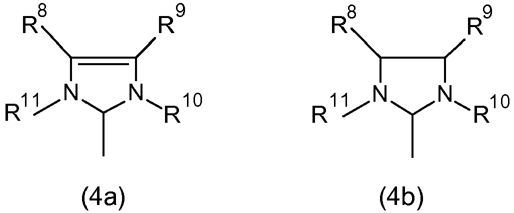 worin
- R⁸, R⁹, R¹⁰, R¹¹: gleich oder verschieden sind und Wasserstoff, geradkettiges oder verzweigtes C₁-C₃₀-Alkyl, C₃-C₂₀-Cycloalkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₀-Aryloxy, C₂-C₂₀-Alkoxycarbonyl, C₁-C₂₀-Alkylthio, C₆-C₂₀-Arylthio, C₁-C₂₀-Alkylsulfonyl, C₁-C₂₀-Alkylsulfonat, C₆-C₂₀-Arylsulfonat oder C₁-C₂₀-Alkylsulfinyl bedeuten.

Gegebenenfalls kann/können einer oder mehrere der Reste R⁸, R⁹, R¹⁰, R¹¹ unabhängig voneinander durch einen oder mehrere Substituenten, vorzugsweise geradkettiges oder verzweigtes C₁-C₁₀-Alkyl, C₃-C₈-Cycloalkyl, C₁-C₁₀-Alkoxy oder C₆-C₂₄-Aryl substituiert sein, wobei diese vorgenannten Substituenten wiederum durch ein oder mehrere Reste, vorzugsweise ausgewählt aus der Gruppe Halogen, insbesondere Fluor, Chlor oder Brom, C₁-C₅-Alkyl, C₁-C₅-Alkoxy und Phenyl substituiert sein können.

Nur zur Klarstellung sei hinzugefügt, dass die in den allgemeinen Formeln (4a) und (4b) im Rahmen dieser Anmeldung dargestellten Strukturen mit den in der Literatur für diesen Rest häufig auch zu findenden Strukturen (4a') und (4b'), die den Carben-Charakter des Rests hervorheben, gleichbedeutend sind. Dies gilt entsprechend auch für die zugehörigen bevorzugten, nachfolgend noch dargestellten Strukturen (5a)-(5f). Nachfolgend werden diese Reste zusammengefasst alle als "Im"-Rest bezeichnet.

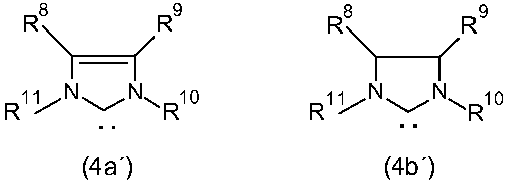

In einer bevorzugten Ausführungsform der Katalysatoren der allgemeinen Formel (C) bedeuten R⁸ und R⁹ unabhängig voneinander H, C₆-C₂₄-Aryl, besonders bevorzugt Phenyl, geradkettiges oder verzweigtes C₁-C₁₀-Alkyl, besonders bevorzugt Propyl oder Butyl, oder bilden zusammen unter Einschluss der Kohlenstoffatome, an die sie gebunden sind, einen Cycloalkyl- oder Aryl-Rest, wobei alle vorgenannten Reste gegebenenfalls wiederum durch ein oder mehrere weitere Reste substituiert sein können, ausgewählt aus der Gruppe umfassend geradkettiges oder verzweigtes C₁-C₁₀-Alkyl, C₁-C₁₀-Alkoxy, C₆-C₂₄-Aryl und eine funktionelle Gruppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

In einer bevorzugten Ausführungsform der Katalysatoren der allgemeinen Formel (C) sind ferner die Reste R¹⁰ und R¹¹ gleich oder verschieden und bedeuten geradkettiges oder verzweigtes C₁-C₁₀-Alkyl, besonders bevorzugt Methyl, i-Propyl oder Neopentyl, C₃-C₁₀-Cycloalkyl, bevorzugt Adamantyl, C₆-C₂₄-Aryl, besonders bevorzugt Phenyl, C₁-C₁₀-Alkylsulfonat, besonders bevorzugt Methansulfonat, C₆-C₁₀-Arylsulfonat, besonders bevorzugt p-Toluolsulfonat.

Gegebenenfalls sind die vorgenannten Reste als Bedeutungen von R¹⁰ und R¹¹ substituiert durch einen oder mehrere weitere Reste ausgewählt aus der Gruppe umfassend geradkettiges oder verzweigtes C₁-C₅-Alkyl, insbesondere Methyl, C₁-C₅-Alkoxy, Aryl und eine funktionelle Gruppe ausgewählt aus Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen, insbesondere Fluor, Chlor und Brom.

Insbesondere können die Reste R¹⁰ und R¹¹ gleich oder verschieden sein und bedeuten i-Propyl, Neopentyl, Adamantyl, Mesityl (2,4,6-Trimethylphenyl), 2,6-Difluorphenyl, 2,4,6-Trifluorphenyl oder 2,6-Diisopropylphenyl.

Besonders bevorzugte Im-Reste haben die nachfolgenden Strukturen (5a) bis (5f), wobei Ph jeweils für einen Phenyl-Rest, Bu für einen Butyl-Rest und Mes jeweils für einen 2,4,6-Trimethylphenyl-Rest steht oder Mes alternativ in allen Fällen für 2,6-Diisopropylphenyl steht.

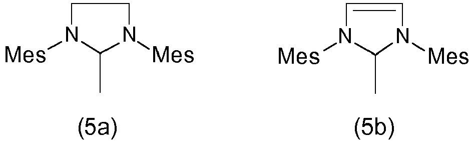

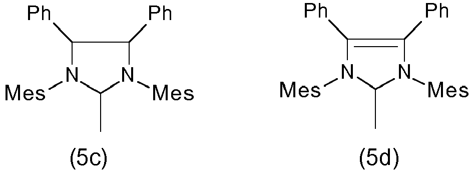

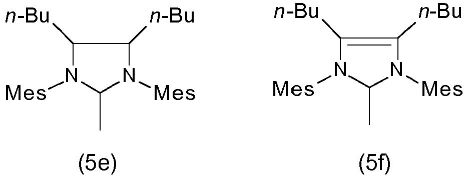

Verschiedenste Vertreter der Katalysatoren der Formel (C) sind prinzipiell bekannt, so z.B. aus der WO-A-96/04289 **und der** WO-A-97/06185**.**

Alternativ zu den bevorzugten Im-Resten steht einer oder beide Liganden L in der allgemeinen Formel (C) bevorzugt auch für gleiche oder verschiedene Trialkylphosphin-Liganden, worin mindestens eine der Alkylgruppen eine sekundäre Alkylgruppe oder ein Cycloalkylgruppe darstellt, bevorzugt iso-Propyl, iso-Butyl, sec-Butyl, Neopentyl, Cyclopentyl oder Cyclohexyl.

Besonders bevorzugt stehen in der allgemeinen Formel (C) einer oder beide Liganden L für einen Trialkylphosphin-Liganden, worin mindestens eine der Alkylgruppen eine sekundäre Alkylgruppe oder ein Cycloalkylgruppe darstellt, bevorzugt iso-Propyl, iso-Butyl, sec-Butyl, Neopentyl, Cyclopentyl oder Cyclohexyl.

Besonders bevorzugt sind Katalysatoren, die unter die allgemeine Formel (C) fallen, und die Strukturen (6) (Grubbs (I)-Katalysator) und (7) (Grubbs (II)-Katalysator), wobei Cy für Cyclohexyl steht, besitzen.

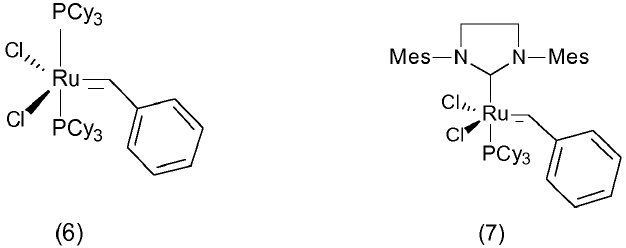

Als Katalysatoren sind ferner bevorzugt solche **der allgemeinen Formel (C1)** einsetzbar, 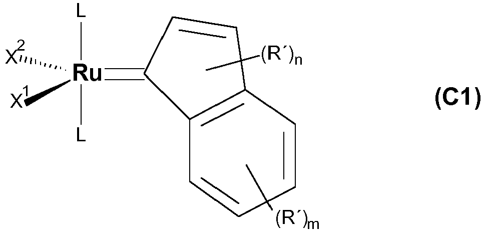 worin
- X¹, X² und L: die gleichen allgemeinen, bevorzugten und besonders bevorzugten Bedeutungen haben können wie in der allgemeinen Formel (C),
- n: gleich 0, 1 oder 2 ist,
- m: gleich 0, 1, 2, 3 oder 4 ist und
- R': gleich oder verschieden sind und Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Reste bedeuten, die alle jeweils durch ein oder mehrere Alkyl-, Halogen-, Alkoxy-, Aryl- oder Heteroaryl-Reste substituiert sein können.

Als bevorzugter Katalysator, der unter die allgemeine Formel (C1) fällt, kann beispielsweise derjenige der folgenden Formeln (8a) und (8b) eingesetzt werden, wobei Mes jeweils für 2,4,6-Trimethylphenyl und Ph für Phenyl steht.

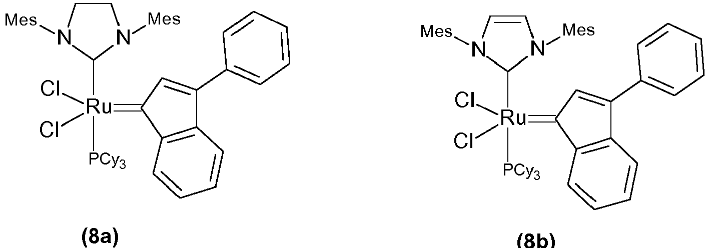

Diese Katalysatoren sind z.B. aus WO-A-2004/112951 bekannt. Katalysator (8a) wird auch als Nolan Katalysator bezeichnet.

Als Katalysatoren sind ferner bevorzugt solche **der allgemeinen Formel (D)** einsetzbar, 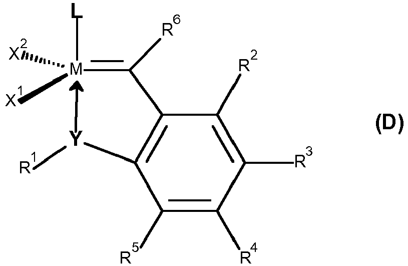 worin
- M: Ruthenium oder Osmium bedeutet,
- X¹ und X²: gleiche oder verschiedene Liganden, bevorzugt anionische Liganden sind,
- Y: Sauerstoff (O), Schwefel (S), einen Rest N-R¹ oder einen Rest P-R¹ bedeutet, wobei R**¹** die nachfolgend genannten Bedeutungen besitzt,
- R**¹**: einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest darstellt, die alle jeweils optional durch ein oder mehrere Alkyl-, Halogen-, Alkoxy-, Aryl- oder Heteroaryl-Reste substituiert sein können,
- R², R³, R⁴ und R⁵: gleich oder verschieden sind und Wasserstoff, organische oder anorganische Reste darstellen,
- R⁶: Wasserstoff, einen Alkyl-, Alkenyl-, Alkinyl- oder einen Aryl-Rest bedeutet und
- L: ein Ligand ist, der die gleichen Bedeutungen besitzt wie für die Formel (C) genannt.

Die Katalysatoren der allgemeinen Formel (D) sind prinzipiell bekannt und z.B. von Hoveyda et al. in US 2002/0107138 A1 und Angew. Chem. Int. Ed. 2003, 42, 4592 beschrieben, bzw. von Grela in WO-A-2004/035596**,** Eur. J. Org. Chem 2003, 963-966 und Angew. Chem. Int. Ed. 2002, 41, 4038 sowie in J. Org. Chem. 2004, 69, 6894-96 und Chem. Eur. J 2004, 10, 777-784 sowie in US 2007/043180**.** Die Katalysatoren sind käuflich erhältlich bzw. gemäß den angegebenen Literaturstellen herstellbar.

In den Katalysatoren der allgemeinen Formel (D) steht L für einen Liganden, der üblicherweise eine Elektronen-Donor-Funktion besitzt und die gleichen allgemeinen, bevorzugten und besonders bevorzugten Bedeutungen annehmen kann wie L in der allgemeinen Formel (C). Darüber hinaus gilt, dass L in der allgemeinen Formel (D) bevorzugt einen P(R⁷)₃ Rest, wobei R⁷ unabhängig voneinander C₁-C₆ Alkyl, C₃-C₈-Cycloalkyl oder Aryl bedeuten, oder aber einen gegebenenfalls substituierten Imidazolin oder Imidazolidinrest ("Im") darstellt.

**C₁-C₆-Alkyl** steht z.B. für Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl und n-Hexyl.

**C₃-C₈-Cycloalkyl** umfasst Cyclopropyl, Cyclobutyl, Cylopentyl, Cyclohexyl, Cycloheptyl und Cyclooctyl.

**Aryl** umfasst einen aromatischen Rest mit 6 bis 24 Gerüstkohlenstoffatomen, bevorzugte mono-, bi- oder tricyclische carbocyclische aromatische Reste mit 6 bis 10 Gerüstkohlenstoffatomen, insbesondere Phenyl, Biphenyl, Naphthyl, Phenanthrenyl oder Anthracenyl.

Der Imidazolin bzw. Imidazolidinrest **(Im)** weist die gleiche allgemeinen, bevorzugten und besonders bevorzugten Strukturen auf wie bei den Katalysatoren der allgemeinen Formel (C).

Besonders geeignet sind Katalysatoren der allgemeinen Formel (D), worin die Reste R¹⁰ und R¹¹ gleich oder verschieden sind und geradkettiges oder verzweigtes C₁-C₁₀-Alkyl, besonders bevorzugt i-Propyl oder Neopentyl, C₃-C₁₀-Cycloalkyl, bevorzugt Adamantyl, C₆-C₂₄-Aryl, besonders bevorzugt Phenyl, C₁-C₁₀-Alkylsulfonat, besonders bevorzugt Methansulfonat, oder C₆-C₁₀-Arylsulfonat, besonders bevorzugt p-Toluolsulfonat bedeuten.

Gegebenenfalls sind die vorgenannten Reste als Bedeutungen von R¹⁰ und R¹¹ substituiert durch einen oder mehrere weitere Reste ausgewählt aus der Gruppe umfassend geradkettiges oder verzweigtes C₁-C₅-Alkyl, insbesondere Methyl, C₁-C₅-Alkoxy, Aryl und eine funktionelle Gruppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

Insbesondere können die Reste R¹⁰ und R¹¹ gleich oder verschieden sein und bedeuten i-Propyl, Neopentyl, Adamantyl oder Mesityl.

Besonders bevorzugte Imidazolin- bzw. Imidazolidinreste (Im) haben die bereits zuvor genannten Strukturen (5a-5f), wobei Mes jeweils für 2,4,6-Trimethylphenyl steht.

In den Katalysatoren der allgemeinen Formel (D) besitzen **X¹ und X²** die gleichen allgemeinen, bevorzugten und besonders bevorzugten Bedeutungen wie in den Katalysatoren der allgemeinen Formel (C).

In der allgemeinen Formel (D) bedeutet der **Rest R¹** einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest, die alle jeweils optional durch ein oder mehrere Alkyl-, Halogen-, Alkoxy-, Aryl- oder Heteroaryl-Reste substituiert sein können.

Üblicherweise bedeutet der Rest R¹ einen C₁-C₃₀-Alkyl, C₃-C₂₀-Cylcoalkyl, C₂-C₂₀-Alkenyl, C₂-C₂₀-Alkinyl, C₆-C₂₄-Aryl, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylamino-, C₁-C₂₀-Alkylthio, C₆-C₂₄-Arylthio, C₁-C₂₀-Alkylsulfonyl oder C₁-C₂₀-Alkylsulfinyl Rest, die alle jeweils optional durch ein oder mehrere Alkyl-, Halogen-, Alkoxy-, Aryl- oder Heteroaryl-Reste substituiert sein können.

Bevorzugt steht R¹ für einen C₃-C₂₀-Cylcoalkyl-Rest, einen C₆-C₂₄-Aryl-Rest oder einen geradkettigen oder verzweigten C₁-C₃₀-Alkyl-Rest, wobei letztere gegebenenfalls durch ein oder mehrere Doppel- oder Dreifachbindungen oder auch ein oder mehrere Heteroatome, bevorzugt Sauerstoff oder Stickstoff, unterbrochen sein kann. Besonders bevorzugt steht R¹ für einen geradkettigen oder verzweigten C₁-C₁₂-Alkyl-Rest.

Der C₃-C₂₀-Cycloalkyl-Rest umfasst beispielsweise Cyclopropyl, Cyclobutyl, Cylopentyl, Cyclohexyl, Cycloheptyl und Cyclooctyl.

Bei dem C₁-C₁₂-Alkyl-Rest kann es sich beispielsweise um Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, n-Hexyl, n-Heptyl, n-Octyl, n-Decyl oder n-Dodecyl handeln. Insbesondere steht R¹ für Methyl oder Isopropyl.

Der C₆-C₂₄-Aryl-Rest steht für einen aromatischen Rest mit 6 bis 24 Gerüstkohlenstoffatomen. Als bevorzugte mono-, bi- oder tricyclische carbocyclische aromatische Reste mit 6 bis 10 Gerüstkohlenstoffatomen seien beispielsweise Phenyl, Biphenyl, Naphthyl, Phenanthrenyl oder Anthracenyl genannt.

In der allgemeinen Formel (D) sind die **Reste R², R³, R⁴ und R⁵** gleich oder verschieden und können Wasserstoff, organische oder anorganische Reste darstellen.

In einer geeigneten Ausführungsform sind R², R³, R⁴, R⁵ gleich oder verschieden und bedeuten Wasserstoff, Halogen, Nitro, CF₃, Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio, Alkylsulfonyl- oder Alkylsulfinyl-Reste darstellen, die alle jeweils optional durch ein oder mehrere Alkyl-, Alkoxy-, Halogen-, Aryl- oder Heteroaryl-Reste substituiert sein können.

Üblicherweise sind R², R³, R⁴, R⁵ gleich oder verschieden und bedeuten Wasserstoff, Halogen, bevorzugt Chlor oder Brom, Nitro, CF₃, C₁-C₃₀-Alkyl, C₃-C₂₀-Cylcoalkyl, C₂-C₂₀-Alkenyl, C₂-C₂₀-Alkinyl, C₆-C₂₄-Aryl, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylamino-, C₁-C₂₀-Alkylthio, C₆-C₂₄-Arylthio, C₁-C₂₀-Alkylsulfonyl oder C₁-C₂₀-Alkylsulfinyl Reste, die alle jeweils optional durch ein oder mehrere C₁-C₃₀-Alkyl-, C₁-C₂₀-Alkoxy-, Halogen-, C₆-C₂₄-Aryl- oder Heteroaryl-Reste substituiert sein können.

In einer besonders bewährten Ausführungsform sind R², R³, R⁴, R⁵ sind gleich oder verschieden und stehen für Nitro, geradkettige oder verzweigte C₁-C₃₀-Alkyl-, C₅-C₂₀-Cylcoalkyl-, geradkettige oder verzweigte C₁-C₂₀-Alkoxy-Reste oder C₆-C₂₄-Aryl-Reste, bevorzugt Phenyl oder Naphthyl. Die C₁-C₃₀-Alkyl-Reste sowie C₁-C₂₀-Alkoxy-Reste können optional durch ein oder mehrere Doppel- oder Dreifachbindungen oder auch ein oder mehrere Heteroatome, bevorzugt Sauerstoff oder Stickstoff, unterbrochen sein.

Ferner können auch zwei oder mehr der Reste R**²,** R³, R⁴ oder R⁵ über aliphatische oder aromatische Strukturen verbrückt sein. R³ und R⁴ können beispielsweise unter Einbeziehung der Kohlenstoff-Atome, an die sie im Phenylring der Formel (D) gebunden sind, einen ankondensierten Phenylring bilden, so dass insgesamt eine Naphthylstruktur resultiert.

In der allgemeinen Formel (D) bedeutet der **Rest R⁶** Wasserstoff, einen Alkyl-, Alkenyl-, Alkinyl- oder einen Aryl-Rest, bevorzugt Wasserstoff, einen C₁-C₃₀-Alkyl, einen C₂-C₂₀-Alkenyl-, einen C₂-C₂₀-Alkinyl oder einen C₆-C₂₄-Aryl-Rest. Besonders bevorzugt ist R⁶ Wasserstoff.

Ferner geeignet sind **Katalysatoren der allgemeinen Formel (D1),** 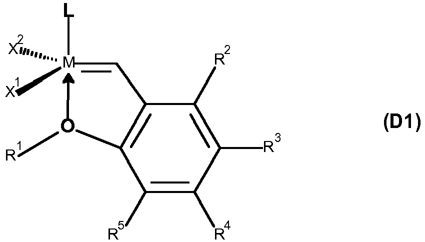 worin M, L, X¹, X², R¹, R², R³, R⁴ und R⁵ die für die allgemeine Formel (D) genannten allgemeinen, bevorzugten und besonders bevorzugten Bedeutungen besitzen können.

Die Katalysatoren der allgemeinen Formel (D1) sind z.B. aus US 2002/0107138 A1 (Hoveyda et al.) prinzipiell bekannt und können nach dort angegebenen Herstellverfahren erhalten werden.

Besonders geeignet sind Katalysatoren der allgemeinen Formel (D1), wobei
- M: Ruthenium darstellt,
- X¹ und X²: gleichzeitig Halogen, insbesondere gleichzeitig Chlor bedeuten,
- R¹: für einen geradkettigen oder verzweigten C₁-C₁₂ Alkylrest steht,
- R², R³, R⁴, R⁵: die für die allgemeine Formel (D) genannten allgemeinen und bevorzugten Bedeutungen besitzen und
- L: die für die allgemeine Formel (D) genannten allgemeinen und bevorzugten Bedeutungen besitzt.

Insbesondere geeignet sind Katalysatoren der allgemeinen Formel (D1), wobei
- M: Ruthenium darstellt,
- X¹ und X²: gleichzeitig Chlor bedeuten,
- R¹: für einen Isopropyl-Rest steht,
- R², R³, R⁴, R⁵: alle Wasserstoff bedeuten und
- L: einen gegebenenfalls substituierten Imidazolidin-Rest der Formeln (4a) oder (4b) darstellt, 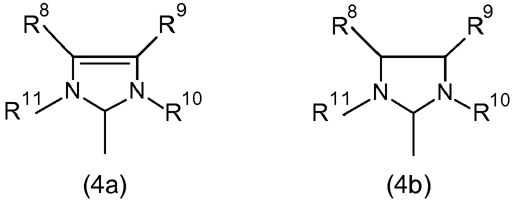
worin
- R⁸, R⁹, R¹⁰, R¹¹: gleich oder verschieden sind und Wasserstoff, geradkettiges oder verzweigtes C₁-C₃₀-Alkyl, C₃-C₂₀-Cylcoalkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylthio, C₆-C₂₄-Arylthio, C₁-C₂₀-Alkylsulfonyl, C₁-C₂₀-Alkylsulfonat, C₆-C₂₄-Arylsulfonat oder C₁-C₂₀-Alkylsulfinyl bedeuten, wobei die vorgenannten Reste jeweils durch einen oder mehrere Substituenten, vorzugsweise geradkettiges oder verzweigtes C₁-C₁₀-Alkyl, C₃-C₈-Cycloalkyl, C₁-C₁₀-Alkoxy oder C₆-C₂₄-Aryl substituiert sein können, wobei auch diese vorgenannten Substituenten wiederum durch ein oder mehrere Reste, vorzugsweise ausgewählt aus der Gruppe Halogen, insbesondere Chlor oder Brom, C₁-C₅-Alkyl, C₁-C₅-Alkoxy und Phenyl substituiert sein können.

Ganz besonders geeignet ist ein Katalysator, der unter die allgemeine Strukturformel (D1) fällt und die Formel (9) besitzt, wobei Mes jeweils für 2,4,6-Trimethylphenyl steht.

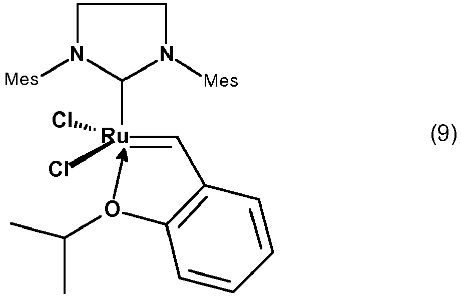

Dieser Katalysator (9) wird in der Literatur auch als "Hoveyda-Katalysator" bezeichnet.

Weiterhin geeignete Katalysatoren sind solche, die unter die allgemeine Strukturformel (D1) fallen und die Formeln (10), (11), (12), (13), (14), (15), (16) oder (17) besitzen, wobei Mes jeweils 2,4,6-Trimethylphenyl bedeutet.

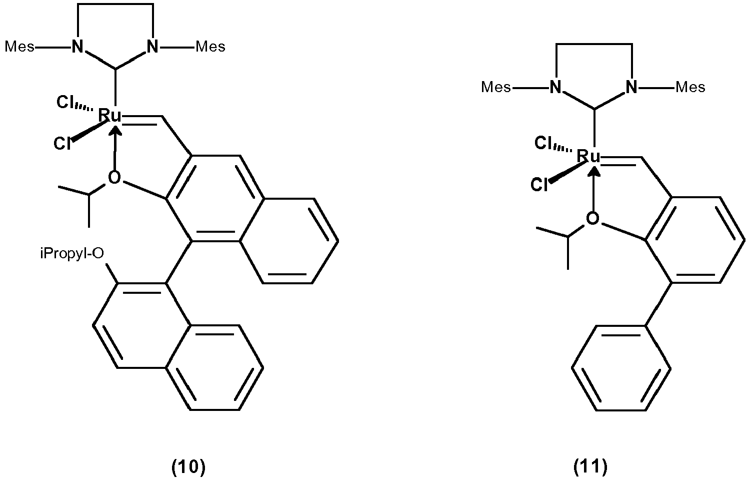

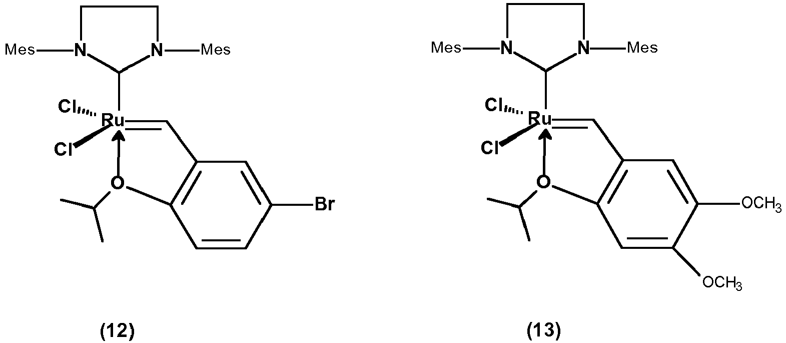

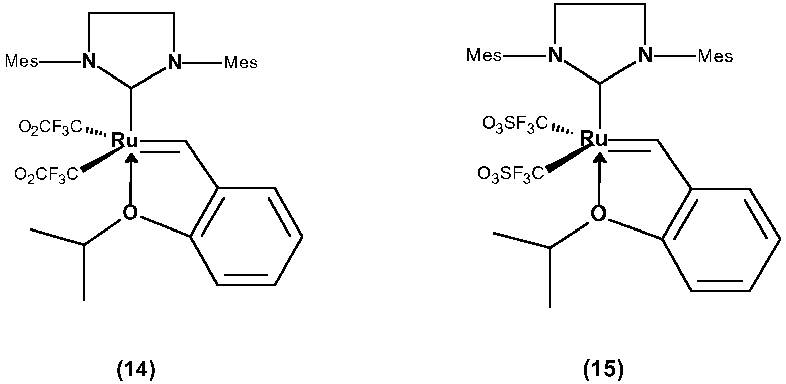

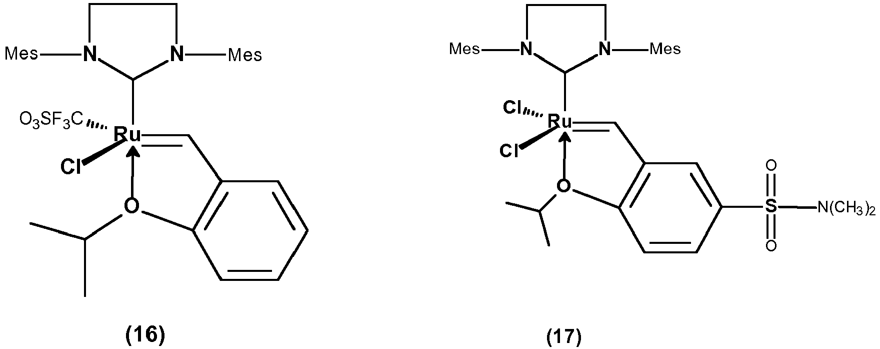

Geeignet ist weiterhin ein Katalysator der allgemeinen Formel (D2), 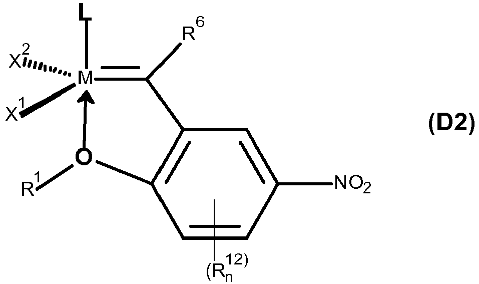 worin
- M, L, X¹, X², R¹ und R⁶: die für die Formel (D) genannten allgemeinen und bevorzugten Bedeutungen haben,
- R¹²: gleich oder verschieden sind und die für R², R³**,** R⁴ und R⁵ in Formel (D) genannten allgemeinen und bevorzugten Bedeutungen, ausgenommen Wasserstoff, besitzen und
- n: gleich 0, 1, 2 oder 3 ist.

Die Katalysatoren der allgemeinen Formel (D2) sind beispielsweise aus WO-A-2004/035596 (Grela) prinzipiell bekannt und können nach dort angegebenen Herstellverfahren erhalten werden.

Besonders geeignet sind Katalysatoren der allgemeinen Formel (D2), worin
- M: Ruthenium darstellt,
- X¹ und X²: gleichzeitig Halogen, insbesondere gleichzeitig Chlor bedeuten,
- R¹: für einen geradkettigen oder verzweigten C₁-C₁₂ Alkylrest steht,
- R¹²: die für die allgemeine Formel (D2) genannten Bedeutungen besitzt,
- n: gleich 0, 1, 2 oder 3 ist,
- R⁶: Wasserstoff bedeutet und
- L: die für die allgemeine Formel (D) genannten Bedeutungen besitzt.

Insbesondere geeignet sind Katalysatoren der allgemeinen Formel (D2), worin
- M: Ruthenium darstellt,
- X¹ und X²: gleichzeitig Chlor bedeuten,
- R¹: für einen Isopropyl-Rest steht,
- n: gleich 0 ist und
- L: einen gegebenenfalls substituierten Imidazolidin-Rest der Formeln (4a) oder (4b) darstellt, worin R⁸, R⁹, R¹⁰, R¹¹ gleich oder verschieden sind und die für die insbesondere bevorzugten Katalysatoren der allgemeinen Formel (D1) genannten Bedeutungen besitzen.

Besonders geeignet sind Katalysatoren der nachfolgenden Strukturen (18) ("Grela-Katalysator") sowie (19), wobei Mes jeweils für 2,4,6-Trimethylphenyl steht.

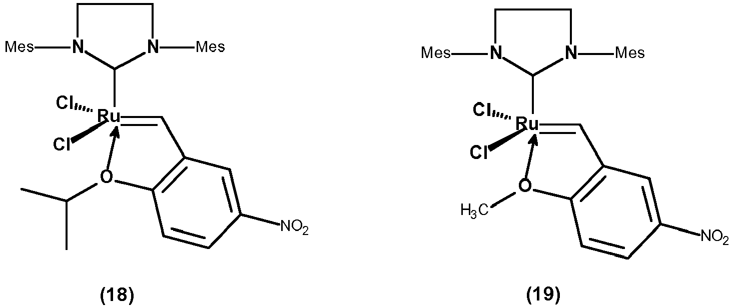

Geeignet ist auch ein dendritisch aufgebauter **Katalysator der allgemeinen Formel (D3),** 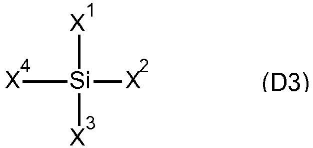 worin X¹, X², X³ und X⁴ jeweils eine Struktur der allgemeinen Formel (20) aufweisen, die über die rechts dargestellte Methylengruppe an das Silicium der Formel (D3) angebunden ist und 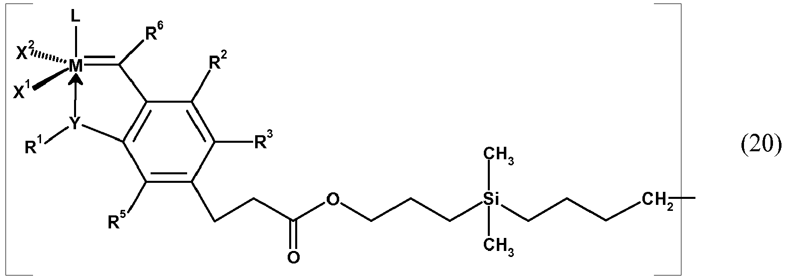 worin
- M, L, X¹, X², R¹, R², R³, R⁵ und R⁶: die für die allgemeine Formel (D) genannten allgemeinen und bevorzugten Bedeutungen besitzen können.

Die Katalysatoren der allgemeinen Formel (D3) sind aus US 2002/0107138 A1 bekannt und gemäß den dort gemachten Angaben herstellbar.

Geeignet ist auch ein Katalysator der Formel (D4), 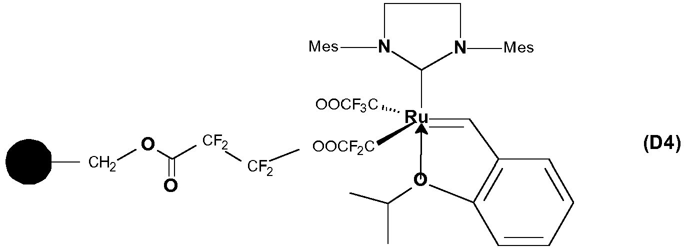 worin das Symbol ● für einen Träger steht.

Bevorzugt handelt es sich bei dem Träger um ein Poly(styroldivinylbenzol)-Copolymer (PS-DVB). Die Katalysatoren gemäß Formel (D4) sind aus Chem. Eur. J. 2004 10, 777-784 prinzipiell bekannt und nach dort beschriebenen Herstellmethoden erhältlich.

Alle vorgenannten Katalysatoren des Typs (D), (D1), (D2), (D3) und (D4) können entweder als solche in der Hydrierreaktion eingesetzt werden oder aber auch auf einem festen Träger aufgebracht und immobilisiert werden. Als feste Phasen bzw. Träger sind solche Materialien geeignet, die einerseits inert gegenüber dem Reaktionsgemisch der Metathese sind und zum anderen die Aktivität des Katalysators nicht beeinträchtigen. Einsetzbar sind zur Immobilisierung des Katalysators beispielsweise Metalle, Glas, Polymere, Keramik, organische Polymerkügelchen oder auch anorganische Sol-Gele, Ruß, Kieselsäure, Silikate, Calciumcarbonat und Bariumsulfat.

Geeignet sind auch **Katalysatoren der allgemeinen Formel (E),** 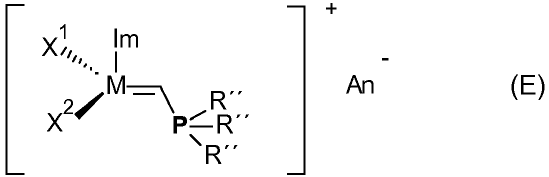 wobei
- M: Ruthenium oder Osmium bedeutet,
- X¹ und X²: gleich oder verschieden sind und anionische Liganden darstellen,
- R": gleich oder verschieden sind und organische Reste darstellen,
- Im: einen gegebenenfalls substituierten Imidazolin oder Imidazolidinrest darstellt und
- An: ein Anion darstellt.

Die Katalysatoren der allgemeinen Formel (E) sind prinzipiell bekannt (siehe z.B. Angew. Chem. Int. Ed. 2004,43, 6161-6165).

X¹ und X² können in der allgemeinen Formel (E) die gleichen allgemeinen, bevorzugten und besonders bevorzugten Bedeutungen besitzen wie in den Formeln (C) und (D).

Der Im-Rest weist üblicherweise eine Struktur der allgemeinen Formeln (4a) oder (4b) auf, die bereits für den Katalysator-Typ der Formeln (C) und (D) genannt wurden und kann auch alle dort als bevorzugt genannten Strukturen, insbesondere die der Formeln (5a)-(5f) aufweisen.

Die Reste R" sind in der allgemeinen Formel (E) gleich oder verschieden und bedeuten einen geradkettigen oder verzweigten C₁-C₃₀-Alkyl-, C₅-C₃₀-Cylcoalkyl- oder Aryl-Rest, wobei die C₁-C₃₀-Alkylreste gegebenenfalls durch ein oder mehrere Doppel- oder Dreifachbindungen oder auch ein oder mehrere Heteroatome, bevorzugt Sauerstoff oder Stickstoff, unterbrochen sein können.

**Aryl** umfasst einen aromatischen Rest mit 6 bis 24 Gerüstkohlenstoffatomen. Als bevorzugte mono-, bi- oder tricyclische carbocyclische aromatische Reste mit 6 bis 10 Gerüstkohlenstoffatomen seien beispielsweise Phenyl, Biphenyl, Naphthyl, Phenanthrenyl oder Anthracenyl genannt.

Bevorzugt sind die Reste R" in der allgemeinen Formel (E) gleich und bedeuten Phenyl, Cyclohexyl, Cyclopentyl, Isopropyl, o-Tolyl, o-Xylyl oder Mesityl.

Geeignet sind weiterhin **Katalysatoren der allgemeinen Formel (F),** 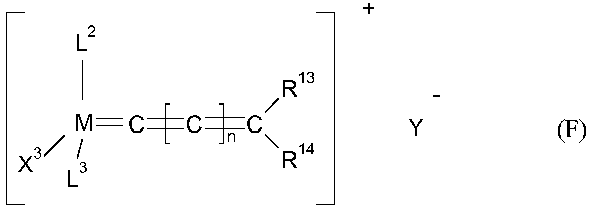 worin
- M: Ruthenium oder Osmium bedeutet,
- R¹³ und R¹⁴: unabhängig voneinander Wasserstoff, C₁-C₂₀-Alkyl, C₂-C₂₀-Alkenyl, C₂-C₂₀ Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylthio, C₁-C₂₀ -Alkylsulfonyl oder C₁-C₂₀ Alkylsulfinyl bedeuten,
- X³: ein anionischer Ligand ist,
- L2: ein neutraler π-gebundener Ligand ist, unabhängig davon, ob mono- oder polycyclisch,
- L³: einen Ligand aus der Gruppe der Phosphane, sulfonierten Phosphane, fluorierten Phosphane, funktionalisierten Phosphane mit bis zu drei Aminoalkyl-, Ammoniumalkyl-, Alkoxyalkyl-, Alkoxycarbonylalkyl-, Hydrocarbonylalkyl-, Hydroxyalkyl- oder Ketoalkyl-Gruppen, Phosphite, Phosphinite, Phosphonite, Phosphinamine, Arsane, Stibane, Ether, Amine, Amide, Imine, Sulfoxide, Thioether und Pyridine darstellt,
- Y⁻: ein nicht-koordinierendes Anion ist und
- n: 0, 1, 2, 3, 4 oder 5 ist.

Geeignet sind weiterhin **Katalysatoren der allgemeinen Formel (G),** 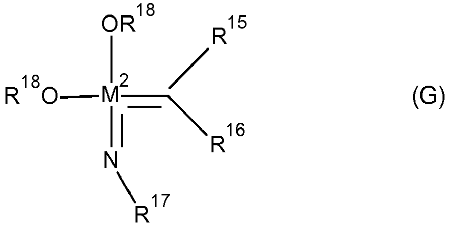 worin
- M²: Molybdän bedeutet,
- R¹⁵ und R¹⁶: gleich oder verschieden sind und Wasserstoff, C₁-C₂₀-Alkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylthio, C₁-C₂₀-Alkylsulfonyl oder C₁-C₂₀ Alkylsulfinyl bedeuten,
- R¹⁷ and R¹⁸: gleich oder verschieden sind und einen substituierten oder einen halogensubstituierten C₁-C₂₀-Alkyl, C₆-C₂₄-Aryl, C₆-C₃₀-Aralkyl-Rest oder Silikonenthaltende Analoga davon darstellen.

Geeignet sind weiterhin **Katalysatoren der allgemeinen Formel (H),** 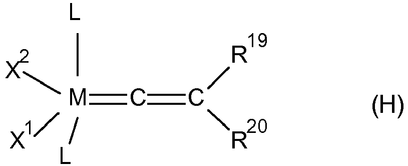 worin
- M: Ruthenium oder Osmium bedeutet,
- X¹ und X²: gleich oder verschieden sind und anionische Liganden darstellen, die alle in den allgemeinen Formeln (C) und (D) genannte für X¹ und X² genannte Bedeutungen annehmen können,
- L: gleiche oder verschiedene Liganden darstellt, die alle in den allgemeinen Formeln (C) und (D) genannten Bedeutungen von L annehmen können,
- R¹⁹ and R²⁰: gleich oder verschieden sind und Wasserstoff oder substituiertes oder unsubstituiertes Alkyl bedeuten.

Geeignet sind weiterhin **Katalysatoren der allgemeinen Formeln (K), (N) oder (Q),** 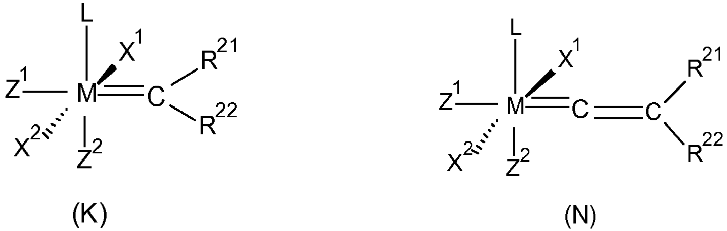 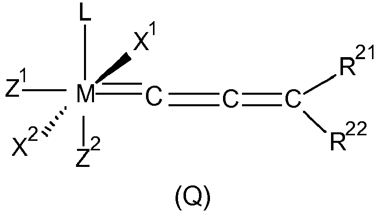 wobei
- M: Osmium oder Ruthenium bedeutet,
- X¹ und X²: gleich oder verschieden und zwei Liganden, bevorzugt anionische Liganden, sind,
- L: einen Liganden, bevorzugt einen neutralen Elektronen-Donor darstellt,
- Z¹ und Z²: gleich oder verschieden sind und neutrale Elektronen-Donoren darstellen,
- R²¹ und R²²: unabhängig voneinander H, Alkyl, Cycloalkyl, Alkenyl, Alkinyl, Aryl, Carboxylat, Alkoxy, Alkenyloxy, Alkinyloxy, Aryloxy, Alkoxycarbonyl, Alkylamino, Alkylthio, Alkylsulfonyl oder Alkylsulfinyl bedeuten, die jeweils durch ein oder mehrere Reste ausgewählt aus Alkyl, Halogen, Alkoxy, Aryl oder Heteroaryl substituiert sind.

Die Katalysatoren der allgemeinen Formeln (K), (N) und (Q) sind prinzipiell bekannt, so z.B. aus WO 2003/011455 A1, WO 2003/087167 A2, Organometallics 2001, 20, 5314 und Angew. Chem. Int. Ed. 2002, 41, 4038. Die Katalysatoren sind kommerziell verfügbar oder aber nach den in den vorgenannten Literaturstellen angegebenen Herstellungsmethoden synthetisierbar.

In den Katalysatoren der allgemeinen Formeln (K), (N) und (Q) sind **Z¹ und Z²** gleich oder verschieden sind und stellen neutrale Elektronen-Donoren dar. Diese Liganden sind üblicherweise schwach koordinierend. Typischerweise handelt es sich um optional substituierte heterocyclische Gruppen. Hierbei kann es sich um fünf oder sechsgliedrige monocyclische Gruppen mit 1 bis 4, bevorzugterweise 1 bis 3 und besonders bevorzugt 1 oder 2 Heteroatomen handeln oder um zwei oder polycyclische Strukturen aus 2, 3, 4 oder 5 solcher fünf oder sechsgliedriger monocyclischer Gruppen, wobei alle jeweils vorgenannten Gruppen optional durch ein oder mehrere Alkyl, bevorzugt C₁-C₁₀-Alkyl, Cycloalkyl, bevorzugt C₃-C₈-Cycloaₗkyl, Alkoxy, bevorzugt C₁-C₁₀-Alkoxy, Halogen, bevorzugt Chlor oder Brom, Aryl, bevorzugt C₆-C₂₄-Aryl, oder Heteroaryl, bevorzugt C₅-C₂₃ Heteroaryl-Reste, die jeweils erneut durch ein oder mehrere Gruppen, bevorzugt ausgewählt aus der Gruppe bestehend aus Halogen, inbesondere Chlor oder Brom, C₁-C₅-Alkyl, C₁-C₅-Alkoxy und Phenyl substituiert sein können.

Beispiele für Z¹ und Z² umfassen Stickstoff enthaltende Heterocyclen wie Pyridine, Pyridazine, Bipyridine, Pyrimidine, Pyrazine, Pyrazolidine, Pyrrolidine, Piperazine, Indazole, Quinoline, Purine, Acridine, Bisimidazole, Picolylimine, Imidazolidine und Pyrrole.

Z¹ und Z² können auch miteinander verbrückt sein unter Ausbildung einer cyclischen Struktur. In diesem Fall handelt es sich bei Z¹ und Z² um einen einzigen zweizähnigen Liganden.

In den Katalysatoren der allgemeinen Formeln (K), (N) und (Q) kann L die gleichen allgemeinen, bevorzugten und besonders bevorzugten Bedeutungen annehmen wie L in den allgemeinen Formeln (C) und (D).

In den Katalysatoren der allgemeinen Formeln (K), (N) und (Q) sind **R²¹ und R²²** gleich oder verschieden und bedeuten Alkyl, bevorzugt C₁-C₃₀-Alkyl, besonders bevorzugt C₁-C₂₀-Alkyl, Cycloalkyl, bevorzugt C₃-C₂₀-Cycloalkyl, besonders bevorzugt C₃-C₈-Cycloalkyl, Alkenyl, bevorzugt C₂-C₂₀-Alkenyl, besonders bevorzugt C₂-C₁₆-Alkenyl, Alkinyl, bevorzugt C₂-C₂₀-Alkinyl, besonders bevorzugt C₂-C₁₆-Alkinyl, Aryl, bevorzugt C₆-C₂₄-Aryl, Carboxylat, bevorzugt C₁-C₂₀-Carboxylat, Alkoxy, bevorzugt C₁-C₂₀-Alkoxy, Alkenyloxy, bevorzugt C₂-C₂₀-Alkenyloxy, Alkinyloxy, bevorzugt C₂-C₂₀-Alkynyloxy, Aryloxy, bevorzugt C₆-C₂₄-Aryloxy, Alkoxycarbonyl, bevorzugt C₂-C₂₀-Alkoxycarbonyl, Alkylamino, bevorzugt C₁-C₃₀-Alkylamino, Alkylthio, bevorzugt C₁-C₃₀-Alkylthio, Arylthio, bevorzugt C₆-C₂₄-Arylthio, Alkylsulfonyl, bevorzugt C₁-C₂₀-Alkylsulphonyl, oder Alkylsulfinyl, bevorzugt C₁-C₂₀-Alkylsulphinyl, wobei die vorgenannten Substituenten durch einen oder mehrere Alkyl, Halogen, Alkoxy, Aryl oder Heteroaryl Reste substituiert sein können.

In den Katalysatoren der allgemeinen Formeln (K), (N) und (Q) sind **X¹ und X²** gleich oder verschieden und können die gleichen allgemeinen, bevorzugten und besonders bevorzugten Bedeutungen haben wie zuvor für X¹ und X² in der allgemeinen Formel (C) angegeben.

Besonders geeignet sind Katalysatoren der allgemeinen Formeln (K), (N) und (Q), worin
- M: Ruthenium ist,
- X¹ und X²: beide Halogen, insbesondere Chlor darstellen,
- R¹ und R²: gleich oder verschieden sind und fünf- oder sechsgliedrige monocyclische Gruppen mit 1 bis 4, bevorzugterweise 1 bis 3 und besonders bevorzugt 1 oder 2 Heteroatomen darstellen oder zwei- oder polycyclische Strukturen aus 2, 3, 4 oder 5 solcher fünf- oder sechsgliedriger monocyclischer Gruppen, wobei alle jeweils vorgenannten Gruppen durch ein oder mehrere Alkyl, bevorzugt C₁-C₁₀-Alkyl, Cycloalkyl, bevorzugt C₃-C₈-Cycloalkyl, Alkoxy, bevorzugt C₁-C₁₀-Alkoxy, Halogen, bevorzugt Chlor oder Brom, Aryl, bevorzugt C₆-C₂₄-Aryl, oder Heteroaryl, bevorzugt C₅-C₂₃ Heteroaryl-Reste substituiert sein können,
- R²¹ und R²²: gleich oder verschieden sind und C₁-C₃₀-Alkyl C₃-C₂₀-Cycloalkyl, C₂-C₂₀-Alkenyl, C₂-C₂₀-Alkynyl, C₆-C₂₄-Aryl, C₁-C₂₀-Carboxylat, C₁-C₂₀-Alkoxy, C₂-C₂₀-Alkenyloxy, C₂-C₂₀-Alkynyloxy, C₆-C₂₄-Aryloxy, C₂-C₂₀-Alkoxycarbonyl, C₁-C₃₀-Alkylamino, C₁-C₃₀-Alkylthio, C₆-C₂₄-Arylthio, C₁-C₂₀-Alkylsulphonyl, C₁-C₂₀-Alkylsulphinyl darstellen, und
- L: eine Struktur der bereits zuvor beschriebenen allgemeinen Formeln (4a) oder (4b), inbesondere der Formeln (5a) bis (5f) besitzt.

Ganz besonders geeignet ist ein Katalysator, der unter die allgemeine Formel (K) fällt und die Struktur (21) besitzt, 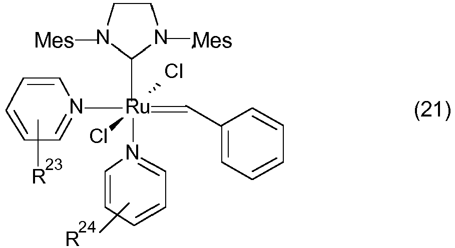 worin
- R²³ und R²⁴: gleich oder verschieden sind und H, Halogen, geradkettiges oder verzweigtes C₁-C₂₀-Alkyl, C₁-C₂₀-Heteroalkyl, C₁-C₁₀-Haloalkyl, C₁-C₁₀-Alkoxy, C₆-C₂₄-Aryl, bevorzugt Phenyl, Formyl, Nitro, Stickstoff-Heterocyclen, bevorzugt Pyridin, Piperidin und Pyrazin, Carboxy, Alkylcarbonyl, Halocarbonyl, Carbamoyl, Thiocarbomoyl, Carbamido, Thioformyl, Amino, Dialkylamino, Trialkylsilyl und Trialkoxysilyl bedeuten.

Die vorgenannten Reste C₁-C₂₀-Alkyl, C₁-C₂₀-Heteroalkyl, C₁-C₁₀-Haloalkyl, C₁-C₁₀-Alkoxy, C₆-C₂₄-Aryl, bevorzugt Phenyl, Formyl, Nitro, Stickstoff-Heterocyclen, bevorzugt Pyridin, Piperidin und Pyrazin, Carboxy, Alkylcarbonyl, Halocarbonyl, Carbamoyl, Thiocarbomoyl, Carbamido, Thioformyl, Amino, Trialkylsilyl und Trialkoxysilyl können jeweils wieder durch ein oder mehrere Reste Halogen, bevorzugt Fluor, Chlor oder Brom, C₁-C₅-Alkyl, C₁-C₅-Alkoxy oder Phenyl substituiert sein.

Ganz besonders geeignet ist ein Katalysator, bei dem R²³ und R²⁴ Wasserstoff bedeuten ("Grubbs III-Katalysator").

Ganz besonders geeignet sind ferner Katalysatoren der Strukturen (22a) oder (22b), wobei R²³ und R²⁴ die gleichen Bedeutungen besitzen wie in der Formel (21) angegeben, außer Wasserstoff.

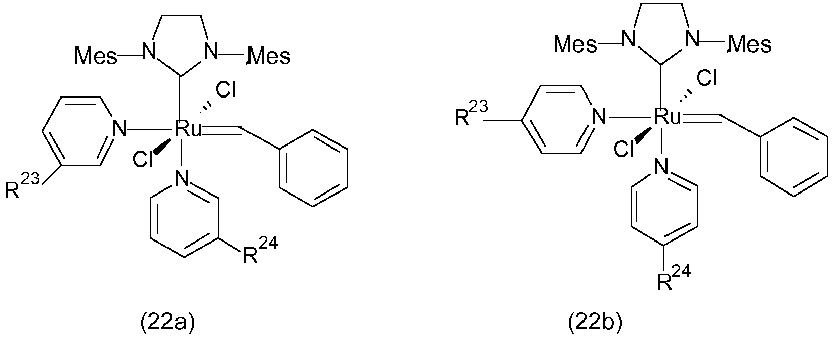

Geeignete Katalysatoren, die unter die allgemeinen Formeln (K), (N) und (Q) fallen, besitzen die nachfolgenden Strukturformen (23) bis (34), wobei Mes für 2,4,6-Trimethylphenyl steht.

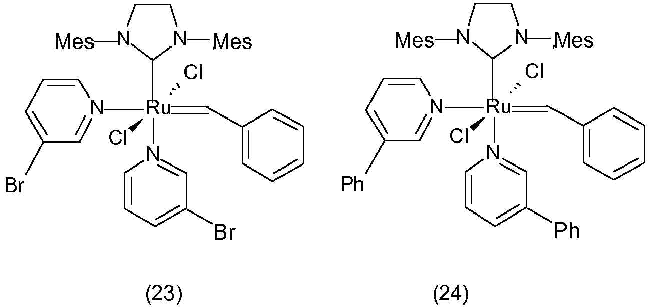

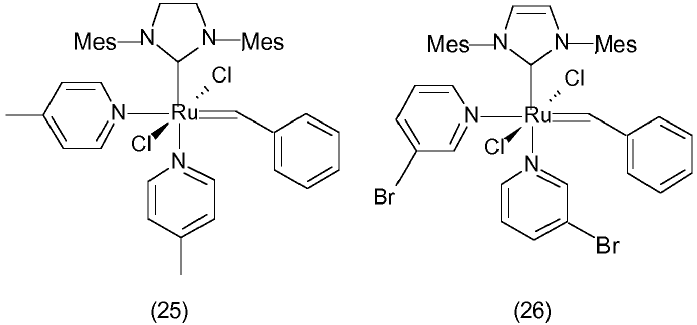

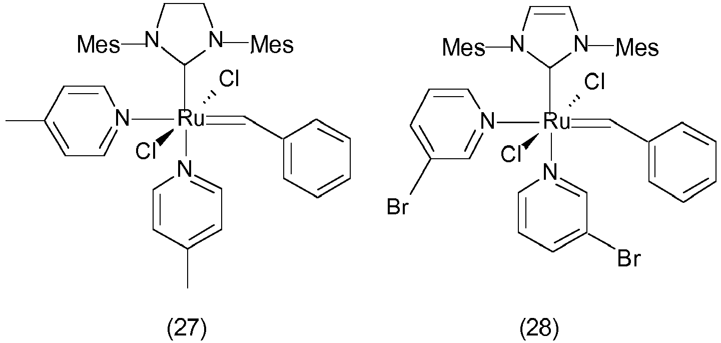

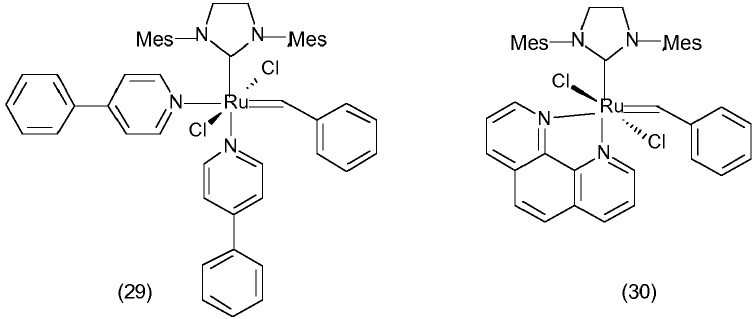

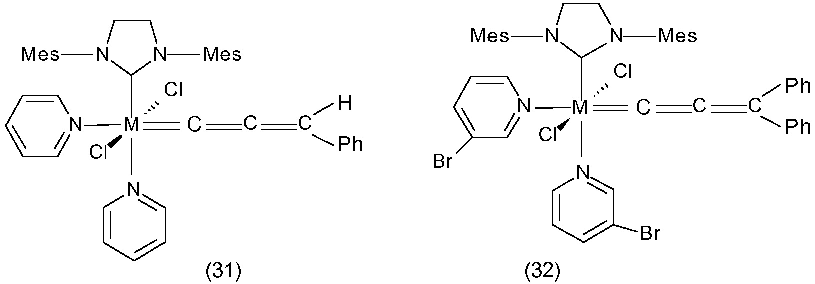

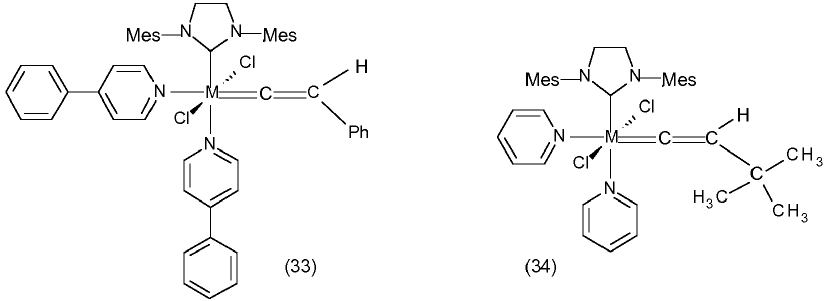

Geeignet sind ferner **Katalysatoren (R),** die das allgemeine Strukturelement (R1) aufweisen, wobei das mit einem "*" gekennzeichnete Kohlenstoff-Atom über eine oder mehrere Doppelbindungen an das Katalysator-Grundgerüst gebunden ist, 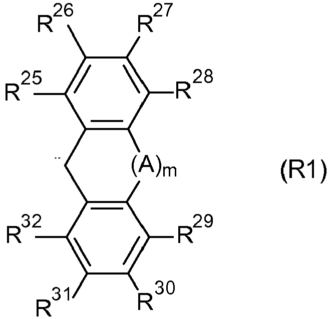 und worin
- R²⁵-R³²: gleich oder verschieden sind und Wasserstoff, Halogen, Hydroxyl, Aldehyd, Keto, Thiol, CF₃, Nitro, Nitroso, Cyano, Thiocyano, Isocyanato, Carbodiimid, Carbamat, Thiocarbamat, Dithiocarbamat, Amino, Amido, Imino, Silyl, Sulfonat (-SO₃⁻), -OSO₃⁻,-PO₃⁻ oder OPO₃⁻ bedeuten oder für Alkyl-, Cycloalkyl-, Alkenyl-, Alkinyl-, Aryl-, Carboxylat-, Alkoxy-, Alkenyloxy-, Alkinyloxy-, Aryloxy-, Alkoxycarbonyl-, Alkylamino-, Alkylthio-, Arylthio-, Alkylsulfonyl-, Alkylsulfinyl, Dialkylamino-, Alkylsilyl oder Alkoxysilyl stehen, wobei diese Reste alle jeweils optional durch ein oder mehrere Alkyl-, Halogen-, Alkoxy-, Aryl- oder Heteroaryl-Reste substituiert sein können, oder alternativ jeweils zwei direkt benachbarte Reste aus der Gruppe von R²⁵-R³² unter Einschluss der Ringkohlenstoff-Atome, an die sie gebunden sind, durch Verbrückung eine cyclische Gruppe, bevorzugt ein aromatisches System, ausbilden, oder alternativ R⁸ gegebenenfalls mit einem anderen Liganden des Ruthenium- oder Osmium-Carben-Komplexkatalysators verbrückt ist,
- m: 0 oder 1 ist und
- A: Sauerstoff, Schwefel, C(R³³R³⁴), N-R³⁵, -C(R³⁶)=C(R³⁷)-, -C(R³⁶)(R³⁸)-C(R³⁷)(R³⁹)-bedeutet, worin R³³-R³⁹ gleich oder verschieden sind und jeweils die gleichen Bedeutungen besitzen können wie die Reste R²⁵-R³².

Die erfindungsgemäßen Katalysatoren weisen das Strukturelement der allgemeinen Formel (R1) auf, wobei das mit einem "*" gekennzeichnete Kohlenstoff-Atom über eine oder mehrere Doppelbindungen an das Katalysator-Grundgerüst gebunden ist. Sofern das mit einem "*" gekennzeichnete Kohlenstoff-Atom über zwei oder mehr Doppelbindungen an das Katalysator-Grundgerüst gebunden ist, können diese Doppelbindungen kumuliert oder konjugiert sein.

Derartige Katalysatoren (R) sind in EP-A-2 027 920 beschrieben. Zu den Katalysatoren (R) mit einem Strukturelement der allgemeinen Formel (R1) zählen beispielsweise solche der nachfolgenden **allgemeinen Formeln (R2a) und (R2b),** 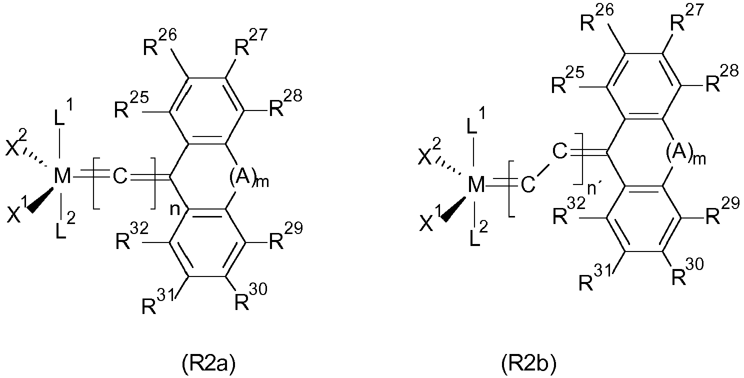 worin
- M: Ruthenium oder Osmium ist,
- X¹ und X²: gleich oder verschieden sind und zwei Liganden, bevorzugt anionische Liganden, darstellen,
- L¹ und L²: gleiche oder verschiedene Liganden, bevorzugt neutrale Elektronen-Donoren darstellen, wobei L² alternativ auch mit dem Rest R⁸ verbrückt sein kann,
- n: 0, 1, 2 oder 3, bevorzugt 0, 1 oder 2, ist,
- n': 1 oder 2, bevorzugt 1 ist, und
- R²⁵-R³²,: m und A die gleichen Bedeutungen besitzen wie in der allgemeinen Formel (R1).

Bei den Katalysatoren der allgemeinen Formel (R2a) ist das Strukturelement der allgemeinen Formel (R1) über eine Doppelbindung (n = 0) oder über 2, 3 oder 4 kumulierte Doppelbindungen (bei n = 1, 2 oder 3) an das Zentralmetall des Komplexkatalysators gebunden. Bei den erfindungsgemäßen Katalysatoren der allgemeinen Formel (R2b) ist das Strukturelement der allgemeinen Formel (R1) über konjugierte Doppelbindungen an das Metall des Komplexkatalysators gebunden. In beiden Fällen befindet sich an dem mit einem "*" gekennzeichneten C-Atom eine Doppelbindung in Richtung Zentralmetall des Komplexkatalysators.

Die Katalysatoren der allgemeinen Formel (R2a) und (R2b) umfassen somit Katalysatoren, bei denen die folgenden **allgemeinen Strukturelemente (R3)-(R9)** 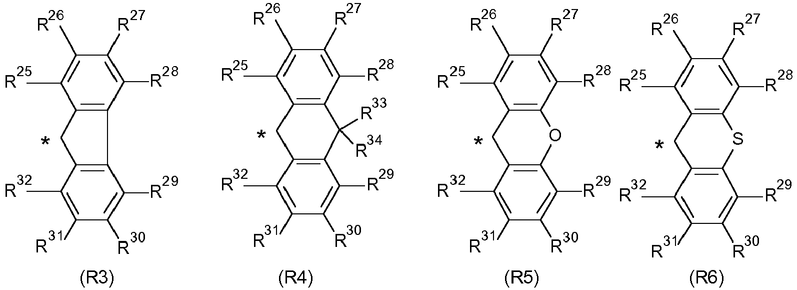 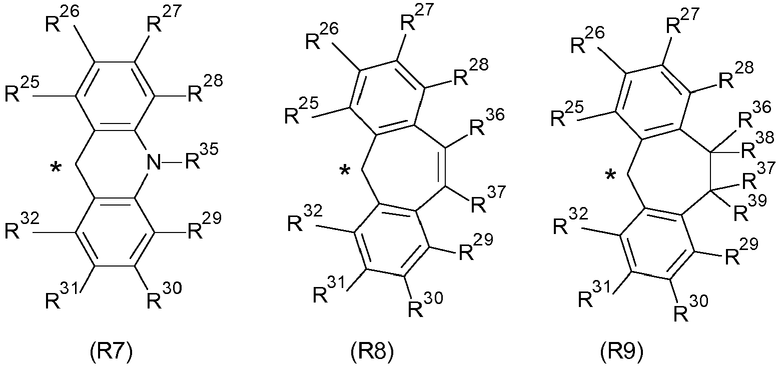 über das mit einem "*" gekennzeichnete C-Atom über ein oder mehrere Doppelbindungen an das Katalysator-Grundgerüst der **allgemeinen Formel (R10a) bzw. (R10b)** 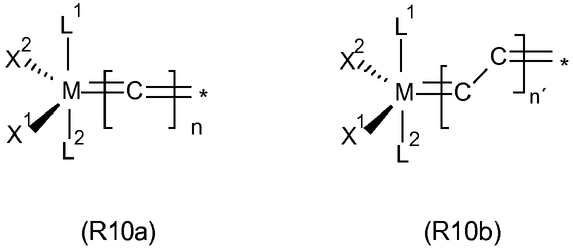 gebunden sind, wobei X¹ und X², L¹ und L², n, n' und R²⁵-R³⁹ die für die allgemeine Formeln (R2a) und (R2b) genannten Bedeutungen besitzen.

Typischerweise sind diese Ruthenium- oder Osmium Carben-Katalysatoren fünffach koordiniert. Im **Strukturelement der allgemeinen Formel (R1)** sind
- R¹⁵-R³²: gleich oder verschieden und bedeuten Wasserstoff, Halogen, Hydroxyl, Aldehyd, Keto, Thiol, CF₃, Nitro, Nitroso, Cyano, Thiocyano, Isocyanato, Carbodiimid, Carbamat, Thiocarbamat, Dithiocarbamat, Amino, Amido, Imino, Silyl, Sulfonat (-SO₃⁻), -OSO₃⁻,-PO₃⁻ oder OPO₃⁻ oder stehen für Alkyl, bevorzugt C₁-C₂₀-Alkyl, insbesondere C₁-C₆-Alkyl, Cycloalkyl, bevorzugt C₃-C₂₀-Cycloalkyl, insbesondere C₃-C₈-Cycloalkyl, Alkenyl, bevorzugt C₂-C₂₀-Alkenyl, Alkinyl, bevorzugt C₂-C₂₀-Alkinyl, Aryl, bevorzugt C₆-C₂₄-Aryl, inbesondere Phenyl, Carboxylat, bevorzugt C₁-C₂₀-Carboxylat, Alkoxy, bevorzugt C₁-C₂₀-Alkoxy, Alkenyloxy, bevorzugt C₂-C₂₀-Alkenyloxy, Alkinyloxy, bevorzugt C₂-C₂₀-Alkinyloxy, Aryloxy, bevorzugt C₆-C₂₄-Aryloxy, Alkoxycarbonyl, bevorzugt C₂-C₂₀-Alkoxycarbonyl, Alkylamino, bevorzugt C₁-C₃₀-Alkylamino, Alkylthio, bevorzugt C₁-C₃₀-Alkylthio, Arylthio, bevorzugt C₆-C₂₄-Arylthio, Alkylsulfonyl, bevorzugt C₁-C₂₀-Alkylsulfonyl, Alkylsulfinyl, bevorzugt C₁-C₂₀-Alkylsulfinyl, Dialkylamino-, bevorzugt Di(C₁-C₂₀-alkyl)amino, Alkylsilyl, bevorzugt C₁-C₂₀-Alkylsilyl, oder Alkoxysilyl, bevorzugt C₁-C₂₀-Alkoxysilyl-Reste darstellen, wobei diese Reste alle jeweils optional durch ein oder mehrere Alkyl-, Halogen-, Alkoxy-, Aryl- oder Heteroaryl-Reste substituiert sein können, oder alternativ auch jeweils zwei direkt benachbarte Reste aus der Gruppe von R²⁵-R³² unter Einschluss der Ringkohlenstoff-Atome, an die sie gebunden sind, durch Verbrückung eine cyclische Gruppe, bevorzugt ein aromatisches System, ausbilden können, oder alternativ R⁸ gegebenenfalls mit einem anderen Liganden des Ruthenium- oder Osmium-Carben-Komplexkatalysators verbrückt ist,
- m: ist 0 oder 1 und
- A: bedeutet Sauerstoff, Schwefel, C(R³³)(R³⁴), N-R³⁵, -C(R³⁶)=C(R³⁷)- oder-C(R³⁶)(R³⁸)-C(R³⁷)(R³⁹)-, worin R³³-R³⁹ gleich oder verschieden sind und jeweils die gleichen bevorzugten Bedeutungen besitzen können wie die Reste R¹-R⁸.

**C₁-C₆-Alkyl** steht im **Strukturelement der allgemeinen Formel (R1)** beispielsweise für Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl und n-Hexyl.

**C₃-C₈-Cycloalkyl** steht im **Strukturelement der allgemeinen Formel (R1)** beispielsweise für Cyclopropyl, Cyclobutyl, Cylopentyl, Cyclohexyl, Cycloheptyl und Cyclooctyl.

**C₆-C₂₄-Aryl** umfasst im **Strukturelement der allgemeinen Formel (R1)** einen aromatischen Rest mit 6 bis 24 Gerüstkohlenstoffatomen. Als bevorzugte mono-, bi- oder tricyclische carbocyclische aromatische Reste mit 6 bis 10 Gerüstkohlenstoffatomen seien beispielsweise Phenyl, Biphenyl, Naphthyl, Phenanthrenyl oder Anthracenyl genannt.

Die Reste X**¹** und X² im Strukturelement der allgemeinen Formel **(R1)** besitzen die gleichen allgemeinen, bevorzugten und besonders bevorzugten Bedeutungen, die für Katalysatoren der allgemeinen Formel (C) genannt werden.

In den allgemeinen Formeln (R2a) und (R2b) bzw. analog (R10a) und (R10b) stehen die Reste L¹ und L² für gleiche oder verschiedene Liganden, bevorzugt neutrale Elektronen-Donoren und können die gleichen allgemeinen, bevorzugten und besonders bevorzugten Bedeutungen besitzen, die für die Katalysatoren der allgemeinen Formel (C) genannt werden.

Bevorzugt sind Katalysatoren der allgemeinen Formeln (R2a) oder (R2b) mit einer allgemeinen Struktureinheit (N1), wobei
- M: Ruthenium darstellt,
- X¹ und X²: gleichzeitig Halogen bedeuten,
- n: 0,1 oder 2 ist in der allgemeinen Formel (R2a) bzw.
- n': 1 ist in der allgemeinen Formel (R2b)
- L¹ und L²: gleich oder verschieden sind und die für die allgemeinen Formeln (R2a) und (R2b) genannten allgemeinen oder bevorzugten Bedeutungen besitzen,
- R²⁵-R³²: gleich oder verschieden sind und die für die allgemeinen Formeln (R2a) und (R2b) genannten allgemeinen oder bevorzugten Bedeutungen besitzen,
- m: entweder 0 oder 1 ist,
und, wenn m = 1 ist
- A: für Sauerstoff, Schwefel, C(C₁-C₁₀-Alkyl)₂, -C(C₁-C₁₀-Alkyl)₂-C(C₁-C₁₀-Alkyl)₂-, -C(C₁-C₁₀-Alkyl)=C(C₁-C₁₀-Alkyl)- oder -N(C₁-C₁₀-Alkyl) steht.

Ganz besonders bevorzugt sind Katalysatoren der Formeln (R2a) oder (R2b) mit einer allgemeinen Struktureinheit (R1), wobei
- M: Ruthenium darstellt,
- X¹ und X²: beide Chlor bedeuten,
- n: 0,1 oder 2 ist in der allgemeinen Formel (R2a) bzw.
- n': 1 ist in der allgemeinen Formel (R2b)
- L¹: einen Imidazolidin-Rest der Formeln (5a) bis (5f) darstellt,
- L²: einen sulfonierten Phosphan-, Phosphat-, Phosphinit-, Phosphonit-, Arsan-, Stiban-, Ether-, Amin-, Amid-, Sulfoxid-, Carboxyl-, Nitrosyl-, Pyridin-Rest, einen Imidazolin- oder Imidazolidin-Rest der Formeln (5a) bis (5f) oder einen Phosphan-Liganden, insbesondere PPh₃, P(p-Tol)₃, P(o-Tol)₃, PPh(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na)₃, P(iso-Propyl)₃, P(CHCH₃(CH₂CH₃))₃, P(Cyclopentyl)₃, P(Cyclohexyl)₃, P(Neopentyl)₃ und P(Neophenyl)₃ darstellt,
- R²⁵-R³²: die für die allgemeinen Formeln (R2a) und (R2b) genannten allgemeinen oder bevorzugten Bedeutungen besitzen,
- m: entweder 0 oder 1 ist,
und, wenn m = 1 ist
- A: für Sauerstoff, Schwefel, C(C₁-C₁₀-Alkyl)₂, -C(C₁-C₁₀-Alkyl)₂-C(C₁-C₁₀-Alkyl)₂-, -C(C₁-C₁₀-Alkyl)=C(C₁-C₁₀-Alkyl)- oder-N(C₁-C₁₀-Alkyl) steht.

Für den Fall, dass der Rest R²⁵ mit einem anderen Liganden des Katalysators der Formel R verbrückt ist, ergeben sich beispielsweise für die Katalysatoren der allgemeinen Formeln (R2a) und (R2b) die folgenden Strukturen der allgemeinen Formeln (R13a) und (R13b) 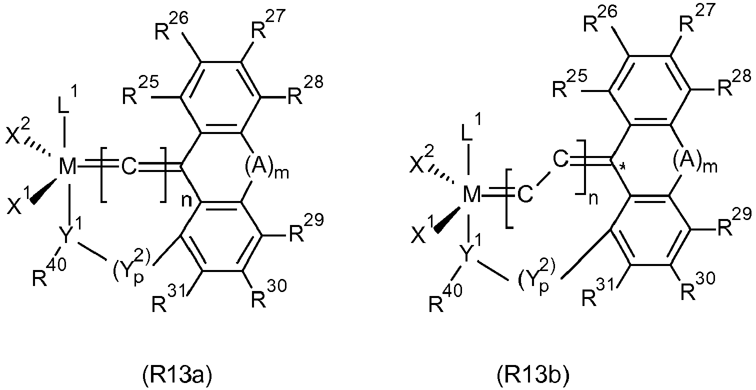 worin
- Y¹: Sauerstoff, Schwefel, einen Rest N-R⁴¹ oder einen Rest P-R⁴¹ bedeutet, wobei R⁴¹ die nachfolgend genannten Bedeutungen besitzt,
- R⁴⁰ und R⁴¹: gleich oder verschieden sind und einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest darstellen, die alle jeweils optional durch ein oder mehrere Alkyl-, Halogen-, Alkoxy-, Aryl- oder Heteroaryl-Reste substituiert sein können,
- p: 0 oder 1 ist und
- Y²: wenn p = 1 ist, für -(CH₂)ᵣ- mit r = 1, 2 oder 3, -C(=O)-CH₂-, -C(=O)-, -N=CH-, -N(H)-C(=O)- oder aber alternativ die gesamte Struktureinheit "-Y¹ (R⁴⁰)- (Y²)ₚ-" für (-N(R⁴⁰)=CH-CH₂-), (-N(R⁴⁰,R⁴¹)=CH-CH₂-), steht und
wobei M, X¹ , X², L¹, R²⁵-R³², A, m und n die gleichen Bedeutungen besitzen wie in den allgemeinen Formeln (R10a) und (R10b).

Als **Beispiele für Katalysatoren der allgemeinen Formel (R)** seien die folgenden Strukturen (35) bis (45) genannt:

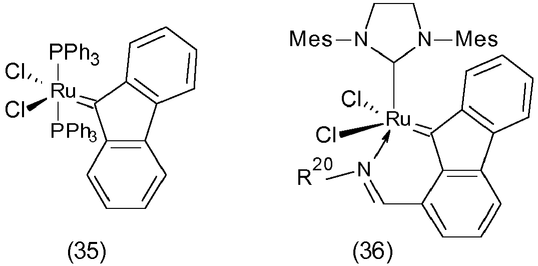

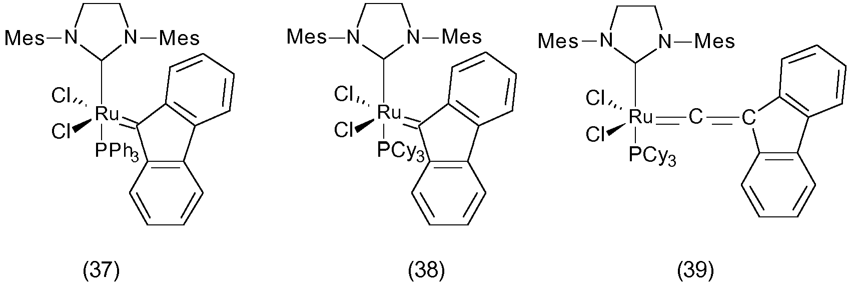

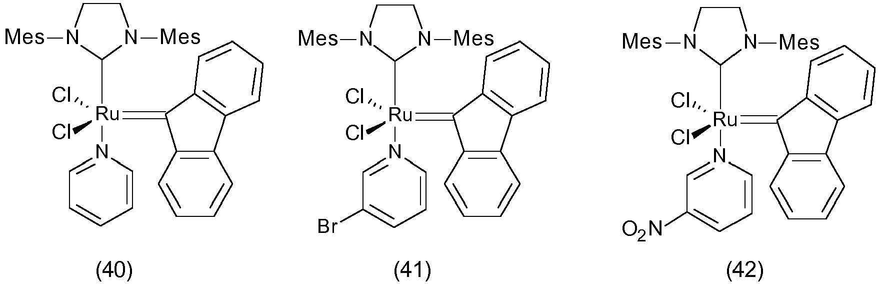

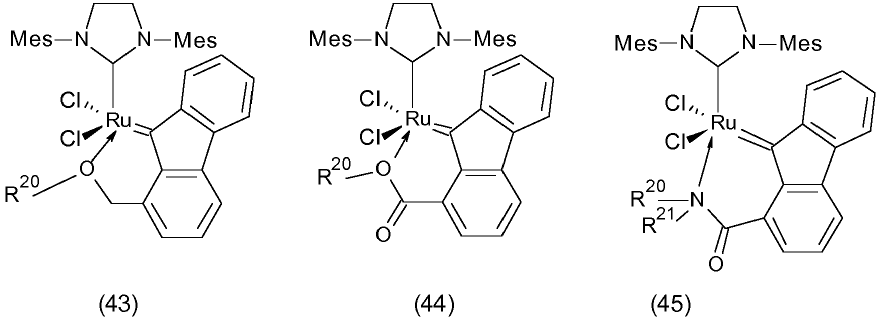

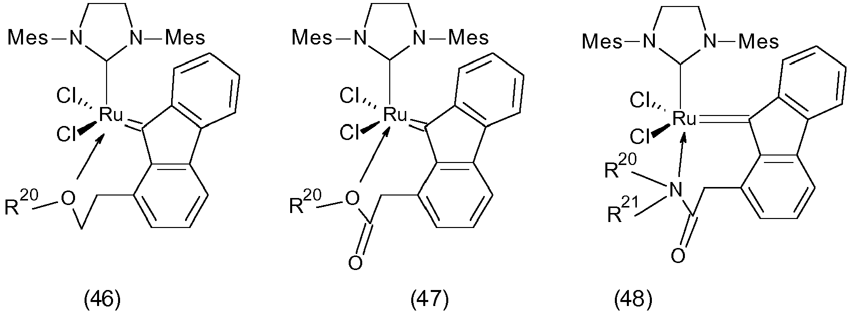

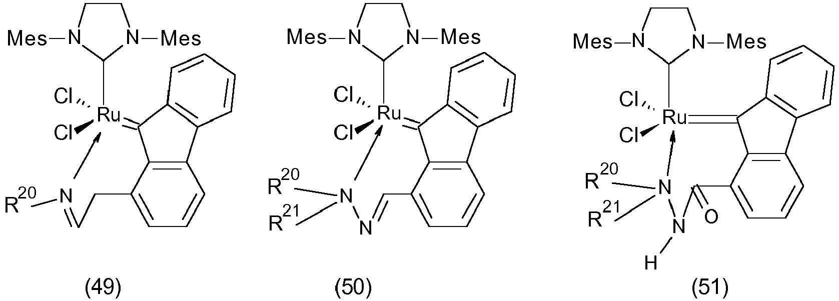

Die Herstellung von Katalysatoren der allgemeinen Formel (R) ist aus der EP-A-2 027 920 bekannt.

Geeignet sind ferner **Katalysatoren gemäß der allgemeinen Formel (T)**. 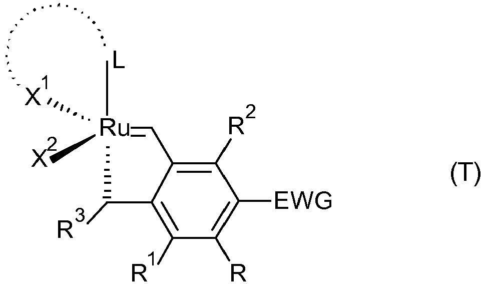 worin:
- X¹ und X²: gleich oder verschieden sind und anionische Liganden darstellen, oder alternativ miteinander verknüpft sind über Kohlenstoff-Kohlenstoff und/oder Kohlenstoff-Heteroatom-Bindungen,
- Y: ein neutraler zwei-Elektronen Donor ist ausgewählt aus O, S, N und P,
- R: für H, Halogen, Alkyl, Alkoxy, Aryl, Aryloxy, Alkylcarbonyl, Arylcarbonyl, Alkoxycarbonyl, Aryloxycarbonyl, Heteroaryl, Carboxyl (RCO₂⁻), Cyano, Nitro, Amido, Amino, Aminosulfonyl, N-heteroarylsulfonyl, Alkylsulfonyl, Arylsulfonyl, Alkylsulfinyl, Arylsulfinyl, Alkylthio, Arylthio oder Sulfonamid stehen,
- R¹ und R²: für H, Br, I, Alkyl, Alkoxy, Aryl, Aryloxy, Alkylcarbonyl, Arylcarbonyl, Alkoxycarbonyl, Aryloxycarbonyl, Carboxyl, Amido, Amino, Heteroaryl, Alkylthio, Arylthio, oder Sulfonamido stehen,
- R³: für Alkyl, Aryl, Heteroaryl, Alkylcarbonyl, Arylcarbonyl, Thiocarbonyl, oder Aminocarbonyl stehen,
- EWG: eine elektronenziehende Gruppe ist die ausgewählt ist aus der Gruppe bestehend aus Aminosulfonyl, Amidosulfonyl, N-heteroarylsulfonyl, Arylsulfonyl, Arylsulfinyl, Arylcarbonyl, Alkylcarbonyl, Aryloxycarbonyl, Aminocarbonyl, Amido, Sulfonamido, Chlor, Fluor, H, oder Haloalkyl und
- L: ein elektronenlieferender Ligand ist, der an X¹ über Kohlenstoff-Kohlenstoff und/oder Kohlenstoff-Heteroatom-Bindungen geknüpft sein kann.

Diese Katalysatoren der allgemeinen Formel (T) sind aus US 2007/0043180 (Zannan) bekannt

Bevorzugt sind Katalysatoren der allgemeinen Formel (T), worin X¹ und X² ausgewählt sind aus einem ionischen Ligand in Form von Halogeniden, Carboxylaten und Aryloxiden. Besonders bevorzugt stehen X¹ und X² beide für Halogenide, insbesondere sind beide Chloride. In der allgemeinen Formel (T) steht Y bevorzugt für Sauerstoff. R steht bevorzugt für H, Halogen, Alkoxycarbonyl, Aryloxycarbonyl, Heteroaryl, Carboxyl, Amido, Alkylsulfonyl, Arylsulfonyl, Alkylthio, Arylthio oder Sulfonamido. Insbesondere steht R für H, Cl, F oder eine C₁₋₈ Alkoxycarbonyl Gruppe. R¹ und R² sind gleich oder verschieden und stehen bevorzugt für H, Alkoxy, Aryl, Aryloxy, Alkoxycarbonyl, Amido, Alkylthio, Arylthio oder eine Sulfonamido-Gruppe. Insbesondere steht R¹ für H oder eine Alkoxy-Gruppe und R² ist Wasserstoff. In der allgemeinen Formel (T) steht R³ bevorzugt für eine Alkyl, Aryl, Heteroaryl, Alkylcarbonyl oder Arylcarbonyl-Gruppe. Besonders bevorzugt steht R³ für Isopropyl, sec-Butyl und Methoxyethyl. In der allgemeinen Formel (T) steht EWG bevorzugt für eine Aminosulfonyl, Amidosulfonyl, N-Heteroarylsulfonyl, Arylsulfonyl, Aminocarbonyl, Arylsulfonyl, Alkylcarbonyl, Aryloxycarbonyl, Halogen oder Haloalkyl-Gruppe. Besonders bevorzugt steht EWG für eine C₁₋₁₂ N-alkylaminosulfonyl, C₂₋₁₂ N-Heteroarylsulfonyl, C₁₋₁₂ Aminocarbonyl, C₆₋₁₂ Arylsulfonyl, C₁₋₁₂ Alkylcarbonyl, C₆₋₁₂ Arylcarbonyl, C₆₋₁₂ Aryloxycarbonyl, Cl, F oder Trifluoromethyl-Gruppe. In der allgemeinen Formel (T) steht L für einen elektronliefernden Liganden ausgewählt aus Phosphinen, Amino, Aryloxiden, Carboxylaten oder heterocyclischen Carben-Resten, die an X¹ über Kohlenstoff-Kohlenstoff und/oder Kohlenstoff-Heteroatom-Bindungen gebunden sein können.

Besonders geeignet ist ein Katalysator der allgemeinen Formel (T), worin L ein heterocyclischer Carben-Ligand oder ein Phosphin (P(R⁸)₂(R⁹) darstellt mit den folgenden Strukturen: 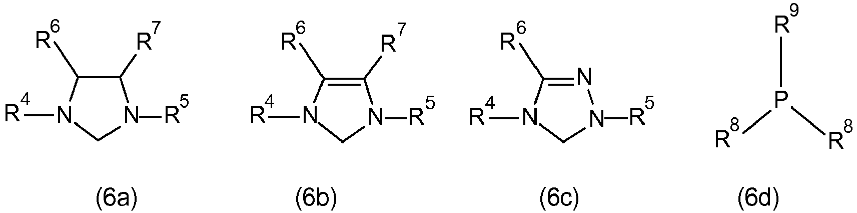 worin
- R⁴ und R⁵: gleich oder verschieden sind und C₆₋₁₂ Aryl darstellen und
- R⁶ und R⁷: gleich oder verschieden sind und H, Halogen, Alkyl, Alkoxy, Aryl, Aryloxy, Alkylcarbonyl, Arylcarbonyl, Alkoxycarbonyl, Aryloxycarbonyl, Heteroaryl, Carboxyl, Cyano, Nitro, Amido, Amino, Alkylsulfonyl, Arylsulfonyl, Alkylsulfinyl, Arylsulfinyl, Alkylthio oder Sulfonamido bedeuten und
- R⁸ und R⁹: gleich oder verschieden sind und C₁₋₈ Alkyl oder C₆₋₁₂ Aryl darstellen.

Geeignet sind ferner **bimetallische Komplexe der allgemeinen Formel (U),**

M¹ₐM²_{b}Xₘ(L¹)ₙ (U)

worin
- M¹: Rhodium (Rh) oder Ruthenium (Ru) darstellt,
- M²: Ruthenium (Ru) oder ein Lanthanid darstellt,
wobei dann, wenn M¹ für Rhodium (Rh) steht, M² Ruthenium (Ru) oder ein Lanthanid darstellt und dann, wenn M¹ für Ruthenium (Ru) steht, M² ein Lanthanid darstellt,
- X: gleich oder verschieden sind und H, Cl oder Br bedeuten,
- L¹: ein Organophosphan (PR¹R²R³), Diphosphan (R¹R²P(CH₂)ₙPR³R⁴), Organoarsan (AsR¹R²R³) oder andere organische Verbindungen enthaltend Stickstoff, Schwefel, Sauerstoff Atome oder Mischungen davon darstellt, wobei R¹, R², R³ and R⁴ gleich oder verschieden sind und C₁-C₆ Alkyl, C₆-C₁₂ Cycloalkyl, Aryl, C₇-C₁₂ Aralkyl oder Aryloxy Gruppen darstellen,

1 ≦a≦4,
1 ≦b≦2,
3 ≦m≦6 und
6 ≦n≦15 ist.

Diese Katalysatoren der allgemeinen Formel (U) sind aus US-A-6,084,033 prinzipiell bekannt.

Besonders geeignet sind Katalysatoren der allgemeinen Formel (U), worin M¹ Rhodium bedeutet und M² Ruthenium. Besonders geeignet sind ferner Katalysatoren der allgemeinen Formel (U), worin M² ein Lanthanid darstellt, insbesondere Ce oder La. In besonders geeigneten Katalysatoren der allgemeinen Formel (U) sind X gleich oder verschieden und H oder Cl. Besonders geeignet sind Katalysatoren der allgemeinen Formel (U), worin L¹ ausgewählt ist aus Trimethylphosphan, Triethylphosphan, Triphenylphosphan, Triphenoxyphosphan, Tri(p-methoxyphenyl)phosphan, Diphenylethylphosphan, 1,4-Di-(diphenylphosphano)butan, 1,2-Di-(diphenylphosphano)ethan, Triphenylarsan, Dibutylphenylarsan, Diphenylethylarsan, Triphenylamin, Triethylamin, N,N-Dimethylanilin, Diphenylthioether, Dipropylthioether, N,N'-Tetramethylethylendiamin, Acetylaceton, Diphenylketone und Mischungen davon.

**Weitere Katalysatoren, die eingesetzt werden können,** sind in folgenden Schriften beschrieben US-A-37 00 637, DE-A-25 39 132, EP-A 134 023, DE-A 35 41 689, DE 3540918, EP-A-0 298 386, DE-A 3529252, DE-A 3433 392, US-A 4,464,515, US 4,503,196 sowie EP-A-1 720 920.

### Menge Hydrierkatalysator:

Für die Hydrierung des Nitrilkautschuks kann der Hydrierkatalysator in einem breiten Mengenbereich eingesetzt werden. Üblicherweise wird der Katalysator in einer Menge von 0,001 bis 1,0 Gew.%, bevorzugt von 0,01 bis 0,5 Gew.%, insbesondere 0,05 bis 0,3 Gew.%, bezogen auf den zu hydrierenden Nitrilkautschuk eingesetzt.

### Sonstige Hydrierbedingungen:

Die praktische Durchführung der Hydrierung ist dem Fachmann hinlänglich bekannt, u.a. z.B. aus US 6,683,136A**.**

### Lösungsmittel:

Die Hydrierung erfolgt üblicherweise in einem Lösungsmittel, bevorzugt einem organischen Lösungsmittel. Als organische Lösungsmittel sind z.B. Aceton, Methylethylketon, Essigsäureethylester, Tetrahydrofuran, 1,3-Dioxan, Benzol, Toluol, Methylenchlorid, Chloroform, Monochlorbenzol und Dichlorbenzol geeignet. Besonders bewährt hat sich Monochlorbenzol, da es sowohl für Nitrilkautschuke mit unterschiedlichen Nitrilgehalten als auch für die entsprechenden resultierenden hydrierten Nitrilkautschuke ein gutes Lösungsmittel ist.

### Konzentration Nitrilkautschuk:

Für die Hydrierung löst man Nitrilkautschuk üblicherweise in mindestens einem Lösungsmittel. Die Konzentration des Nitrilkautschuks bei der Hydrierung liegt i.d.R. im Bereich 1 - 30 Gew.%, bevorzugt im Bereich 5 - 25 Gew.%, besonders bevorzugt im Bereich 7 - 20 Gew.%.

Der Druck liegt bei der Hydrierung üblicherweise im Bereich von 0,1 bar bis 250 bar, bevorzugt von 5 bar bis 200 bar, besonders bevorzugt von 50 bar bis 150 bar. Die Temperatur liegt typischerweise im Bereich von 0°C bis 180°C, bevorzugt von 20°C bis 160°C, besonders bevorzugt von 50°C bis 150°C. Die Reaktionszeit liegt in der Regel bei 2 bis 10 h.

Im Rahmen der Hydrierung werden die im eingesetzten Nitrilkautschuk vorhandenen Doppelbindungen soweit hydriert, bis die gewünschten und zuvor bereits beschriebenen hydriergrade erreicht sind.

Der Verlauf der Hydrierung wurde on-line durch Bestimmung der Wasserstoffaufnahme oder durch Raman- (EP-A-0 897 933) oder IR-Spektroskopie (US-A-6,522,408) verfolgt. Eine geeignete IR-Methode zur off-line Bestimmung des Hydriergrades ist weiterhin beschreiben durch D. Brück in Kautschuke + Gummi, Kunststoffe, Vol. 42. (1989), No. 2, S. 107-110 **(part 1)** sowie in Kautschuke + Gummi, Kunststoffe, Vol. 42. (1989), No. 3, S. 194-197**.**

Nach Erreichen des gewünschten Hydriergrades wird der Reaktor entspannt. Restmengen an Wasserstoff werden üblicherweise durch eine Stickstoffspülung entfernt.

Vor der Isolierung des hydrierten Nitrilkautschuks aus der organischen Phase kann der Hydrierkatalysator entfernt werden. Ein bevorzugtes Verfahren zur Rhodium Rückgewinnung ist beispielsweise in US-A-4,985,540 beschrieben.

Sofern die Hydrierung im Rahmen des erfindungsgemäßen Verfahrens unter Zusatz eines Phosphan bzw. Diphosphans erfolgt, so werden diese typischerweise in Mengen von 0,1 bis 10 Gew.%, bevorzugt von 0,25 bis 5 Gew.%, besonders bevorzugt 0,5 bis 4 Gew.%, ganz besonders bevorzugt 0,75 bis 3,5 Gew.% und insbesondere 1 bis 3 Gew.%, bezogen auf den zu hydrierenden Nitrilkautschuk eingesetzt.

Bezogen auf 1 Äquivalent des Hydrierkatalysators wird das Phosphan bzw. Diphosphan bewährterweise in einer Menge im Bereich von 0,1 bis 10 Äquivalenten, bevorzugt im Bereich von 0,2 bis 5 Äquivalenten und besonders bevorzugt im Bereich von 0,3 bis 3 Äquivalenten eingesetzt.

Das Gewichtsverhältnis des zugesetzten Phosphans bzw. Diphosphans zum Hydrierkatalysator beträgt üblicherweise (1-100):1, bevorzugt (3-30):1, insbesondere (5-15):1.

Nach Abschluss der Hydrierung erhält man einen hydrierten Nitrilkautschuk mit einer Mooney-Viskosität (ML 1+4 @ 100°C), gemessen gemäß ASTM Norm D 1646, im Bereich von 1 - 50. Dies entspricht ungefähr einem Gewichtsmittel des Molekulargewicht M_{w} im Bereich von 2.000 - 400.000 g/mol. Bevorzugt liegt die Mooney-Viskosität (ML 1+4 @100°C) im Bereich von 5 bis 30. Dies entspricht ungefähr einem Gewichtsmittel des Molekulargewicht M_{w} im Bereich von ca. 20.000 - 200.000. Die erhaltenen hydrierten Nitrilkautschuke besitzen ferner eine Polydispersität PDI= M_{w}/Mₙ, wobei M_{w} das Gewichtsmittel und Mₙ das Zahlenmittel des Molekulargewichts darstellt, im Bereich von 1- 5 und bevorzugt im Bereich von 1,5 - 3.

Es ist ferner möglich, den Nitrilkautschuk vor der Hydrierung einer Metathese Reaktion zu unterziehen, um das Molekulargewicht des Nitrilkautschuks abzubauen. Die Metathese von Nitrilkautschuken ist dem Fachmann hinlänglich bekannt. Sofern eine Metathese erfolgt, ist ferner möglich, die anschließende Hydrierung in-situ durchzuführen, d.h. in dem gleichen Reaktionsgemisch, in dem zuvor auch der Metathese-Abbau erfolgte und ohne Notwendigkeit, den abgebauten Nitrilkautschuk zu isolieren. Der Hydrierkatalysator wird einfach dem Reaktionsgefäß zugesetzt.

### Schritt 2:

Diphosphan- oder diphosphanhaltiger hydrierter Nitrilkautschuk wird mit dem Schwefeldonor, der mindestens zwei direkt kovalent miteinander verbundene Schwefelatome aufweist, in Kontakt gebracht. Hierbei kommt es zur Bildung des Phosphan- oder Diphosphansulfids aus dem Phosphan bzw. Diphosphan und somit zur Reduktion bis hin zur kompletten Entfernung der Phosphan bzw. Diphosphan-Menge.

Der phosphan- oder diphosphanhaltige hydrierte Nitrilkautschuk kann beim Kontakt mit dem Schwefeldonor entweder in gelöster Form oder als Feststoff vorliegen.

Bewährt haben sich beispielsweise die beiden folgenden alternativen Ausführungsformen:
In einer **ersten Ausführungsform** kann der Schwefeldonor nach Ende der Hydrierung und vor oder während der Isolierung des hydrierten Nitrilkautschuks aus dem Reaktionsgemisch der Hydrierung zugegeben werden. Für die Isolierung des hydrierten Nitrilkautschuks aus der organischen Lösung eignet sich die Verdampfung des organischen Lösungsmittels durch Einwirkung von Hitze oder von reduziertem Druck oder durch Wasserdampfdestillation. Bevorzugt erfolgt eine Wasserdampfdestillation. In diesem Fall erfolgt die anschließende Abtrennung der Kautschukkrümel aus der wässrigen Dispersion mit Sieben und abschließender mechanischer und/oder thermischer Trocknung. Bevorzugt ist die Wasserdampfdestillation. Diese wird in Abhängigkeit vom angewandten Druck bei einer Umsetzungstemperatur von üblicherweise 80 bis 120°C, vorzugsweise etwa 100°C durchgeführt.

Bewährt hat sich die Zugabe des Schwefeldonors in organischer oder in wässriger Lösung vor oder während der Isolierung des hydrierten Nitrilkautschuks.

Ist der Schwefeldonor öllöslich, so erfolgt die Zugabe des Schwefeldonors in das Reaktionsgemisch der Hydrierung in gelöster Form, wobei das Lösungsmittel für die Lösung des Schwefeldonors zweckmäßigerweise identisch mit dem Lösungsmittel ist, in dem der phosphan- oder diphosphanhaltige hydrierte Nitrilkautschuk vorliegt.

Ist der Schwefeldonor wasserlöslich, so wird der Schwefeldonor als wässrige Lösung zum Reaktionsgemisch der Hydrierung gegeben und mit dieser gut durchmischt.

Optional kann vor dem Zusatz des Schwefeldonors eine Katalysatorrückgewinnung erfolgen.

In einer **zweiten Ausführungsform** kann der phosphan- bzw. diphosphanhaltige hydrierte Nitrilkautschuk im festem Zustand mit mindestens einem oben definierten Schwefeldonor versetzt und umgesetzt werden. In dieser Form kann er durch Isolierung aus dem Reaktionsgemisch der Hydrierung erhalten werden. Der phosphan- bzw. diphosphanhaltige hydrierte Nitrilkautschuk liegt dann in einem weitgehend lösungsmittelfreien Zustand vor. Bewährt haben sich für diese Ausführungsform Walzenstühle, Innenmischer oder Extruder. Bevorzugt kommt ein Walzenstuhl oder ein Innenmischer zum Einsatz. Ein typischer, käuflich erhältlicher Walzenstuhl ist thermostatisierbar und verfügt über zwei gegenläufige Walzen. Die Einarbeitung des Schwefeldonors erfolgt unter Wahl einer geeigneten Walzentemperatur, z.B. im Bereich von 10-30°C, bevorzugt bei 20°C +/- 3°C, sowie einer geeigneten Umdrehungsgeschwindigkeit, bevorzugt im Bereich von 25 bis 30 min-¹, eines geeigneten Walzenspalts, z.B. im Bereich einiger Millimeter, und einer geeigneten Walzzeit, die in der Regel bei einigen Minuten liegt. Das erhaltene Kautschukfell wird anschließend üblicherweise geschnitten und gestürzt und optional nochmals auf die Walze aufgegeben. Bei dieser Ausführungsform wird auch der Schwefeldonor typischerweise in fester Form eingesetzt.

Die Umsetzung der Phosphane bzw. Diphosphane mit dem Schwefeldonor zu Phosphansulfiden bzw. Diphosphansulfiden erfolgt in Abhängigkeit von der Reaktivität des verwendeten Schwefeldonors bei geeigneten Temperaturen. Vorzugsweise liegen die Umsetzungstemperaturen im Bereich von 10°C bis 150°C, bevorzugt im Bereich von 80°C bis 120°C und insbesondere im Bereich von 90°C bis 110°C. Die Reaktionsdauer für die Umsetzung liegt üblicherweise im Bereich von 1 min bis 5 h und kann vom Fachmann in Abhängigkeit von der gewählten Temperatur eingestellt werden.

### Schwefeldonoren:

Die im erfindungsgemäßen Verfahren einzusetzenden Schwefeldonoren enthalten mindestens zwei direkt miteinander kovalent verknüpfte Schwefelatome.

Geeignete Schwefeldonoren haben beispielsweise die folgenden allgemeinen Formeln (5a)-(5e) 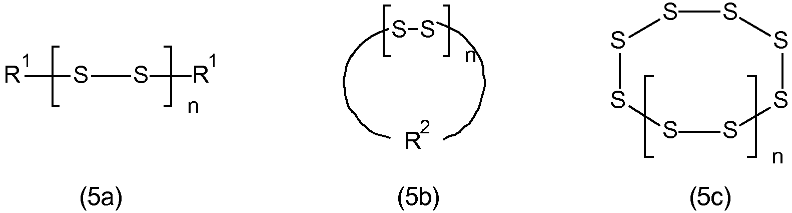 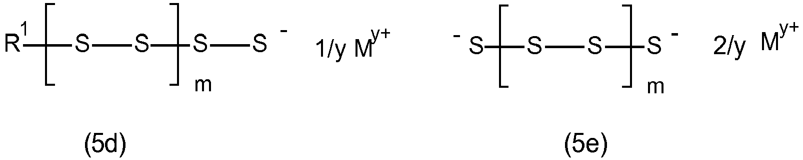 worin
- **M^{y+}**: für ein Kation mit y-facher Ladung steht, wobei y 1, 2, 3 oder 4 ist, bevorzugt ein Alkalimetallkation, ein Erdalkalimetallkation, NH₄⁺ oder N(R³)₄⁺, worin R³ gleich oder verschieden ist und für einen linearen, verzweigten, aliphatischen, verbrückten, cycloaliphatischen oder ganz oder teilweise aromatischen Rest steht,
- **n**: eine Zahl im Bereich von 1 bis 1000 bedeutet,
- **m**: eine Zahl im Bereich von 0 bis 998 bedeutet,
- **R¹**: Wasserstoff oder einen Rest mit 1 bis 20 C-Atomen bedeutet, wobei dieser Rest bis zu fünf Heteroatome ausgewählt aus der Gruppe bestehend aus N, P, S, O und Si enthalten kann, und linear, verzweigt, aliphatisch, verbrückt, cycloaliphatisch und/oder ganz oder teilweise aromatisch sein kann,
- **R²**: einen divalenten Rest mit 1 bis 20 C-Atome darstellt, der bis zu 5 Heteroatomen ausgewählt aus der Gruppe bestehend aus N, P, S und O enthalten kann, und linear, verzweigt, aliphatisch, verbrückt, cycloaliphatisch, ganz oder teilweise aromatisch sein kann.

In einer bevorzugten Ausführungsform wird mindestens ein Schwefeldonor ausgewählt aus den Verbindungen der allgemeinen Formeln (5a)-(5e) eingesetzt,
worin
- **M^{y+}**: ein Lithium, Natrium oder Kalium Kation mit y=1, ein Magnesium, Calcium oder Barium Kation mit y=2, NH₄⁺ oder N(R³)₄⁺, worin R³ gleich oder verschieden ist und für einen linearen oder verzweigten C₁-C₁₈-Alkylrest steht, bedeutet,
- **n**: eine Zahl im Bereich von 1 bis 100 bedeutet,
- **m**: eine Zahl im Bereich von 0 bis 98 bedeutet,
- **R¹**: für C₁-C₁₈-Alkyl, insbesondere für Methyl, Ethyl, n-Propyl, Isopropyl, n-Butyl, tert.-Butyl, n-Hexyl, Phenyl, Naphthyl, n-Dodecyl, tert-Dodecyl oder Stearyl, -(C=S)-NR₂; -(C=O)-NR₂; -(C=O)-OR; -(C=S)-OR; -(P=S)(OR)₂; -(P=S)(SR)₂; -(C=NH)-NR₂ ; -(C=NR)-OR;-(C=NR)-SR oder -SO₃⁻, worin R gleich oder verschieden sind und für C₁-C₁₄-Alkyl oder C₅-C₁₄-Aryl stehen und unsubstituiert, ein- oder mehrfach substituiert ist,
- **R²**: eine geradkettige oder verzweigte Alkandiyl-, Alkendiyl- oder Alkindiylgruppe darstellt, besonders bevorzugt eine geradkettige oder verzweigte C₁-C₂₀-Alkandiyl-, C₂-C₂₀-Alkendiyl- oder C₂-C₂₀-Alkindiylgruppe, insbesondere bevorzugt eine geradkettige oder verzweigte C₁-C₈-Alkandiyl-, C₂-C₆-Alkendiyl- oder C₂-C₆-Alkindiylgruppe.

**C₁-C₈-Alkandiyl** steht für einen geradkettigen oder verzweigten Alkandiylrest mit 1 bis 8 Kohlenstoffatomen. Besonders bevorzugt ist ein geradkettiger oder verzweigter Alkandiylrest mit 1 bis 6 Kohlenstoffatomen, insbesondere mit 2 bis 4 Kohlenstoffatomen. Vorzugsweise seien Methylen, Ethylen, Propylen, Propan-1,2-diyl, Propan-2,2-diyl, Butan-1,3-diyl, Butan-2,4-diyl, Pentan-2,4-diyl und 2-Methyl-pentan-2,4-diyl genannt.

**C₂-C₆-Alkendiyl** steht für einen geradkettigen oder verzweigten Alkendiylrest mit 2 bis 6 Kohlenstoffatomen. Bevorzugt ist ein geradkettiger oder verzweigter Alkendiylrest mit 2 bis 4, besonders bevorzugt mit 2 bis 3 Kohlenstoffatomen. Vorzugsweise seien Vinylen, Allylen, Prop-1-en-1,2-diyl und But-2-en-1,4-diyl genannt.

**C₂-C₆-Alkindiyl** steht für einen geradkettigen oder verzweigten Alkindiylrest mit 2 bis 6 Kohlenstoffatomen. Bevorzugt ist ein geradkettiger oder verzweigter Alkindiylrest mit 2 bis 4, besonders bevorzugt mit 2 bis 3 Kohlenstoffatomen. Vorzugsweise seien Ethindiyl und Propindiyl genannt.

In einer Ausführungsform hat es sich bewährt, mindestens einen Schwefeldonor der allgemeinen Formel (5a) einzusetzen, der die allgemeine Substruktur (5a-1) aufweist, 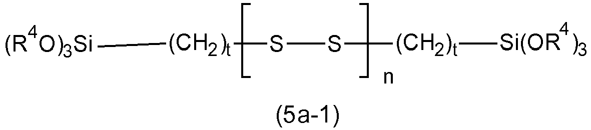 worin
- n: eine Zahl im Bereich von 1 bis 100, bevorzugt 1 bis 20, besonders bevorzugt 1 bis 10 ist,
- t: gleich oder verschieden sind und eine ganze Zahl im Bereich von 1 bis 20, bevorzugt 1 bis 10, besonders bevorzugt 1 bis 8 bedeuten und
- R⁴: gleich oder verschieden sind, bevorzugt gleich, und für lineare oder verzweigte C₁-C₁₈, bevorzugt C₁-C₁₀-, besonders bevorzugt C₁-C₆-Alkylreste stehen.

Bevorzugte **Schwefeldonoren**, die erfindungsgemäß eingesetzt werden können, sind ausgewählt aus der Gruppe bestehend aus elementarem Schwefel in der Form von S₈-Ringen oder als polymerer Schwefel, der kristallin, teilkristallin oder amorph vorliegen kann, Diphenyldisulfid, Di-(n-dodecyl)disulfid, Di-(tert-dodecyl)disulfid, Tetraethylthiuramdisulfid, Tetrabutylthiuramdisulfid, Dipentamethylen-thiuramtetrasulfid, Dimorpholyldisulfid, Diethylxanthogendisulfid, Diisopropylxanthogendisulfid, Di-n-butylxanthogendisulfid, Ammoniumpolysulfid, Natriumpolysulfid, Kaliumpolysulfid, Bis[(5-ethyl-1,3-dioxan-5-yl)-methyl]-xanthogendisulfid, Dibenzthiazyldisulfid, 2-Morpholinodithiobenzthiazol, Bis(tri-ethoxy-silylpropyl)polysulfide, worin die Kettenlänge des Schwefels im Bereich von 2 bis 4 liegt, und Bis(silatranylalkyl)polysulfide (s. z.B. WO-A-2008/084885).

### Menge des Schwefeldonors:

Die eingesetzte Menge des Schwefeldonors berechnet sich auf Basis der Phosphan- bzw. Diphosphanmenge, die bei der Hydrierung des Nitrilkautschuks zugegen ist. Die **molare Menge an Schwefeldonor** (berechnet als S) beträgt bevorzugt 5 bis 300%, vorzugsweise 50 bis 150%, besonders bevorzugt 75 bis 125% der molaren Menge des Phosphans oder Diphosphans, das zuvor in der Hydrierung zugegen ist. Für S₈-Ringe ist damit z.B. 1/8 der genannten Mol% einzusetzen.

Die vorgenannten molaren Mengen des Schwefeldonors gelten jedoch auch in Bezug auf die Phosphan- bzw. Diphosphanmenge, die im hydrierten Nitrilkautschuk vor der erfindungsgemäßen Umsetzung zugegen sind.

In **Gew.% wird der Schwefeldonor**, wiederum berechnet als Schwefel, bevorzugt in einer Menge von 5 bis 25 Gew.%, vorzugsweise 7 bis 20 Gew.%, insbesondere 10 bis 15 Gew.%, bezogen auf 100 Gew.% des Phosphans oder Diphosphans, das zuvor in der Hydrierung zugegen ist, nach der Hydrierung zugesetzt. Die vorgenannten Gew.% Mengen des Schwefeldonors gelten jedoch auch in Bezug auf die Phosphan- bzw. Diphosphanmenge, die im hydrierten Nitrilkautschuk vor der erfindungsgemäßen Umsetzung enthalten ist.

Durch das erfindungsgemäße Verfahren werden die Phosphane bzw. Diphosphane typischerweise zu mindestens 50 mol%, bevorzugt zu mindestens 80 mol%, und besonders bevorzugt zu mindestens 95mol % bis zu 100 mol% in Phosphan- bzw. Diphosphansulfide umgewandelt. Es ist insbesondere möglich, die Umsetzung des Phosphans/Diphosphans nahezu quantitativ oder sogar quantitativ durchzuführen.

Entsprechend beträgt der Gehalt an Phosphanen bzw. Diphosphanen, bezogen auf die Summe aus (i) Phosphan- oder Diphosphansulfiden und (ii) Phosphan oder Diphosphan im hydrierten Nitrilkautschuk, typischerweise weniger als 50 mol%, bevorzugt weniger als 20 mol% und besonders bevorzugt weniger als 5 mol% bis hin zu 0 mol%. Es ist insbesondere auch eine vollständige Entfernung des Phosphans bzw. Diphosphans möglich.

Die Bestimmung des Triphenylphosphan- (TPP) und Triphenylphosphansulfid- (TPP=S) Gehalts im hydrierten Nitrilkautschuk erfolgt gemäß der in den Beispielen angegebenen Methodik.

Auch ohne Zusatz von Schwefeldonoren nach der Hydrierung kann es in Einzelfällen zur Bildung geringer Spuren von Phosphansulfiden kommen, die jedoch unter 0,075 Gew.%, bezogen auf den hydrierten Nitrilkautschuk, liegen. Wie auch aus den Beispielen erkennbar, führt erst der gezielte Zusatz von Schwefeldonoren zum hydrierten Nitrilkautschuk zu den erfindungsgemäßen Vorteilen durch die Umsetzung von Phosphanen bzw. Diphosphanen zu Phosphansulfiden bzw. Diphosphansulfiden.

**Gegenstand der vorliegenden Erfindung** sind ferner **vulkanisierbare Mischungen** enthaltend die erfindungsgemäßen hydrierten Nitrilkautschuke und mindestens ein Vernetzungssystem. Zusätzlich können die vulkanisierbaren Mischungen noch ein oder mehrere weitere übliche Kautschukadditive enthalten.

Die Herstellung dieser vulkanisierbaren Mischungen erfolgt üblicherweise durch Mischen des erfindungsgemäßen hydrierten Nitrilkautschuke (i) mit mindestens einem Vernetzungssystem (ii) und gegebenenfalls ein oder mehreren weiteren Additiven.

Das Vernetzungssystem enthält mindestens einen Vernetzer und optional ein oder mehrere Vernetzungsbeschleuniger.

Üblicherweise wird der erfindungsgemäße hydrierte Nitrilkautschuk zunächst mit allen gewählten Additiven gemischt und erst als letztes das Vernetzungssystem aus mindestens einem Vernetzer sowie optional einem Vernetzungsbeschleuniger zugemischt.

Als **Vernetzer** kommen z.B. peroxidische Vernetzer in Frage wie Bis(2,4-dichlorbenzyl)peroxid, Dibenzoylperoxid, Bis(4-chlorbenzoyl)peroxid, 1,1 -Bis-(t-butylperoxy)-3,3,5-trimethylcyclohexan, tert-Butylperbenzoat, 2,2 Bis(t-butylperoxy) buten, 4,4-di-tert.Butyl peroxynonylvalerat, Dicumylperoxid, 2,5-Dimethyl-2,5-di(t-butylperoxy)-hexan, tert-Butylcumylperoxid, 1,3-Bis(t-butylperoxy isopropyl)-benzol, Di-t-butylperoxid und 2,5-Dimethyl-2,5-di(t-butylperoxy)-hexyn-3.

Es kann vorteilhaft sein, neben diesen peroxidischen Vernetzern noch weitere Zusätze zu verwenden, mit deren Hilfe die Vernetzungsausbeute erhöht werden kann: Hierfür sind beispielsweise Triallylisocyanurat, Triallylcyanurat, Trimethylolpropan-tri(meth)acrylat, Triallyltrimellithat, Ethylenglycoldimethacrylat, Butandioldimethacrylat, Trimethylolpropantrimethacrylat, Zinkacrylat, Zinkdiacrylat, Zinkmethacrylat, Zinkdimethacrylat, 1,2-Polybutadien oder N,N'-m-phenylen-dimaleinimid geeignet.

Die **Gesamtmenge des oder der Vernetzer** liegt üblicherweise im Bereich von 1 bis 20 phr, bevorzugt im Bereich von 1,5 bis 15 phr und besonders bevorzugt im Bereich von 2 bis 10 phr, bezogen auf den ganz oder teilweise hydrierten Nitrilkautschuk.

Als Vernetzer können auch Schwefel in elementarer löslicher oder unlöslicher Form oder Schwefelspender eingesetzt werden. Als Schwefelspender kommen beispielsweise Dimorpholyldisulfid (DTDM), 2-Morpholinodithiobenzothiazol (MBSS), Caprolactamdisulfid, Dipentamethylenthiuramtetrasulfid (DPTT), und Tetramethylthiuramdisulfid (TMTD) in Frage.

Auch bei der Schwefelvulkanisation der erfindungsgemäßen hydrierten Nitrilkautschuke ist es möglich, noch weitere Zusätze zu verwenden, mit deren Hilfe die Vernetzungsausbeute erhöht werden kann. Grundsätzlich kann die Vernetzung aber auch mit Schwefel oder Schwefelspendern allein erfolgen.

Als Zusätze, mit deren Hilfe die Vernetzungsausbeute erhöht werden kann, eignen sich z.B. Dithiocarbamate, Thiurame, Thiazole, Sulfenamide, Xanthogenate, Guanidinderivate, Dithiophosphate, Caprolactame und Thioharnstoffderivate.

Als Dithiocarbamate können beispielsweise eingesetzt werden: Ammoniumdimethyldithiocarbamat, Natriumdiethyldithiocarbamat (SDEC), Natriumdibutyl-dithiocarbamat (SDBC), Zinkdimethyldithiocarbamat (ZDMC), Zinkdiethyldithiocarbamat (ZDEC), Zinkdibutyldithiocarbamat (ZDBC), Zinkethylphenyldithiocarbamat (ZEPC), Zinkdibenzyldithiocarbamat (ZBEC), Zinkpentamethylendithiocarbamat (Z5MC), Tellurdiethyldithio-carbamat, Nickeldibutyldithiocarbamat, Nickeldimethyldithiocarbamat und Zinkdiisononyldithio-carbamat.

Als Thiurame können zum Beispiel eingesetzt werden: Tetramethylthiuramdisulfid (TMTD), Tetramethylthiurammonosulfid (TMTM), Dimethyldiphenylthiuramdisulfid, Tetrabenzylthiuramdisulfid, Dipentamethylenthiuramtetrasulfid und Tetraethylthiuramdisulfid (TETD).

Als Thiazole können zum Beispiel eingesetzt werden: 2-Mercaptobenzothiazol (MBT), Dibenzthiazyldisulfid (MBTS), Zinkmercaptobenzothiazol (ZMBT) und Kupfer-2-mercaptobenzo-thiazol.

Als Sulfenamidderivate können zum Beispiel eingesetzt werden: N-Cyclohexyl-2-benzothiazylsulfenamid (CBS), N-tert.-Butyl-2-benzthiazylsulfenamid (TBBS), N,N'-Dicyclohexyl-2-benzthiazylsulfenamid (DCBS), 2-Morpholinothiobenzthiazol (MBS), N-Oxydiethylenthiocarbamyl-N-tert.butylsulfenamid und Oxydiethylenthiocarbamyl-N-oxyethylensulfenamid.

Als Xanthogenate können zum Beispiel eingesetzt werden: Natriumdibutylxanthogenat, Zinkisopropyldibutylxanthogenat und Zinkdibutylxanthogenat.

Als Guanidinderivate können zum Beispiel eingesetzt werden: Diphenylguanidin (DPG), Di-o-tolylguanidin (DOTG) und o-Tolylbiguanid (OTBG).

Als Dithiophosphate können beispielsweise eingesetzt werden: Zinkdi(C₂-C₁₆)alkyldithiophosphate Kupferdi(C₂-C₁₆)alkyldithiophosphate und Dithiophoshorylpolysulfid.

Als Caprolactam kann beispielsweise Dithio-bis-caprolactam eingesetzt werden.

Als Thioharnstoffderivate können beispielsweise N,N'-Diphenylthioharnstoff (DPTU), Diethylthioharnstoff (DETU) und Ethylenthioharnstoff (ETU) eingesetzt werden.

Eine Vernetzung ist auch mit Vernetzern möglich, die mindestens zwei Isocyanatgruppen aufweisen - entweder in Form mindestens zwei freier Isocyanatgruppen (-NCO) oder aber in Form geschützter Isocyanatgruppen, aus denen unter den Vernetzungsbedingungen in-situ die -NCO Gruppen freigesetzt werden.

Ebenso als Zusätze geeignet sind beispielsweise Zinkdiamindiisocyanat, Hexamethylentetramin, 1,3-Bis(citraconimidomethyl)benzol sowie zyklische Disulfane.

Die genannten Zusätze als auch die Vernetzungsmittel können sowohl einzeln als auch in Mischungen eingesetzt werden. Bevorzugt werden folgende Substanzen für die Vernetzung der erfindungsgemäßen hydrierten Nitrilkautschuke eingesetzt: Schwefel, 2-Mercaptobenzthiazol, Tetramethylthiuramdisulfid, Tetramethylthiurammonosulfid, Zinkdibenzyldithiocarbamat, Dipentamethylenthiuramtetrasulfid, Zinkdialkydithiophosphat, Dimorpholyldisulfid, Tellurdiethyldithiocarbamat, Nickeldibutyl-dithiocarbamat, Zinkdibutyldithiocarbamat, Zinkdimethyldithiocarbamat und Dithiobis-caprolactam.

Die Vernetzungsmittel und genannten Zusätze können jeweils in Mengen von ca. 0,05 bis 10 phr, vorzugsweise 0,1 bis 8 phr, insbesondere 0,5 bis 5 phr (Einzeldosierung, jeweils bezogen auf die Wirksubstanz) bezogen auf den ganz oder teilweise hydrierten Nitrilkautschuk eingesetzt werden.

Bei einer Schwefelvernetzung ist es gegebenenfalls auch sinnvoll, zusätzlich zu den Vernetzungsmitteln und oben genannten Zusätzen auch weitere anorganische bzw. organische Substanzen mit zu verwenden, beispielsweise: Zinkoxid, Zinkcarbonat, Bleioxid, Magnesiumoxid, Calciumoxid, gesättigte oder ungesättigte organische Fettsäuren und deren Zinksalze, Polyalkohole, Aminoalkohole, wie zum Beispiel Triethanolamin sowie Amine wie zum Beispiel Dibutylamin, Dicyclohexylamin, Cyclohexylethylamin und Polyetheramine.

Sofern es sich bei den erfindungsgemäßen hydrierten Nitrilkautschuken um solche handeln, die Wiederholungseinheiten eines oder mehrerer carboxygruppenhaltiger Termonomere beinhalten, so kann ein Vernetzung auch über den Einsatz eines Polyamin-Vernetzers erfolgen, bevorzugt in Gegenwart eines Vernetzungsbeschleunigers. Der Polyamin-Vernetzer ist nicht eingeschränkt, solange es sich (1) um eine Verbindung handelt, die entweder zwei oder mehr Amino-Gruppen enthält (ggf. auch in Salz-Form) oder (2) um eine Spezies, die während der Vernetzungsreaktion in-situ eine Verbindung ausbildet, die zwei oder mehr Amino-Gruppen aufweist. Bevorzugt wird eine aliphatische oder aromatische Kohlenwasserstoffverbindung eingesetzt bei der mindestens zwei Wasserstoffatome entweder durch Aminogruppen ersetzt sind oder aber durch Hydrazid-Strukturen (letzteres eine Struktur "-C(=O)NHNH₂")

Beispiele für derartige Polyamin-Vernetzer (ii) sind:
- Aliphatische Polyamine, bevorzugt Hexamethylendiamin, Hexamethylendiamincarbamat, Tetramethylenpentamin, Hexamethylendiaminzimtaldehyd-Addukt oder Hexamethylendiamindibenzoat;
- Aromatische Polyamine, bevorzugt 2,2-Bis(4-(4-aminophenoxy)phenyl) propan, 4,4'-Methylendianilin, m-Phenylendiamin, p-Phenylendiamin oder 4,4'-Methylen-bis(o-chloroanilin);
- Verbindungen mit mindestens zwei Hydrazid-Strukturen, bevorzugt Isophthalsäure dihydrazid, Adipinsäuredihydrazid oder Sebacinsäuredihydrazid.

Besonders bevorzugt sind Hexamethylendiamin und Hexamethylendiamincarbamat.

Die Menge des Polyamin-Vernetzers in der vulkanisierbaren Mischung liegt üblicherweise im Bereich von 0,2-20 Gew.-Teilen, bevorzugt im Bereich von 1-15 Gew.-Teilen und besonders bevorzugt im Bereich von 1,5-10 Gew.-Teilen bezogen auf 100 Gew.-Teile des hydrierten Nitrilkautschuks.

Als Vernetzungsbeschleuniger kann in Kombination mit dem Polyamin-Vernetzer jeder dem Fachmann bekannte eingesetzt werden, bevorzugt ein basischer Vernetzungsbeschleuniger. Einsetzbar sind z.B. Tetramethylguanidin, Tetraethylguanidin, Diphenylguanidin, Di-o-tolylguanidin (DOTG), o-Tolylbiguanidin und Di-o-tolylguanidin-Salz der Dicathecolborsäure. Einsetzbar sind ferner Aldehydamin-Vernetzungsbeschleuniger wie z.B. n-Butylaldehydanilin. Besonders bevorzugt wird als Vernetzungsbeschleuniger mindestens eine bi- oder polycyclische aminische Base eingesetzt. Diese sind dem Fachmann bekannt. Insbesondere geeignet sind 1,8-diazabicyclo[5.4.0]undec-7-en (DBU), 1,5-diazabicyclo[4.3.0]-5-nonen (DBN), 1,4-diazabicyclo[2.2.2]octan (DABCO), 1,5,7-triazabicyclo[4.4.0]dec-5-en (TBD), 7-methyl-1,5,7-triazabicyclo[4.4.0]dec-5-en (MTBD).

Die Menge des Vernetzungsbeschleunigers liegt in diesem Fall üblicher Weise in einem Bereich von 0,5 bis 10 Gew.-Teile, bevorzugt 1 bis 7,5 Gew.-Teile, insbesondere 2 bis 5 Gew.-Teile, bezogen auf 100 Gew.-Teile des hydrierten Nitrilkautschuks.

Die vulkanisierbare Mischung basierend auf dem erfindungsgemäßen hydrierten Nitrilkautschuk kann prinzipiell auch Anvulkanisationsverzögerer enthalten, die sich bei einer Vulkanisation mit Schwefel oder mit Peroxiden unterscheiden:
Bei einer Vulkanisation mit Schwefel werden eingesetzt: Cyclohexylthiophthalimid (CTP), N,N' Dinitrosopentamethlyentetramin (DNPT), Phthalsäureanhydrid (PTA) und Diphenylnitrosamin. Bevorzugt ist Cyclohexylthiophthalimid (CTP).

Bei einer Vulkanisation mit Peroxiden werden zur Verzögerung der Anvulkanisation Verbindungen wie sie in WO-A-97/01597 und US-A-4,857,571 genannt sind, eingesetzt. Bevorzugt sind sterisch gehinderte p-Dialkylaminophenole, insbesondere Ethanox 703 (Sartomer)

Die weiteren üblichen Kautschukadditiven schließen z.B. die typischen und dem Fachmann bekannten Substanzen wie Füllstoffe, Füllstoffaktivatoren, Anvulkanisationsverzögerer, Ozonschutzmittel, Alterungsschutz-mittel, Antioxidationsmittel, Verarbeitungshilfsmittel, Extenderöle, Weichmacher, Verstärkungs-materialien und Formtrennmittel.

Als **Füllstoffe** können beispielsweise Ruß, Kieselsäure, Bariumsulfat, Titandioxid, Zinkoxid, Calciumoxid, Calciumcarbonat, Magnesiumoxid, Aluminiumoxid, Eisenoxid, Aluminiumhydroxid, Magnesiumhydroxid, Aluminiumsilikate, Diatomeenerde, Talkum, Kaoline, Bentonite, Kohlenstoff Nanotubes, Teflon (letzteres bevorzugt in Pulverform), oder Silikate eingesetzt werden. Die Füllstoffe werden üblicherweise in Mengen im Bereich von 5 bis 350 Gew.Teilen, bevorzugt von 5 bis 300 Gew.Teilen, bezogen auf 100 Gew.Teile des hydrierten Nitrilkautschuks eingesetzt.

Als **Füllstoffaktivatoren** kommen insbesondere organische Silane, wie beispielsweise Vinyltrimethyloxysilan, Vinyldimethoxymethylsilan, Vinyltriethoxysilan, Vinyltris(2-methoxy-ethoxy)-silan, N-Cyclohexyl-3-aminopropyltrimethoxysilan, 3-Aminopropyl-trimethoxysilan, Methyltrimethoxysilan, Methyltlriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan oder (Octadecyl)methyldimethoxysilan in Betracht. Weitere Füllstoffaktivatoren stellen zum Beispiel grenzflächenaktive Substanzen wie Triethanolamin und Ethylenglykole mit Molekulargewichten von 74 bis 10 000 g/mol dar. Die Menge an Füllstoffaktivatoren beträgt üblicherweise 0 bis 10 phr, bezogen auf 100 phr des erfindungsgemäßen hydrierten Nitrilkautschuks.

Als **Alterungsschutzmittel** können den vulkanisierbaren Mischungen beispielsweise die folgenden zugesetzt werden: Polymerisiertes 2,2,4-Trimethyl-1,2-dihydrochinolin (TMQ), 2-Mercaptobenzimidazol (MBI), Methyl-2-Mercaptobenzimidazol (MMBI) oder Zinkmethylmercaptobenzimidazol (ZMMBI).

Alternativ können auch die folgenden, allerdings weniger bevorzugten Alterungsschutzmittel eingesetzt werden: aminische Alterungsschutzmittel z. B. in Form von Mischungen aus Diaryl-p-phenylendiaminen (DTPD), octyliertem Diphenylamin (ODPA), Phenyl-α-Naphthylamin (PAN) und/oder Phenyl-β-Naphthylamin (PBN). Vorzugsweise werden solche auf Phenylendiaminbasis eingesetzt. Beispiele für Phenylendiamine sind N-Isopropyl-N'-phenyl-p-Phenylendiamin, N-1,3-Dimethylbutyl-N'-Phenyl-p-Phenylendiamin (6PPD), N-1,4-Dimethylpentyl-N'-phenyl-p-Phenylendiamin (7PPD) und N,N'-bis-1,4-(1,4-Dimethylpentyl)-p-Phenylendiamin (7PPD).

Die Alterungsschutzmittel werden üblicherweise in Mengen von bis zu 10 Gew.Teilen, bevorzugt bis zu 5 Gew.Teilen, besonders bevorzugt 0,25 bis 3 Gew.Teilen, inbesondere 0,4 bis 1,5 Gew. Teile, bezogen auf 100 Gew.Teile des hydrierten Nitrilkautschuks eingesetzt.

Als **Formtrennmittel** kommen z.B. gesättigte oder teilweise ungesättigte Fett- und Ölsäuren und deren Derivate (Fettsäureester, Fettsäuresalze, Fettalkohole, Fettsäureamide), die vorzugsweise als Mischungsbestandteil Verwendung finden, weiterhin auf die Formoberfläche applizierbare Produkte auf Basis von niedermolekularen Silikonverbindungen, Produkte auf Basis von Fluorpolymeren sowie Produkte auf Basis von Phenolharzen in Betracht.

Die Formtrennmittel werden üblicherweise in Mengen von ca. 0 bis 10 Gew.Teilen, bevorzugt 0,5 bis 5 Gew.Teilen, bezogen auf 100 Gew.Teile des erfindungsgemäßen hydrierten Nitrilkautschuks eingesetzt.

Auch die Verstärkung mit Festigkeitsträgern (Fasern) aus Glas nach der Lehre von US-A-4,826,721 ist möglich sowie die Verstärkung durch Corde, Gewebe, Fasern aus aliphatischen und aromatischen Polyamiden (Nylon®, Aramid®), Polyestern und Naturfaserprodukten.

Das Mischen der Komponenten zwecks Herstellung der vulkanisierbaren Mischungen erfolgt typischerweise entweder im Innenmischer oder auf einer Walze. Als Innenmischer werden üblicherweise solche mit sogenannter "ineinandergreifender" Rotorgeometrie verwendet. Zum Startzeitpunkt erfolgt die Beschickung des Innenmischers mit dem erfindungsgemäßen hydrierten Nitrilkautschuk. Dieser liegt üblicherweise in Ballenform vor und wird dabei zunächst zerkleinert. Nach einem geeigneten Zeitraum, den der Fachmann problemlos festlegen kann, erfolgt die Zugabe der Additive und typischerweise am Schluss des Vernetzungssystems. Das Mischen erfolgt unter Kontrolle der Temperatur mit der Maßgabe, dass das Mischgut für eine geeignete Zeit bei einer Temperatur im Bereich von 100 bis 150°C verbleibt. Nach einem geeigneten Mischzeitraum wird der Innenmischer gelüftet und der Schacht gereinigt. Nach einem weiteren Zeitraum wird der Innenmischer unter Erhalt der vulkanisierbaren Mischung entleert. Alle vorgenannten Zeiträume bewegen sich üblicherweise im Bereich einiger Minuten und können vom Fachmann problemlos in Abhängigkeit von der herzustellenden Mischung festgelegt werden. Werden Walzen als Mischaggregat verwendet, kann in analoger Weise und Reihenfolge bei der Zudosierung vorgegangen werden.

**Gegenstand der Erfindung** ist ferner ein **Verfahren zur Herstellung von Vulkanisaten** auf Basis der erfindungsgemäßen hydrierten Nitrilkautschuke, dadurch gekennzeichnet, dass die vulkanisierbaren Mischung enthaltend den erfindungsgemäßen hydrierten Nitrilkautschuk der Vulkanisation unterworfen wird. Üblicherweise erfolgt die Vulkanisation bei Temperaturen im Bereich von 100°C bis 200°C, bevorzugt bei Temperaturen von 120°C bis 190°C und ganz besonders bevorzugt von 130°C bis 180°C.

Bevorzugt erfolgt die Vulkanisation in einem Formgebungsverfahren.

Die vulkanisierbare Mischung wird dafür mittels Extrudern, Spritzgussanlagen, Walzen oder Kalandern weiterverarbeitet. Die so erhältliche vorgeformte Masse wird anschließend typischerweise in Pressen, Autoklaven, Heißluftanlagen oder in sogenannten automatischen Matten-vulkanisationsanlagen ausvulkanisiert, wobei sich Temperaturen im Bereich von 100°C bis 200°C, bevorzugt 140°C bis 190°C bewährt haben. Die Vulkanisationszeit beträgt typischerweise 1 Minute bis 24 Stunden und bevorzugt 2 Minuten bis 1 Stunde. Abhängig von der Form und der Größe der Vulkanisate kann eine zweite Vulkanisation durch erneutes Erhitzen notwendig sein, um eine vollständige Vulkanisation zu erreichen.

**Gegenstand der Erfindung** ist somit ebenso das **Vulkanisat,** bevorzugt als Formteil vorliegend, welches durch das vorgenannte Vulkanisationsverfahren erhältlich ist. Diese Vulkanisate zeichnen sich durch einen verminderten Compression Set und erhöhte Moduli aus.

Diese Vulkanisate können die Form eines Riemen, von Walzenbelägen, einer Dichtung, einer Kappe, eines Stopfen, eines Schlauchs, von Bodenbelag, von Dichtungsmatten oder -platten, Profilen oder Membranen aufweisen. Speziell kann es sich um eine O-Ringdichtung, eine Flachdichtung, einen Wellendichtring, eine Dichtmanschette, eine Dichtkappe, eine Staubschutzkappe, eine Steckerdichtung, einen Thermoisolierschlauch (mit und ohne PVC-Zusatz), einen Ölkühlerschlauch, einen Luftansaugschlauch, einen Servolenkschlauch, eine Schuhsohle oder - teile davon oder eine Pumpenmembran handeln.

Überraschenderweise stört das im erfindungsgemäßen Verfahren durch die Umsetzung von Phosphanen bzw. Diphosphanen mit den speziellen Schwefeldonoren gebildete Phosphan- bzw. Diphosphansulfid im hydrierten Nitrilkautschuk weder dessen Vulkanisationsverhalten noch die Vulkanisateigenschaften des hydrierten Nitrilkautschuks. Insofern wird es durch die vorliegende Erfindung möglich, die katalytische Hydrierung von Nitrilkautschuk mit hoher Reaktionsgeschwindigkeit und gleichzeitig geringen Katalysatormengen und bei geringerem Druck mit Hydrierkatalysatoren, die mindestens einen Phosphan oder Diphosphan-Liganden aufweisen, und/oder mit Phosphanen/Diphosphanen als Co-Katalysatoren durchzuführen, und trotzdem hydrierte Nitrilkautschuke und damit Vulkanisate mit dem erwünschten Eigenschaftsprofil zu erhalten.

### Beispiele:

### 1. Analytik

### Bestimmung des Triphenylphosphan- ("TPP") und Triphenylphosphansulfid- ("TPP=S" oder "TPPS") Gehalts

Die Bestimmung des Gehaltes an Triphenylphosphan und Triphenylphosphansulfid im hydrierten Nitrilkautschuk erfolgte mittels Gaschromatographie unter Verwendung eines internen Standards. Für die Bestimmung wurden jeweils 2 bis 3 g ±0,01 g HNBR in ein Probengläschen eingewogen, mit 25 ml Aceton gelöst, mit einer bekannten Menge internen Standards (Docosan von Sigma-Aldrich; CA: 629-97-0) versetzt und nach gründlicher Durchmischung durch Zusatz von 50 ml Methanol ausgefällt. Das Fällserum wurde gaschromatographisch mittels einer Kapillarsäule aufgetrennt (z.B.: HP-5, 0,25 µm Film, 30 m x 0,32 mm ID)

| | |
|---|---|
| Injektionsmenge: | 1 µL |
| Injektionstemperatur: | 300 °C |
| Ofen-Temperaturprogramm: | Einstellung von 150°C; danach innerhalb von 10min Aufheizen auf 300 °C und Halten dieser Temperatur für 5 min |
| Detektortemperatur: | 300 °C |

Zur Detektion wurde ein Flammenionisations-Detektor (FID) eingesetzt.

Unter den angegebenen Bedingungen weisen TPP, TPP=S sowie der interne Standard die folgenden Retentionszeiten auf:

| | |
|---|---|
| TPP: | 8,47 min. |
| Docosan: | 8,65 min. |
| TPP=S: | 12,13 min. |

Zur quantitativen Bestimmung der in HNBR enthaltenen Mengen an TPP und TPP=S wurden Responsefaktoren von TPP/n-Docosan sowie von TPP=S/Docosan verwendet, die vorher in unabhängigen Messungen unter Beachtung des linearen Kalibrierbereichs bestimmt wurden.

Soweit in den folgenden Tabellen bei TPP Gehalten "< 0,01 Gew.%" angegeben ist, bedeutet dies, dass der (etwaige) TPP Gehalt unterhalb der analytischen Nachweisgrenze lag.

### Bestimmung des Hydriergrads:

Die exakten Hydriergrade wurden nach Beendigung der Hydrierung des Nitrilkautschuks nach den in Kautschuk + Gummi. Kunststoffe, Vol 42 (1989), No. 2, 107-110 und Kautschuk + Gummi. Kunststoffe, Vol 42 (1989), No. 3, 194-197 beschriebenen Methoden bestimmt.

### 2. Umsetzungen

### Eingesetzter Nitrilkautschuk:

Der für alle nachfolgend beschriebenen Hydrierungen eingesetzte Nitrilkautschuk wurde nach EP-A-1 369 436, Beispiel 2 hergestellt. Er wies folgende charakteristischen Kenngrößen auf:

| | |
|---|---|
| Acrylnitrilgehalt: | 34,5 Gew.% |
| Mooney Viskosität [ML1+4 @100°C]: | 30 ME |

### Versuchsserien 1, 2, 3 und 6:

Die in den **Versuchsserien 1, 2, 3 und 6** eingesetzten hydrierten Nitrilkautschuke wurden durch Hydrierung in 17,5 Gew.%iger Lösung bei einem Wasserstoffdruck von 190 bar bei einer Temperatur von 120 °C bis 130 °C erhalten, wobei die in den folgenden Tabellen genannten TPP Mengen eingesetzt wurden. Bei den Hydrierungen wurden jeweils 5,25 kg des o.g. Nitrilkautschuks in einem 401-Autoklaven in 24,25 kg Chlorbenzol gelöst. Vor der Hydrierung wurde die Polymerlösung jeweils unter Rühren (170 U/min) sukzessive 1mal mit Stickstoff (20bar) und 2mal mit Wasserstoff (20bar) beaufschlagt und anschließend entspannt. Nach Beaufschlagung mit 190 bar Wasserstoff wurden die in den Tabellen angegebenen TPP Mengen (Merck Schuchardt OHG; Bestell-Nr. 8.08270) jeweils als Lösung in 250g Chlorbenzol zudosiert. Die Hydrierung wurde gestartet, indem als Katalysator 0,1 Gew.% (bezogen auf Nitrilkautschuk) Tris-(triphenylphosphan)rhodium(I)-chlorid (Evonik Industries AG) als Lösung in 250 g Chlorbenzol zugegeben wurde. Die Beobachtung des Verlaufs der Hydrierung erfolgte online durch Bestimmung der Wasserstoffaufnahme. Die Hydrierungen wurden jeweils bei Hydriergraden von 99,5 + 0,3 % durch Abkühlen der Reaktionsmischung abgebrochen. Anschließend wurden die Ansätze entspannt. Restmengen an Wasserstoff wurden mittels Durchleitung von Stickstoff entfernt.

### Versuchsserie 4 (a und b):

Für die **Versuchsserie 4a und 4b** wurde ebenfalls der o.g. Nitrilkautschuk eingesetzt. Die Hydrierung wurde in Analogie zu den Versuchsserien 1, 2, 3, und 6 unter folgenden Rahmenbedingungen durchgeführt:

| | |
|---|---|
| NBR-Konzentration in Chlorbenzol: | 12 Gew.% |
| Wasserstoffdruck: | 80 bar |
| Rührgeschwindigkeit: | 600 min⁻¹ |
| Reaktionstemperatur: | 138°C |
| Tris(triphenylphosphan)rhodium(I)chlorid: | 0,08 phr |
| Triphenylphosphan: | 1 phr |

Die Hydrierung wurde bei einem Hydriergrad von 94,5 % durch Abkühlen der Reaktionsmischung abgebrochen. Anschließend wurden die Ansätze entspannt. Restmengen an Wasserstoff wurden durch Durchleitung von Stickstoff entfernt.

### Versuchsserie 5:

Für die **Versuchsserie 5** wurde ebenfalls der o.g. Nitrilkautschuk eingesetzt. Vor der Hydrierung wurde ein Metatheseabbau des Nitrilkautschuks nach WO-A-02/100905 unter Verwendung von 0,05 phr Grubbs-II-Katalysator (bezogen von Materia/Pasadena) und 2,0 phr 1-Hexen in chlorbenzolischer Lösung bei 80°C durchgeführt. Die anschließende Hydrierung wurde in Analogie zu den Versuchsserien 1, 2, 3, und 6 unter folgenden Rahmenbedingungen durchgeführt:

| | |
|---|---|
| NBR-Konzentration in Chlorbenzol: | 12 Gew.% |
| Wasserstoffdruck: | 80 bar |
| Rührgeschwindigkeit: | 600 min⁻¹ |
| Reaktionstemperatur: | 138°C |
| Tris(triphenylphosphan)rhodium(I)chlorid: | 0,08 phr |
| Triphenylphosphan: | 3 phr |

Die Hydrierung wurde bei einem Hydriergrad von 96 % durch Abkühlen der Reaktionsmischung abgebrochen. Anschließend wurden die Ansätze entspannt. Restmengen an Wasserstoff wurden durch Durchleitung von Stickstoff entfernt.

### Katalysatorrückgewinnung:

In den **Versuchsserien 1, 2, 3, 4a** und **6** erfolgte keine Entfernung des bei der Hydrierung eingesetzten Rhodiums. In den **Versuchsserien 4b** und **5** wurde der Katalysator nach der Hydrierung wie in Beispiel 5 der US-A-4,985,540 beschrieben abgetrennt, wobei das thioharnstoffhaltige Ionenaustauscherharz aus diesem Beispiel 5 eingesetzt wurde. Für die Rhodiumabtrennung wurde die Polymerlösung auf eine Feststoffkonzentration von 5 Gew.% verdünnt.

### Schwefeldonoren

Als Schwefeldonoren wurden die in **Tabelle I** genannten Verbindungen **A** - **G** eingesetzt.

**Tabelle I: Schwefeldonoren**

| **Schwefeldonor** | | **Provenienz und Charakteristika** | **Molmasse [g/mol]** |
|---|---|---|---|
| **A** | Elementarer Schwefel | Mahlschwefel 90/95, Chancel; (Deutsche Solvay-Werke) | 32 |
| **B** | Kaliumpolysulfid (nachfolgend abgekürzt als KPS) | Sigma-Aldrich, Bestell-Nr.: 12665; CAS 37199-66-9; K₂Sₓ mit x= 2-6 | - |
| **C** | Tetraethylthiuramdisulfid (nachfolgend abgekürzt als "TETD") | Rhenogran® TETD (RheinChemie, Mannheim) | 297 |
| | 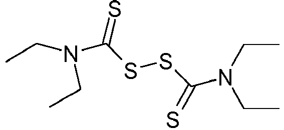 | | |
| **D** | Bis[(5-ethyl-1,3-dioxan-5-yl)-methyl]-xanthogendisulfid (nachfolgend abgekürzt als "MTX") | Herstellung nach EP 0 053 319 A1, Beispiel 4a) Gehalt an freiem Schwefel: 1,0 Gew.% | 443 |
| | 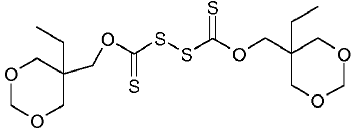 | | |
| **E** | Bis(pentamethylen)thiuramtetrasulfid (nachfolgend abgekürzt als "DPTT") | Rhenogran® DPTT-70 (RheinChemie Rheinau GmbH; Wirkstoffgehalt von 70 Gew.%) | 385 |
| | 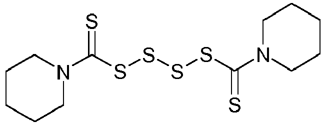 | | |
| **F** | Bis(triethoxysilylpropyl)polysulfid (nachfolgend abgekürzt als "Si 69®") | Si69® (Evonik Industries AG) nach Herstellerangabe beträgt die mittlere Länge der Schwefelbrücke: <x> = 3,75 | 539 |
| | 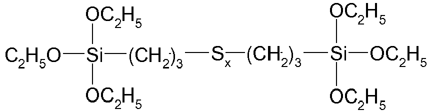 | | |
| **G** | Bis(triethoxysilylpropyl)polysulfid (nachfolgend abgekürzt als "Si 75®") | Si 75® (Evonik Industries AG) nach Herstellerangabe beträgt die mittlere Länge der Schwefelbrücke: <x> = 2,35 | 475 |
| | 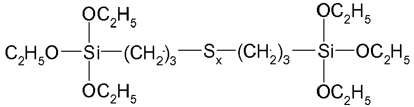 | | |

In den **Versuchsserien 2, 3, 4a** und **4b** erfolgte der Zusatz des Schwefeldonors vor der Durchführung der Wasserdampfdestillation, wobei die Schwefeldonoren **A, C, D, E, F und G** direkt in die chlorbenzolische Lösung des hydrierten Nitrilkautschuks gegeben wurden. Der wasserlösliche **Schwefeldonor B** wurde in destilliertem Wasser (1/10 der Gesamtmenge an chlorbenzolischer Lösung des hydrierten Nitrilkautschuks) gelöst und unter Rühren zur Lösung des hydrierten Nitrilkautschuks gegeben.

### Isolierung des hydrierten Nitrilkautschuks aus chlorbenzolischer Lösung:

Die Entfernung des Chlorbenzols erfolgte batchweise durch Wasserdampfdestillation. Der Wasserdampf wurde über eine am Boden des Strippgefäßes angebrachten Ringdüse bei Normaldruck eingeleitet. Hierbei destillierten die aus Chlorbenzol und Wasserdampf bestehenden Brüden bei einer Kopftemperatur von 102°C ab. Die Brüden wurden kondensiert und in eine Chlorbenzolphase und eine wässrige Phase separiert. Sobald sich kein Chlorbenzol mehr aus den Brüden abschied (nach ca. 3 h), wurde die Wasserdampfdestillation abgebrochen. Der in der Form gröberer Klumpen vorliegende hydrierte Nitrilkautschuk wurde isoliert und im Vakuumtrockenschrank bei 70 °C unter leichtem Luftstrom bis zur Gewichtskonstanz getrocknet.

In den **Versuchsserien 5a und 5b** sowie **Versuchsserien 6a und 6b** wurden die Schwefeldonoren bzw. Triphenylphosphansulfid in fester Form auf einer Walze eingemischt. Eine detaillierte Beschreibung der Vorgehensweise findet sich bei den entsprechenden Versuchsserien.

### Kautschukmischungen und Vulkanisation:

Zur Beurteilung des Verarbeitungsverhaltens und zur Bestimmung der Vulkanisationsgeschwindigkeit und der Vulkanisateigenschaften wurden die in den Versuchsserien erhaltenen hydrierten Nitrilkautschuke mit den in **Tabelle II** aufgeführten Bestandteilen gemischt.

**Tabelle II: Zusammensetzung der vulkanisierbaren Mischungen**

| **Mischungsbestandteil** | **Bezeichnung des Handelsprodukts (Hersteller/Lieferant)** | **Menge [Gew.-Teile]** |
|---|---|---|
| Isolierter hydrierter Nitrilkautschuk hergestellt gemäß den Versuchsserien | | 100 |
| Zinkoxid | Zinkweiss Rotsiegel; | 2,0 |
| | (Grillo Zinkoxid GmbH) | |
| Magnesiumoxid | Maglite® DE | 2,0 |
| | (Merck & Co. Inc. USA) | |
| Octyliertes Diphenylamin | Rhenofit® DDA-70 | 1,43 |
| | (RheinChemie Rheinau GmbH) | |
| Zinksalz des 2-Mercaptobenzimidazols | Vulkanox® ZMB-2 | 0,4 |
| | (Lanxess Deutschland GmbH) | |
| Ruß | Corax® N 550 | 45 |
| | (Evonik Industries AG) | |
| Triallylisocyanurat | Kettlitz-TAIC 50 | 3,0 |
| | (Kettlitz Chemie GmbH.) | |
| Bis(tert-butylperoxyisopropyl)benzol (40%ig) | Perkadox® 14-40 K-PD | 7 |
| | (Akzo-Nobel Chemicals GmbH) | |

Die Mischungsherstellung erfolgte in einem Laborkneter mit 1,5 l Innenvolumen (GK 1,5 E der Firma Werner&Pfleiderer, Stuttgart) mit ineinandergreifenden Knetelementen (PS 5A - Schaufelgeometrie), der auf 50°C vorgewärmt war. Die Zugabe der Mischungsbestandteile erfolgte in der in der Tabelle II angegebenen Reihenfolge.

### Eigenschaften der unvulkanisierten Kautschukmischungen:

Zur Beurteilung des Verarbeitungsverhaltens der unvulkanisierten Kautschukmischungen wurden Mooney-Viskositäten nach 1 min Aufheizzeit und nach 4 min. Messzeit bei 100°C (ML1+4 @100°C) sowie bei 120°C (ML1+4 @120°C) nach **ASTM D1646** bestimmt. Niedrige Werte sowohl der Mischungsviskosität als auch der Mooney Relaxation sind Hinweise für eine gute Verarbeitbarkeit der Kautschukmischungen.

Das **Vulkanisationsverhalten** der Mischungen wurde nach ***ASTM D* 5289-95** bei 180°C bestimmt. Hierfür wurden sowohl ein Bayer-Frank-Vulkameter (Fa. Agfa) als auch ein Moving Die Rheometer (MDR2000 der Firma Alpha Technology) eingesetzt (siehe Versuchsserien). Charakteristische Vulkameterwerte wie Fₘᵢₙ, Fₘₐₓ, F_{max.}-F_{min.} werden beim Bayer-Frank-Vulkameter in der Dimension cN und beim Moving Die Rheometers in der Dimension dNm erhalten. Charakteristische Zeiten wie t₁₀, t₅₀, t₉₀ und t₉₅ werden unabhängig von der Messmethode in Minuten (min) bzw. Sekunden (sec.) bestimmt.

Nach ***DIN 53 529, Teil 3*** bedeuten folgende Kennwerte:
- F_{min..}:: Vulkameterwert im Minimum der Vernetzungsisotherme
- F_{max.}:: Vulkameterwert im Maximum der Vernetzungsisotherme
- Fₘₐₓ-F_{min.}:: Differenz der Vulkameteranzeigen zwischen Maximum und Minimum
- t₁₀:: Zeitpunkt, bei dem 10% des Endumsatzes erreicht sind
- t₅₀:: Zeitpunkt, bei dem 50% des Endumsatzes erreicht sind
- t₉₀:: Zeitpunkt, bei dem 90% des Endumsatzes erreicht sind
- t₉₅:: Zeitpunkt, bei dem 95% des Endumsatzes erreicht sind

Die für die Vulkanisatcharakterisierung eingesetzten **Prüfkörper** wurden in einer Presse bei einem Hydraulikdruck von 120 bar hergestellt. Die Vulkanisationszeiten und Temperaturen sind bei den Versuchsserien angegeben. Die Vulkanisate einiger Versuchsserien wurden vor der Charakterisierung einer 6stündigen Temperung bei 150°C unterzogen (siehe Versuchsserien).

**An den Vulkanisaten wurden folgende Eigenschaften nach den jeweils genannten Normen bestimmt:**

| | |
|---|---|
| DIN 53505: | Shore A-Härte bei 23°C und 70°C ("Shore A/23°C" und "Shore A/70°C") |
| DIN 53512: | Rückprallelastizität bei 23°C und 70°C |
| DIN 53504: | Spannungswerte bei 10%, 25%, 50%, 100%, 200% und 300 % Dehnung (σ₁₀, σ₂₅, σ₅₀, σ₁₀₀, σ₂₀₀ und σ₃₀₀) , Zugfestigkeit sowie Bruchdehnung (ε_{b}) |
| DIN 53516: | Abrieb |

Im **Goodrich-Flexometer** wurde gemäß DIN 53533 die Temperaturerhöhung nach dynamischer Belastung bestimmt. Die Messungen wurden bei 100°C, einer Vorspannung von 1,0 MPa, einem Hub von 4,00 mm und einer Beanspruchungszeit von 25 min. durchgeführt. Das Vulkanisat ist qualitativ umso besser, je niedriger die Temperaturerhöhung ("Heat-build-up") ist.

Der **Druckverformungsrest bzw. Compression Set (CS)** wurde nach DIN 53517 bestimmt, indem ein zylindrischer Probenkörper um 25% komprimiert und im komprimierten Zustand bei den in den Tabellen angegebenen Zeiten und Temperaturen (z. B. 70 h/23°C bzw. 70h/150°C) gelagert wurde. Nach Relaxation der Proben wurde die bleibende Verformung (Druckverformungsrest bzw. (English) "Compression Set") der Probe bestimmt. Für die Bestimmung wurden zylindrische Probenkörper mit folgenden Abmessungen eingesetzt: Höhe: 6,3; Durchmesser: 13 mm; (Probekörper 1). Der Compression Set einer Probe ist umso besser, je niedriger die bleibende Verformung ist; d. h. 0% bleibende Verformung ist sehr gut und 100% bleibende Verformung ist sehr schlecht.

### Versuchsserie 1 (Vergleich)

In **Versuchsserie 1a** wurde die bei der Hydrierung eingesetzte Menge an TPP variiert. Die nach der Isolierung des hydrierten Nitrilkautschuks aus der chlorbenzolischen Lösung bestimmten Eigenschaften des hydrierten Nitrilkautschuks (Gehalte an TPP, TTT=S und Mooney Werte) sind in **Tabelle 1a** zusammengefasst.

Zu erkennen ist, dass die Hydrierzeiten durch den Zusatz von TPP (bis 3,0 Gew. % bezogen auf Nitrilkautschuk) verkürzt werden. Mit steigender Menge an TPP, die im hydrierten Nitrilkautschuk verbleibt, verschlechterten sich die Modulwerte, d.h. die Spannungswerte bei bestimmten Dehnungen, und die Compression Set Werte der Vulkanisate. Die nicht erfindungsgemäßen hydrierten Nitrilkautschuke der Versuchsserie 1a wiesen TPP Gehalte bis 2,6 Gew.% und TPP=S Gehalte bis 0,021 Gew.% auf.

Mit den hydrierten Nitrilkautschuken der **Versuchsserie 1a** wurden Kautschukmischungen mit der in Tabelle II angegebenen Zusammensetzung hergestellt und vulkanisiert. An den Vulkanisaten wurden die in **Tabelle 1 b** angegebenen Werte ermittelt.

### Versuchsserie 2 (erfindungsgemäß bis auf Beispiel 2.1)

In **Versuchsserie 2** wurden aliquote Mengen verschiedener in **Versuchsserie 1a** erhaltener chlorbenzolischer Lösungen hydrierter Nitrilkautschuke mit unterschiedlichen Mengen an elementarem Schwefel (bei konstantem Molverhältnis TPP/Schwefel) versetzt und aufgearbeitet (**Versuchsserie 2a**). In Versuch 2.2 wurde die chlorbenzolische Lösung aus Versuch 1.3, in Versuch 2.3 die chlorbenzolische Lösung aus Versuch 1.4 und in Versuch 2.4 die chlorbenzolische Lösung aus Versuch 1.6 verwendet. Hierbei wurden hydrierte Nitrilkautschuke erhalten, welche die in **Tabelle 2a** zusammengefassten Eigenschaften (Gehalte an TPP, TPP=S und Mooney Viskosität) aufwiesen.

Auf Basis der hydrierten Nitrilkautschuke der **Versuchsserie 2a** wurden mit den in **Tabelle II** aufgeführten Bestandteilen Kautschukmischungen hergestellt und vulkanisiert. An den Vulkanisaten wurden die in **Tabelle 2b** zusammengefassten Eigenschaften bestimmt.

Erkennbar ist, dass es überraschenderweise gelingt, den schädlichen Einfluss steigender Gehalte an TPP auf die Vulkanisateigenschaften durch den Zusatz von elementarem Schwefel (Molverhältnis TPP/Schwefel = 1/1) zu kompensieren. Der Gehalt an TPP=S lag bei den erfindungsgemäßen hydrierten Nitrilkautschuke der Versuchsserie 2 im Bereich von 0,95 bis 3,25 Gew.%.

### Versuchsserie 3 (erfindungsgemäß bis auf Versuch 3.1)

In **Versuchsserie 3a** wurde die in Versuch 1.3 erhaltene HNBR-Lösung aliquotiert und mit unterschiedlichen Mengen an Schwefel versetzt. Die nach der Isolierung des hydrierten Nitrilkautschuks aus der chlorbenzolischen Lösung ermittelten analytischen Gehalte an TPP und TPP=S sind in **Tabelle 3a** zusammengestellt.

Auf Basis der in **Versuchsserie 3a** erhaltenen hydrierten Nitrilkautschuke wurden Kautschukmischungen mit den in **Tabelle II** angegebenen Zusammensetzungen hergestellt und vulkanisiert. Die an den Vulkanisaten ermittelten Werte sind in **Tabelle 3b** zusammengefasst.

Gezeigt wurde, dass der Gehalt an TPP im hydrierten Nitrilkautschuk, bei dessen Herstellung 1,0 phr TPP eingesetzt wurde, durch unterschiedliche Mengen an Schwefelzusätzen (Molverhältnis TPP/Schwefel von 0,4/1 bis 1,23/1) verringert und das Modul- und Compression Set-Niveau der vulkanisierten hydrierten Nitrilkautschuke verbessert wird. Bei den erfindungsgemäßen Beispielen der Versuchsserie 3 lag der Gehalt an TPP=S im Bereich von 0,4 bis 1,05 Gew.%.

### Versuchsserie 4 (erfindungsgemäß)

In **Versuchsserie 4a** wurden chlorbenzolische Lösungen von hydriertem Nitrilkautschuk mit Schwefeldonoren unterschiedlicher Art und Menge unter Variation der Reaktionszeit umgesetzt. Basis für die in Versuchsserie 4 durchgeführten Beispiele war ein vollständig hydrierter Nitrilkautschuk, der durch Hydrierung unter Zusatz von 1,2 phr Triphenylphosphan unter den in Versuchsserie 1 angewandten Rahmenbedingungen erhalten wurde (Versuch 4.0).

Nach der Isolierung der hydrierten Nitrilkautschuke aus den chlorbenzolischen Lösungen wurden die in den **Tabellen 4a und 4b** zusammengestellten Gehalte an TPP sowie TPP=S gemessen. In **Versuchsserie 4a** wurde das in der Lösung enthaltene Rhodium in der Lösung belassen, in der **Versuchsserie 4b** dagegen vor Zusatz der Schwefeldonoren abgetrennt.

Gezeigt wurde, dass durch Zusatz verschiedener Schwefeldonoren zur chlorbenzolischen HNBR-Lösung eine Reduktion des TPP Gehalts und eine Zunahme des TPP=S Gehalts erreicht wird.

Die erfindungsgemäßen hydrierten Nitrilkautschuke der Versuchsserien 4a (4.1* bis 4.16*) und 4b (4.17* bis 4.21*) wiesen TPP Gehalte im Bereich bis 0,52 Gew.% und TPP=S Gehalte im Bereich bis 1,18 Gew.% auf.

### Versuchsserie 5 (erfindungsgemäß)

Eingesetzt wurde ein teilhydrierter Nitrilkautschuk, dessen Molekulargewicht zunächst mittels Metathese abgebaut wurde, bevor die Hydrierung in Gegenwart von 3 Gew.% TPP erfolgte. In **Versuchsserie 5** wurde als Schwefeldonor elementarer Schwefel oder DPTT verwendet, welcher ohne die Verwendung von Lösungsmitteln zum hydrierten Nitrilkautschuk gegeben wurden. Hierfür wurde ein temperierbarer Walzenstuhl mit zwei gegenläufigen Walzen (Firma Schwabenthan; Typ Polymix 110; Walzendurchmesser 110 mm) verwendet. Jede Versuchseinstellung wurde mit jeweils 450 g hydriertem Nitrilkautschuk 2mal durchgeführt. Vor der Zugabe des elementaren Schwefels bzw. DPTT wurde der hydrierte Nitrilkautschuk im 1. Schritt bei Umdrehungsgeschwindigkeiten von 25 und 30 min-¹ bei einem Walzenspalt von 3 mm zu einem Fell ausgewalzt. Der elementare Schwefel bzw. DPTT wurde unter mehrfachem Einschneiden und Stürzen des Walzfells unter den in **Tabelle 5a** angewandten Bedingungen eingearbeitet. Nach der Einarbeitung des Schwefels bzw. DPTT wurden jeweils 2 Walzfelle mit identischer Versuchseinstellung auf der Walze gemischt, so dass von jeder Versuchseinstellung eine Gesamtmenge von 900 g erhalten wurde. An diesen Proben wurden die Gehalte an Triphenylphosphan und Triphenylphosphansulfid (**Versuchsserie 5a**) bestimmt.

Danach wurden in einem Laborkneter mit 1,5 l Innenvolumen (GK 1,5 E der Firma Werner & Pfleiderer, Stuttgart) mit ineinandergreifenden Knetelementen (PS 5A - Schaufelgeometrie), der auf 50°C vorgewärmt war, die in **Tabelle II** genannten Mischungsbestandteile in der dort genannten Reihenfolge zugegeben und eingemischt.

Auf der Basis der auf diese Weise erhaltenen Kautschukmischungen wurden die Eigenschaften in unvulkanisiertem und in vulkanisiertem Zustand ermittelt. Die Ergebnisse sind in **Tabelle 5b** zusammengefasst.

Gezeigt wurde, dass die Umsetzung von TPP zu TPP=S auch nach der Isolierung des hydrierten Nitrilkautschuks aus der organischen Lösung möglich ist. Durch den Zusatz der Schwefeldonoren wurde bei den erfindungsgemäßen Beispielen 5.2*, 5.3*, 5.4*, 5.5* und 5.6* eine Verbesserung des Modul- und Compression Set Niveaus erreicht. Außerdem wurde im Goodrich-Flexometertest eine Reduktion des heat-build-up gemessen.

Die erfindungsgemäßen hydrierten Nitrilkautschuke der **Versuchsserie 5** wiesen TPP im Bereich bis 0,13 Gew.% und TPP=S im Bereich von 2,86 bis 3,04 Gew.% auf.

### Versuchsserie 6 (erfindungsgemäß)

In den **Versuchsserien 6a und 6b** wurde der Einfluss von TPP=S auf die Vulkanisateigenschaften untersucht. Hierfür wurden dem hydrierten Nitrilkautschuk aus **Versuchsserie 1.1 (=6.1)** bei der Herstellung von Mischungen gemäß Tabelle II unterschiedliche Mengen an TPP=S (**siehe Versuchsserie 6a)** auf einem temperierbaren Walzenstuhl mit zwei gegenläufigen Walzen (Firma Schwabenthan; Typ Polymix 110; Walzendurchmesser 110 mm) zugesetzt. Jede Versuchseinstellung wurde 2mal mit jeweils 450 g Kautschuk durchgeführt. Die Einarbeitung von TPP=S erfolgte bei einem Walzenspalt von 3 mm (Umdrehungsgeschwindigkeiten 25 und 30 min⁻¹) bei einer Walzentemperatur von 20°C, und einer Temperatur des Walzfells von 40°C unter mehrfachem Einschneiden und Stürzen des Walzfells in einem Zeitraum von 5 min. Nach der Einarbeitung des TPP=S wurden die zwei Walzfelle mit identischer Versuchseinstellung auf der Walze gemischt, so dass von jeder Versuchseinstellung eine Gesamtmenge von 900 g erhalten wurde. An diesen Proben wurden die Gehalte an TPP und TPP=S **(Tabelle 6a)** bestimmt.

Danach wurden in einem Laborkneter mit 1,5 l Innenvolumen (GK 1,5 E der Firma Werner & Pfleiderer, Stuttgart) mit ineinandergreifenden Knetelementen (PS 5A - Schaufelgeometrie), der auf 50°C vorgewärmt war, die in Tabelle II) genannten Mischungsbestandteile eingemischt. Die Zugabe der Mischungsbestandteile erfolgte in der in der Tabelle II) angegebenen Reihenfolge.

Auf der Basis der auf diese Weise erhaltenen Kautschukmischungen wurden die Eigenschaften in unvulkanisiertem und in vulkanisiertem Zustand ermittelt. Die Ergebnisse sind in **Tabelle 6b** zusammengefasst.

Gezeigt wurde, dass das Modulniveau und der Compression Set von HNBR-Vulkanisaten durch TPP=S Zusätze nicht negativ beeinflusst wird.

In den erfindungsgemäßen hydrierten Nitrilkautschuke war TPP nicht mehr analytisch nachweisbar und der TPP=S Gehalt lag im Bereich von 0,99 bis 2,97 Gew. %.

Alle Ergebnisse der Versuchsserien sind in den nachfolgenden Tabellen zusammengefasst. Erfindungsgemäße Beispiele sind dabei jeweils mit "*" gekennzeichnet.

**Tabelle 1a: Versuchsserie 1a (Vergleichsbeispiele)**

| **Variation der TPP Menge bei der Hydrierung und TPP-sowie TPP=S Gehalt im vollständig hydrierten Nitrilkautschuk; Keine Zugabe von Schwefeldonor** | | | | | | | |
|---|---|---|---|---|---|---|---|
| **Versuch-Nr.** | | **1.1** | **1.2** | **1.3** | **1.4** | **1.5** | **1.6** |
| TPP-Zusatz bei Hydrierung | Gew.% | 0 | 0,50 | 1,0 | 2,0 | 2,5 | 3,0 |
| Hydrierzeit | h | 7,5 | 6,5 | 5,0 | 4,5 | 4,3 | 4,0 |
| Hydriergrad | % | 99,3 | 99,5 | 99,4 | 99,3 | 99,6 | 99,7 |
| TPP-Gehalt im HNBR nach Aufarbeitung | Gew.% | <0,01 | 0,47 | 0,71 | 1,7 | 2,1 | 2,6 |
| TPP=S-Gehalt im HNBR nach Aufarbeitung | Gew.% | <0,01 | 0,016 | 0,021 | 0,021 | 0,020 | 0,019 |
| ML1+4@ 100°C | ME | 61 | - | 57 | 55 | - | 54 |

**Tabelle 1b: Versuchsserie 1b (Vergleichsbeispiele)**

| **Einfluss von TPP auf die Mischungs- und Vulkanisateigenschaften peroxidisch vulkanisierter hydrierter Nitrilkautschuke aus Versuchsserie 1a** | | | | | |
|---|---|---|---|---|---|
| **Versuch-Nr.** | | **1.1** | **1.3** | **1.4** | **1.6** |
| **Mischungs-Eigenschaften** | | | | | |
| ML1+4 @ 100°C | ME | 110 | 105 | 102 | 99 |
| ML1+4 @ 120°C | ME | 75 | 71 | 70 | 68 |

| **Vulkameter bei 180°C (Bayer-Frank-Vulkameter)** | | | | | |
|---|---|---|---|---|---|
| t₁₀ | min | 1,4 | 1,5 | 1,5 | 1,6 |
| t₉₀ | min | 6,9 | 7,2 | 7,3 | 7,4 |
| t₉₀ - t₁₀ | min | 5,5 | 5,7 | 5,8 | 5,8 |
| Fₘᵢₙ | cN | 195 | 179 | 171 | 162 |
| Fₘₐₓ | cN | 4994 | 4450 | 3922 | 3419 |
| Fₘₐₓ - Fₘᵢₙ | cN | 4799 | 4271 | 3751 | 3257 |

| **Vulkanisateigenschaften (Vulkanisation 15 min bei 180°C; Temperung 6 h bei 150°C)** | | | | | |
|---|---|---|---|---|---|
| Shore A Härte (23°C) | | 72 | 70 | 70 | 69 |
| Shore A Härte (70°C) | | 70 | 68 | 66 | 64 |
| Rückprallelastizität bei 23°C | % | 36 | 37 | 37 | 38 |
| Rückprallelastizität bei 70°C | % | 56 | 54 | 53 | 52 |
| σ₅₀ | MPa | 2,6 | 2,7 | 2,2 | 2,1 |
| σ₁₀₀ | MPa | 5,7 | 5,5 | 4,5 | 4,2 |
| σ₂₀₀ | MPa | 16,0 | 15,3 | 12,3 | 11,1 |
| σ₃₀₀ | MPa | - | 22,7 | 19,7 | 17,2 |
| Zugfestigkeit | MPa | 24,6 | 24,4 | 24,2 | 22,5 |
| ε_{b} | % | 300 | 345 | 390 | 460 |
| CS (70 h/23°C) Probekörper 1 | % | 12,3 | 13,4 | 15,7 | 19,3 |
| CS (70 h/150°C) Probekörper 1 | % | 29,4 | 29,4 | 32,4 | 36,4 |

**Tabelle 2a:Versuchsserie 2a (erfindungsgemäß bis auf Beispiel 2.1)**

| **TPP- und TPP=S-Gehalt im hydrierten Nitrilkautschuk nach Zusatz von elementarem Schwefel (Molverhältnis Schwefeldonor/TPP = 1/1)** | | | | | |
|---|---|---|---|---|---|
| **Versuch-Nr.** | | **2.1=1.1** | **2.2*** | **2.3*** | **2.4*** |
| TPP-Zusatz bei Hydrierung | **Gew.%** | 0 | 1,0 | 2,0 | 3,0 |
| Schwefel-Zusatz | Gew.% | 0 | 0,122 | 0,244 | 0,367 |
| Molverhältnis Schwefeldonor:TPP | mol/mol | - | 1/1 | 1/1 | 1/1 |
| TPP-Gehalt im HNBR nach Aufarbeitung | Gew.% | <0,01 | <0,01 | <0,01 | <0,01 |
| TPP=S-Gehalt im HNBR nach Aufarbeitung | Gew.% | <0,01 | 0,95 | 2,30 | 3,25 |
| ML1+4 @ 100°C | ME | 61 | 60 | 62 | 59 |

**Tabelle 2b:Versuchsserie 2b (erfindungsgemäß bis auf Beispiel 2.1)**

| **Eigenschaften von Mischungen bzw. Vulkanisaten basierend auf hydriertem Nitrilkautschuk aus Versuchsserie 2a** | | | | | |
|---|---|---|---|---|---|
| **Versuch-Nr.** | | **2.1=1.1** | **2.2*** | **2.3*** | **2.4*** |
| **Mischungs-Eigenschaften** | | | | | |
| ML1+4 @ 120°C | ME | 75 | 68 | 68 | 69 |

| **Vulkameter bei 180°C (Bayer-Frank-Vulkameter)** | | | | | |
|---|---|---|---|---|---|
| t₁₀ | min | 1,4 | 1,4 | 1,4 | 1,4 |
| t₉₀ | min | 6,9 | 7,6 | 7,6 | 7,5 |
| t₉₀ - t₁₀ | min | 5,5 | 6,2 | 6,2 | 6,1 |
| Fₘᵢₙ | cN | 195 | 114 | 129 | 139 |
| Fₘₐₓ | cN | 4994 | 4752 | 4921 | 5021 |
| Fₘₐₓ - Fₘᵢₙ | cN | 4799 | 4638 | 4792 | 4882 |

| **Vulkanisateigenschaften (Vulkanisation 15 min bei 180°C; Temperung 6 h bei 150°C)** | | | | | |
|---|---|---|---|---|---|
| Shore A Härte (23°C) | | 72 | 73 | 72 | 73 |
| Shore A Härte (70°C) | | 70 | 71 | 71 | 72 |
| Rückprallelastizität bei 23°C | % | 36 | 37 | 37 | 36 |
| Rückprallelastizität bei 70°C | % | 56 | - | - | - |
| σ₁₀₀ | MPa | 5,7 | 6,4 | 6,5 | 7,4 |
| σ₂₀₀ | MPa | 16,0 | 17,3 | 17,3 | 18,8 |
| Zugfestigkeit | MPa | 24,6 | 24,7 | 25,0 | 24,3 |
| ε_{b} | % | 300 | 290 | 295 | 265 |
| CS (70 h/23°C) Probekörper 1 | % | 12,3 | 11,8 | 12,3 | 11,2 |
| CS (70 h/150°C) Probekörper 1 | % | 29,4 | 31,1 | 27,7 | 28,3 |

**Tabelle 3a:Versuchsserie 3a (erfindungsgemäß bis auf Beispiel 3.1)**

| **TPP- und TPP=S Gehalt im hydrierten Nitrilkautschuk bei Variation des Molverhältnisses Schwefeldonor:TPP** | | | | | | |
|---|---|---|---|---|---|---|
| **Versuch-Nr.** | | **3.1=1.3** | **3.2*** | **3.3*** | **3.4*** | **3.5*** |
| TPP-Zusatz bei Hydrierung | phr | 1,0 | 1,0 | 1,0 | 1,0 | 1,0 |
| Schwefel-Zusatz | phr | - | 0,05 | 0,1 | 0,12 | 0,15 |
| Molverhältnis Schwefeldonor:TPP | mol/mol | - | 0,41/1 | 0,81/1 | 0,98/1 | 1,23/1 |
| TPP-Gehalt im HNBR nach Aufarbeitung | Gew.% | 0,71 | 0,25 | 0,14 | <0,01 | <0,01 |
| TPP=S-Gehalt im HNBR nach Aufarbeitung | Gew.% | 0,021 | 0,4 | 0,83 | 0,95 | 1,05 |

**Tabelle 3b:Versuchsserie 3b (erfindungsgemäß bis auf Beispiel 3.1)**

| **Eigenschaften von Mischungen bzw. Vulkanisaten basierend auf hydriertem Nitrilkautschuk aus Versuchsserie 3a** | | | | | | |
|---|---|---|---|---|---|---|
| **Versuch-Nr.** | | **3.1=1.3** | **3.2*** | **3.3*** | **3.4*** | **3.5*** |
| **Mischungs-Eigenschaften** | | | | | | |
| ML1+4 @ 120°C | ME | 71 | 68 | 77 | 76 | 77 |

| **Vulkameter bei 180°C (Bayer-Frank-Vulkameter)** | | | | | | |
|---|---|---|---|---|---|---|
| t₁₀ | min | 1,5 | 1,4 | 1,4 | 1,4 | 1,4 |
| t₉₀ | min | 7,2 | 7,6 | 7,6 | 7,5 | 7,3 |
| t₉₀ - t₁₀ | min | 5,7 | 6,2 | 6,2 | 6,1 | 5,9 |
| Fₘᵢₙ | cN | 179 | 114 | 154 | 144 | 149 |
| Fₘₐₓ | cN | 4450 | 4752 | 5453 | 5561 | 5843 |
| Fₘₐₓ - Fₘᵢₙ | cN | 4271 | 4638 | 5299 | 5417 | 5694 |

| **Vulkanisateigenschaften (Vulkanisation 15 min bei 180°C; Temperung 6 h bei 150°C)** | | | | | | |
|---|---|---|---|---|---|---|
| Shore A Härte (23°C) | | 70 | 73 | 75 | 75 | 75 |
| Shore A Härte (70°C) | | 68 | 71 | 73 | 73 | 73 |
| Rückprallelastizität bei 23°C | % | 37 | 37 | 37 | 37 | 37 |
| σ₁₀₀ | MPa | 5,5 | 6,4 | 7,5 | 7,7 | 8,0 |
| σ₂₀₀ | MPa | 15,3 | 17,3 | 19,3 | 21,2 | 20,8 |
| Zugfestigkeit | MPa | 24,4 | 24,7 | 25,5 | 26,1 | 26,2 |
| ε_{b} | % | 345 | 290 | 270 | 265 | 260 |
| CS (70 h/23°C) Probekörper 1 | % | 13,4 | 11,8 | 10,2 | 9,8 | 9,6 |
| CS (70 h/150°C) Probekörper 1 | % | 29,4 | 26,2 | 25,8 | 23,1 | 22,8 |

**Tabelle 4a:Versuchsserie 4a (erfindungsgemäß bis auf Beispiel 4.0)**

| **Reduktion der TPP Menge durch Zusatz verschiedener Schwefeldonoren vor der Isolierung des hydrierten Nitrilkautschuks aus der chlorbenzolischen Lösung (ohne Rhodium-Abtrennung)** | | | | | | | |
|---|---|---|---|---|---|---|---|
| **Nr.** | **Schwefeldonor (bezogen auf 100 g HNBR)** | | | **Mol-verhältnis Schwefel-donor : TPP [mol/mol]** | **Reaktionszeit bei 90°C [min]** | **Gehalte im HNBR nach Aufarbeitung** | |
| | **Art** | **Menge [mg]** | **Menge [mmol]** | | | **TPP** | **TPP=S** |
| | | | | | | **[Gew.%]** | **[Gew.%]** |
| 4.0 | - | - | - | - | | 0,83 | 0,02 |
| 4.1* | Schwefel | 30,8 | 0,96 | 0,25/1 | 60 | 0,39 | 0,32 |
| 4.2* | Schwefel | 46,2 | 1,43 | 0,4/1 | 30 | 0,25 | 0,40 |
| 4.3* | Schwefel | 61,6 | 1,90 | 0,5/1 | 20 | 0,13 | 0,53 |
| 4.4* | Schwefel | 121,6 | 3,80 | 1,0/1 | 10 | <0,01 | 0,95 |
| 4.5* | Schwefel | 152,4 | 4,75 | 1,25/1 | 60 | <0,01 | 1,18 |
| 4.6* | Schwefel | 183,2 | 5,75 | 1,5/1 | 30 | <0,01 | 1,1 |
| 4.7* | KPS | 996 | - | - | 10 | <0,01 | 0,84 |
| 4.8* | KPS | 504 | - | - | 10 | 0,26 | 0,62 |
| 4.9* | KPS | 252 | - | - | 10 | 0,52 | 0,29 |
| 4.10* | TETD | 1128 | 3,80 | 1,0/1 | 30 | <0,01 | 0,52 |
| 4.11* | MTX | 1684 | 3,80 | 1,0/1 | 30 | 0,49 | 0,08 |
| 4.12* | DPTT | 528 | 0,95 | 0,25/1 | 60 | <0,01 | 0,89 |
| 4.13* | DPTT | 1056 | 1,90 | 0,5/1 | 5 | <0,01 | 0,88 |
| 4.14* | Si 69 | 2048 | 3,80 | 1,0/1 | 10 | <0,01 | 0,79 |
| 4.15* | Si 69 | 516 | 0,96 | 0,25/1 | 10 | 0,12 | 0,54 |
| 4.15* | Si 75 | 1804 | 3,80 | 1,0/1 | 60 | 0,11 | 0,43 |
| 4.16* | Si 75 | 456 | 0,96 | 0,25/1 | 20 | 0,42 | 0,16 |

**Tabelle 4b:Versuchsserie 4b (erfindungsgemäß bis auf Beispiel 1.0)**

| **Reduktion der TPP-Menge durch Zusatz verschiedener Schwefeldonoren vor der Isolierung des hydrierten Nitrilkautschuks aus der chlorbenzolischen Lösung mit vorhergehender Rhodium-Abtrennung** | | | | | | |
|---|---|---|---|---|---|---|
| **Nr.:** | **Schwefeldonor (bezogen auf 100 g HNBR)** | | | **Molverhältnis Schwefeldonor: TPP** | **Gehalte im HNBR nach Aufarbeitung** | |
| | **Art** | **Menge [mg]** | **Menge [mMol]** | | **TPP** | **TPP=S** |
| | | | | | **[Gew.%]** | **[Gew.%]** |
| 4.0 | - | - | - | - | 0,82 | 0,06 |
| 4.17* | Schwefel | 30,8 | 0,96 | 0,25/1 | 0,27 | 0,36 |
| 4.18* | Schwefel | 61,6 | 1,90 | 0,5/1 | 0,08 | 0,65 |
| 4.19* | Schwefel | 121,6 | 3,80 | 1,0/1 | <0,01 | 0,87 |
| 4.20* | Schwefel | 152,4 | 4,75 | 1,25/1 | <0,01 | 0,79 |
| 4.21* | Schwefel | 183,2 | 5,75 | 1,5/1 | <0,01 | 0,88 |
| 4.22* | TETD | 1128 | 3,80 | 1,0/1 | <0,01 | 0,47 |
| 4.23* | MTX | 1684 | 3,80 | 1,0/1 | <0,01 | 0,68 |

**Tabelle 5a: Versuchsserie 5a (erfindungsgemäß bis auf Beispiel 5.1)**

| **TPP-sowie TPP=S Gehalt von hydriertem Nitrilkautschuk nach Zugabe von Schwefeldonoren auf der Walze (Hydrierung mit 3,0 Gew.% TPP entsprechend 11,44 mmol/100g)** | | | | | | | | | |
|---|---|---|---|---|---|---|---|---|---|
| **Nr.:** | **Schwefeldonor (bezogen auf 100 g HNBR)** | | | **Mol-Verhältnis Schwefel-donor: TPP** | **Reaktions-bedingungen** | | | **Gehalte im HNBR** | |
| | **Art** | **Menge [mg]** | **Menge [mMol]** | | **Temperatur [°C]** | | **Zeit** | **TPP** | **TPP=S** |
| | | | | | **Walze** | **Fell** | **[min.]** | **[Gew.%]** | **[Gew.%]** |
| 5.1 | - | - | - | | 20 | 45 | 10,0 | 2,65 | 0,02 |
| 5.2* | Schwefel | 292 | 9,13 | 0,80/1 | 80 | 85 | 10,0 | 0,13 | 2,86 |
| 5.3* | Schwefel | 328 | 10,25 | 0,90/1 | 50 | 65 | 5,0 | <0,01 | 3,01 |
| 5.4* | Schwefel | 365 | 11,41 | 1,0/1 | 20 | 45 | 4,0 | <0,01 | 3,02 |
| 5.5* | DPTT | 1426 | 3,70 | 0,32/1 | 50 | 65 | 5,0 | <0,01 | 3,04 |
| 5.6* | DPTT | 1584 | 4,11 | 0,36/1 | 20 | 45 | 5,0 | <0,01 | 2,94 |

**Tabelle 5b: Versuchsserie 5b (erfindungsgemäß bis auf Beispiel 5.1)**

| **Eigenschaften der Mischungen sowie Vulkanisate auf Basis der teilhydrierten Nitrilkautschuke aus Versuchsserie 5a** | | | | | | | |
|---|---|---|---|---|---|---|---|
| **Versuch-Nr.:** | | **5.1** | **5.2*** | **5.3*** | **5.4*** | **5.5*** | **5.6*** |
| **Mischungs-Eigenschaften** | | | | | | | |
| ML1+4 @ 120°C | ME | 51,5 | 55,5 | 59,1 | 60,6 | - | - |

| **Vulkameter bei 180°C (Monsanto Die Rheometer)** | | | | | | | |
|---|---|---|---|---|---|---|---|
| t₁₀ | sec | 41 | 40 | 39 | 37 | 35 | 31 |
| t₅₀ | sec | 130 | 122 | 118 | 114 | 104 | 88 |
| t₉₀ | sec | 381 | 347 | 335 | 324 | 301 | 270 |
| t₉₅ | sec | 498 | 447 | 427 | 412 | 382 | 340 |
| t₉₀ - t₁₀ | sec | 340 | 307 | 311 | 287 | 266 | 239 |
| Fₘᵢₙ | dNm | 1,37 | 1,49 | 1,63 | 1,70 | 2,10 | 2,72 |
| Fₘₐₓ | dNm | 19,58 | 26,50 | 26,16 | 25,48 | 24,16 | 23,60 |
| Fₘₐₓ - Fₘᵢₙ | dNm | 18,21 | 25,01 | 24,53 | 23,78 | 22,06 | 20,88 |

| **Vulkanisateigenschaften (Vulkanisation 20 min bei 180°C; ohne Temperung 6 h bei 150°C)** | | | | | | | |
|---|---|---|---|---|---|---|---|
| Shore A Härte (23°C) | | 63,8 | 67,5 | 67,7 | 67,2 | 66,2 | 65,7 |
| Shore A Härte (70°C) | | 59,5 | 63,5 | 64,8 | 64,8 | 63,0 | 61,5 |
| Rückprallelastizität bei 23°C | % | 45,6 | 45,8 | 46,1 | 46,1 | 47,9 | 48,4 |
| Rückprallelastizität bei 70°C | % | 55,3 | 60,3 | 59,9 | 59,6 | 59,8 | 60,2 |
| σ₁₀ | MPa | 0,6 | 0,7 | 0,7 | 0,7 | 0,7 | 0,7 |
| σ₂₅ | MPa | 1,1 | 1,2 | 1,2 | 1,2 | 1,1 | 1,2 |
| σ₅₀ | MPa | 1,7 | 2,0 | 2,0 | 2,0 | 1,7 | 1,8 |
| σ₁₀₀ | MPa | 3,9 | 5,6 | 5,4 | 5,1 | 3,9 | 4,1 |
| σ₂₀₀ | MPa | 12,8 | 18,7 | 18,0 | 17,1 | 13,3 | 13,5 |
| σ₃₀₀ | MPa | 21,4 | - | - | - | 23,5 | 23,2 |
| Zugfestigkeit | MPa | 23,4 | 23,6 | 21,6 | 21,8 | 26,4 | 27,4 |
| ε_{b} | % | 330 | 245 | 231 | 239 | 330 | 335 |
| CS (70 h/23°C) Probekörper 1 | % | 15,4 | 9,5 | 10,0 | 10,9 | 13,0 | 14,7 |
| CS (70 h/150°C) Probekörper 1 | % | 24,0 | 12,0 | 21,0 | 22,6 | - | - |
| Goodrich Flexometer/ Temp eraturerhöhung | °C | 32,8 | 28,9 | 26,4 | 31,4 | 30,0 | 32,1 |

**Tabelle 6a: Versuchsserie 6a (erfindungsgemäß bis auf Beispiel 6.1)**

| **TPP- und TPP=S Gehalte nach Zusatz von TPP=S auf der Walze** | | | | | |
|---|---|---|---|---|---|
| **Versuch-Nr.:** | | **6.1=1.1** | **6.1*** | **6.2*** | **6.3*** |
| TPP-Zusatz bei Hydrierung | phr | 0 | 0 | 0 | 0 |
| TPP=S-Zusatz bei Mischungsherstellung | phr | 0 | 1,0 | 2,0 | 3,0 |
| TPP-Gehalt im HNBR nach Einmischung auf der Walze | Gew.% | <0,01 | <0,01 | <0,01 | <0,01 |
| TPP=S-Gehalt im HNBR nach Einmischung auf der Walze | Gew.% | <0,01 | 0,99 | 1,81 | 2,97 |

**Tabelle 6b: Versuchsserie 6b (erfindungsgemäß bis auf Beispiel 6.1)**

| **Eigenschaften der Mischungen und Vulkanisate auf Basis der hydrierten Nitrilkautschuke aus Versuchsserie 6a** | | | | | |
|---|---|---|---|---|---|
| **Versuch-Nr. :** | | **6.1=1.1** | **6.1*** | **6.2*** | **6.3*** |
| **Mischungs-Eigenschaften** | | | | | |
| ML1+4 @ 120°C | ME | 75 | 73 | 71 | 67 |

| **Vulkameter bei 180°C (Bayer-Frank-Vulkameter)** | | | | | |
|---|---|---|---|---|---|
| t₁₀ | min | 1,4 | 1,4 | 1,5 | 1,4 |
| t₉₀ | min | 6,9 | 7,5 | 7,5 | 7,3 |
| t₉₀ - t₁₀ | min | 5,5 | 6,4 | 6,0 | 5,9 |
| Fₘᵢₙ | cN | 195 | 134 | 149 | 129 |
| Fₘₐₓ | cN | 4994 | 5210 | 5180 | 5160 |
| Fₘₐₓ - Fₘᵢₙ | cN | 4799 | 5076 | 5031 | 5031 |

| **Vulkanisateigenschaften (Vulkanisation 20 min bei 180°C; danach Temperung 6 h bei 150°C)** | | | | | |
|---|---|---|---|---|---|
| Shore A Härte (23°C) | | 72 | 73 | 73 | 72 |
| Shore A Härte (70°C) | | 70 | 73 | 73 | 72 |
| Rückprallelastizität bei 23°C | % | 36 | 36 | 36 | 36 |
| Rückprallelastizität bei 70°C | % | 56 | - | - | - |
| σ₁₀₀ | MPa | 5,7 | 6,3 | 6,0 | 6,1 |
| σ₂₀₀ | MPa | 16,0 | 16,5 | 17,0 | 16,4 |
| σ₃₀₀ | MPa | - | - | - | - |
| Zugfestigkeit | MPa | 24,6 | 23,7 | 25,2 | 25,6 |
| ε_{b} | % | 300 | 270 | 295 | 290 |
| CS (70 h/23°C) Probekörper 1 | % | 12,3 | 11,5 | 11,3 | 11,9 |
| CS (70 h/150°C) Probekörper 1 | % | 29,4 | 28,7 | 28,9 | 28,4 |

Die Versuchsserien zeigen, dass der schädliche Einfluss von Triphenylphosphan, das bei der Hydrierung von Nitrilkautschuk als Cokatalysator eingesetzt wird, auf die Modul- und Compression-Set Werte von vulkanisiertem hydrierten Nitrilkautschuk durch Zugabe von Schwefeldonoren kompensiert werden kann. Die Schwefeldonoren werden sowohl der organischen Lösung des hydrierten Nitrilkautschuks vor der Isolierung durch Wasserdampfdestillation als auch dem festen hydrierten Nitrilkautschuk nach der Isolierung zugesetzt und zeigen ihre positive Wirkung in unterschiedlichen Molverhältnissen.

## Patentansprüche

1. **Hydrierte Nitrilkautschuke enthaltend**
(i) einen Gehalt an **Phosphanen, Diphosphanen** oder Mischungen davon im Bereich von 0 bis 1,0 Gew.%, bezogen auf den hydrierten Nitrilkautschuk, und
(ii) einen Gehalt an **Phosphansulfiden, Diphosphansulfiden** oder Mischungen davon im Bereich von 0,075 bis 10 Gew.%, bezogen auf den hydrierten Nitrilkautschuk.

2. **Hydrierte Nitrilkautschuke** nach Anspruch 1 enthaltend als Komponente (i) ein **Phosphan** der allgemeinen Formel (1-a), 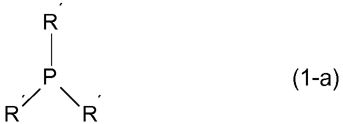 worin
R' gleich oder verschieden sind und Alkyl, Alkenyl, Alkadienyl, Alkoxy, Aryl, Heteroaryl, Cycloalkyl, Cycloalkenyl, Cycloalkadienyl, Halogen oder Trimethylsilyl bedeuten,
und/oder ein **Diphosphan** der allgemeinen Formel (1-b), 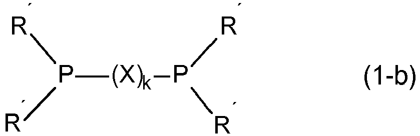 worin
R' gleich oder verschieden sind und Alkyl, Alkenyl, Alkadienyl, Alkoxy, Aryl, Heteroaryl, Cycloalkyl, Cycloalkenyl, Cycloalkadienyl, Halogen oder Trimethylsilyl bedeuten,
k 0 oder 1 ist und
X für eine geradkettige oder verzweigte Alkandiyl-, Alkendiyl- oder Alkindiylgruppe steht.

3. **Hydrierte Nitrilkautschuke** nach Anspruch 2, **dadurch gekennzeichnet, dass** das **Phosphan** der allgemeinen Formel (1-a) ausgewählt ist aus der Gruppe bestehend aus PPh₃, P(p-Tol)₃, P(o-Tol)₃, PPh(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na)₃, P(iso-Pr)₃, P(CHCH₃(CH₂CH₃))₃, P(cyclopentyl)₃, P(cyclohexyl)₃, P(neopentyl)₃, P(C₆H₅CH₂)(C₆H₅)₂, P(NCCH₂CH₂)₂(C₆H₅), P[(CH₃)₃C]₂Cl, P[(CH₃)₃C]₂(CH₃), P(tert.-Bu)₂(biph), P(C₆H₁₁)₂Cl, P(CH₃)(OCH₂CH₃)₂, P(CH₂=CHCH₂)₃, P(C₄H₃O)₃, P(CH₂OH)₃, P(m-CH₃OC₆H₄)₃, P(C₆F₅)₃, P[(CH₃)₃Si]₃ und P[(CH₃O)₃C₆H₂]₃, und das **Diphosphan** der allgemeinen Formel (1-b) ausgewählt ist aus der Gruppe bestehend aus Cl₂PCH₂CH₂PCl₂, (C₆H₁₁)₂PCH₂P(C₆H₁₁), (CH₃)₂PCH₂CH₂P(CH₃)₂, (C₆H₅)₂PCCP(C₆H₅)₂, (C₆H₅)₂PCH=CHP(C₆H₅)₂, (C₆F₅)₂P(CH₂)₂P(C₆F₅)₂, (C₆H₅)₂P(CH₂)₂P(C₆H₅)₂, (C₆H₅)₂P(CH₂)₃P(C₆H₅)₂, (C₆H₅)₂P(CH₂)₄P(C₆H₅)₂, (C₆H₅)₂P(CH₂)₅P(C₆H₅)₂, (C₆H₅)₂PCH(CH₃)CH(CH₃)P(C₆H₅)₂ und (C₆H₅)₂PCH(CH₃)CH₂P(C₆H₅)₂, wobei Ph für Phenyl, Tol für Tolyl, biph für Biphenyl, Bu für Butyl und Pr für Propyl stehen.

4. **Hydrierte Nitrilkautschuke** nach Anspruch 1, **dadurch gekennzeichnet, dass** als **Phosphan**-Komponente (i) Triphenylphosphan enthalten ist.

5. **Hydrierte Nitrilkautschuke** nach einem der Ansprüche 1 bis 4, **dadurch gekennzeichnet, dass** es sich bei der Phosphansulfid- bzw. Diphosphansulfid-Komponente (ii) um Sulfide von Phosphanen bzw. Diphosphanen handelt, bevorzugt von Phosphanen der allgemeinen Formel (1-a) bzw. Diphosphanen der allgemeinen Formel (1-b).

6. **Hydrierte Nitrilkautschuke** nach einem der Ansprüche 1 bis 5, **dadurch gekennzeichnet, dass** als **Phosphansulfid**-Komponente (ii) Triphenylphosphansulfid enthalten ist.

7. **Hydrierter Nitrilkautschuk** nach einem der Ansprüche 1 bis 6, **dadurch gekennzeichnet, dass** er Wiederholungseinheiten abgeleitet von mindestens Acrylnitril und 1,3-Butadien aufweist,.

8. **Verfahren zur Herstellung hydrierter Nitrilkautschuke** nach einem der Ansprüche 1 bis 7, **dadurch gekennzeichnet, dass** man hydrierten Nitrilkautschuk, der einen Gehalt an Phosphanen, Diphosphanen oder Mischungen davon in einem Bereich von 0,15-5 Gew.%, bezogen auf den hydrierten Nitrilkautschuk besitzt, mit **mindestens einem Schwefeldonor**, der mindestens zwei direkt kovalent miteinander verbundene Schwefelatome aufweist, umsetzt.

9. **Verfahren** nach Anspruch 8, **dadurch gekennzeichnet, dass** mindestens einer der Schwefeldonoren der allgemeinen Formeln (5a)-(5e) eingesetzt wird. 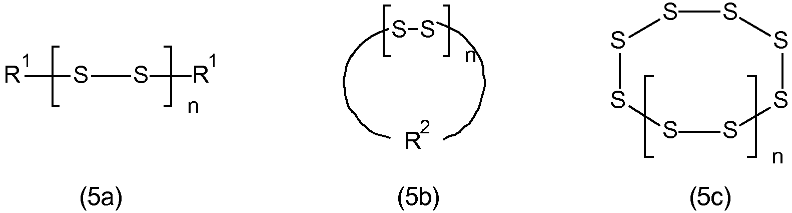 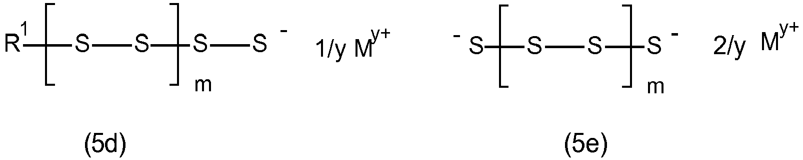 worin
**M^{y+}** für ein Kation mit y-facher Ladung steht, wobei y 1, 2, 3 oder 4 ist, bevorzugt ein Alkalimetallkation, ein Erdalkalimetallkation, NH₄⁺ oder N(R³)₄⁺, worin R³ gleich oder verschieden ist und für einen linearen, verzweigten, aliphatischen, verbrückten, cycloaliphatischen oder ganz oder teilweise aromatischen Rest steht,
**n** eine Zahl im Bereich von 1 bis 1000 bedeutet,
**m** eine Zahl im Bereich von 0 bis 998 bedeutet,
**R¹** Wasserstoff oder einen Rest mit 1 bis 20 C-Atomen bedeutet, wobei dieser Rest bis zu fünf Heteroatome ausgewählt aus der Gruppe bestehend aus N, P, S, O und Si enthalten kann, und linear, verzweigt, aliphatisch, verbrückt, cycloaliphatisch und/oder ganz oder teilweise aromatisch sein kann,
**R²** einen divalenten Rest mit 1 bis 20 C-Atome darstellt, der bis zu 5 Heteroatomen ausgewählt aus der Gruppe bestehend aus N, P, S und O enthalten kann, und linear, verzweigt, aliphatisch, verbrückt, cycloaliphatisch, ganz oder teilweise aromatisch sein kann.

10. **Verfahren** nach Anspruch 8 oder 9, **dadurch gekennzeichnet, dass** mindestens ein Schwefeldonor ausgewählt aus der Gruppe bestehend aus elementarem Schwefel in der Form von S₈-Ringen oder als polymerer Schwefel, der kristallin, teilkristallin oder amorph vorliegen kann, Diphenyldisulfid, Di-(n-dodecyl)disulfid, Di-(tert-dodecyl)disulfid, Tetraethylthiuramdisulfid, Tetrabutylthiuramdisulfid, Dipentamethylen-thiuramtetrasulfid, Dimorpholyldisulfid, Diethylxanthogendisulfid, Diisopropylxanthogendisulfid, Di-n-butylxanthogendisulfid, Ammoniumpolysulfid, Natriumpolysulfid, Kaliumpolysulfid, Bis[(5-ethyl-1,3-dioxan-5-yl)-methyl]-xanthogendisulfid, Dibenzthiazyldisulfid, 2-Morpholino-dithiobenzthiazol, Bis(tri-ethoxy-silylpropyl)polysulfide, worin die Kettenlänge des Schwefels im Bereich von 2 bis 4 liegt, und Bis(silatranylalkyl)polysulfide.

11. **Verfahren** nach einem der Ansprüche 8 bis 10, **dadurch gekennzeichnet, dass** die **molare Menge an Schwefeldonor** (berechnet als S) 5 bis 300%, bevorzugt 50 bis 150% und besonders bevorzugt 75 bis 125% der molaren Menge des Phosphans oder Diphosphans beträgt.

12. **Verfahren** nach einem der Ansprüche 8 bis 11, **dadurch gekennzeichnet, dass** die Phosphane bzw. Diphosphane vorzugsweise zu mindestens 50 mol%, in Phosphan- bzw. Diphosphansulfide umgewandelt werden.

13. **Verfahren** nach einem der Ansprüche 8 bis 12, **dadurch gekennzeichnet**,
(1) zunächst ein Nitrilkautschuk einer katalytischen Hydrierung in organischer Lösung und in Gegenwart eines Phosphans oder Diphosphans unterzogen wird, wobei das Phosphan oder Diphosphan entweder (a) als Ligand im Hydrierkatalysator vorliegt ohne weiteren Zusatz von Phosphan oder Diphosphan als Co-Katalysator, oder (b) als Ligand im Hydrierkatalysator vorliegt und zusätzlich noch als Co-Katalysator zugesetzt wird, oder (c) als Cokatalysator zugesetzt wird, der Hydrierkatalysator jedoch kein Phosphan oder Diphosphan als Ligand(en) aufweist, und
(2) anschließend der erhaltene hydrierte Nitrilkautschuk entweder vor, während oder nach der Isolierung, mit dem mindestens einen Schwefeldonor, der mindestens zwei direkt kovalent miteinander verbundene Schwefelatome aufweist, in Kontakt gebracht und umgesetzt wird.

14. **Verfahren** nach Anspruch 13, **dadurch gekennzeichnet, dass** als Hydrierkatalysator Tris(triphenylphosphan)rhodium-(I)-chlorid, Tris(tripenylphosphan) rhodium-(III)-chlorid, Tris(dimethylsulfoxid)rhodium-(III)-chlorid, Hydridorhodiumtetrakis(triphenylphosphan) oder die entsprechenden Verbindungen, in denen Triphenylphosphin ganz oder teilweise durch Tricyclohexylphosphin ersetzt ist, eingesetzt werden

15. **Vulkanisierbare Mischungen** enthaltend mindestens einen hydrierten Nitrilkautschuk gemäß einem der Ansprüche 1 bis 7 und mindestens ein Vernetzungssystem enthaltend mindestens einen Vernetzer und optional ein oder mehrere Vernetzungsbeschleuniger.

16. **Verfahren zur Herstellung von Vulkanisaten dadurch gekennzeichnet, dass** man eine vulkanisierbare Mischung gemäß Anspruch 15 vulkanisiert, bevorzugt im Rahmen eines Formgebungsverfahrens, bevorzugt bei einer Temperatur im Bereich von 100°C bis 200°C, besonders bevorzugt von 120°C bis 190°C und insbesondere bevorzugt von 130°C bis 180°C.

17. **Vulkanisate** erhältlich nach dem Verfahren gemäß Anspruch 16, bevorzugt in Form von Formkörpern, besonders bevorzugt in Form eines Riemens, von Walzenbelägen, einer Dichtung, einer Kappe, eines Stopfens, eines Schlauchs, von Bodenbelag, von Dichtungsmatten oder -platten, Profilen oder Membranen.

## Claims

1. Hydrogenated nitrile rubbers comprising
i) a content of phosphines, diphosphines or mixtures thereof, within the range from 0 to 1.0% by weight, based on the hydrogenated nitrile rubber, and
ii) a content of phosphine sulphides, diphosphine sulphides or mixtures thereof in the range from 0.075 to 10% by weight, based on the hydrogenated nitrile rubber.

2. Hydrogenated nitrile rubbers according to Claim 1, comprising, as component (i), a phosphine of the general formula (1-a), 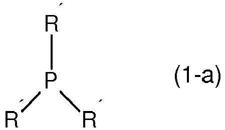 in which
R are the same or different and are each alkyl, alkenyl, alkadienyl, alkoxy, aryl, heteroaryl, cycloalkyl, cycloalkenyl, cycloalkadienyl, halogen or trimethylsilyl,
and/or a diphosphine of the general formula (1-b), 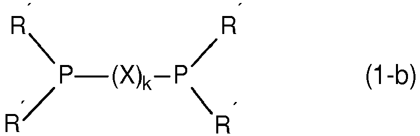
in which
R' are the same or different and are each alkyl, alkenyl, alkadienyl, alkoxy, aryl, heteroaryl, cycloalkyl, cycloalkenyl, cycloalkadienyl, halogen or trimethylsilyl,
k is 0 or 1 and
X is a straight-chain or branched alkanediyl, alkenediyl or alkynediyl group.

3. Hydrogenated nitrile rubbers according to Claim 2, **characterized in that** the phosphine of the general formula (1-a) is selected from the group consisting of PPh₃, P(p-Tol)₃, P(o-Tol)₃, PPh(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na)₃, P(iso-Pr)₃, P(CHCH₃(CH₂CH₃))₃, P(cyclopentyl)₃, P(cyclohexyl)₃, P(neopentyl)₃, P(C₆H₅CH₂)(C₆H₅)₂, P(NCCH₂CH₂)₂(C₆H₅), P[(CH₃)₃C]₂Cl, P[(CH₃)₃C]₂(CH₃), P(tert-Bu)₂(biph), P(C₆H₁₁)₂Cl, P(CH₃)(OCH₂CH₃)₂, P(CH₂=CHCH₂)₃, P(C₄H₃O)₃, P(CH₂OH)₃, P(m-CH₃OC₆H₄)₃, P(C₆F₅)₃, P[(CH₃)₃Si]₃ and P[(CH₃O)₃C₆H₂]₃, and the diphosphine of the general formula (1-b) is selected from the group consisting of Cl₂PCH₂CH₂PCl₂, (C₆H₁₁)₂PCH₂P(C₆H₁₁), (CH₃)₂PCH₂CH₂P(CH₃)₂, (C₆H₅)₂PCCP(C₆H₅)₂, (C₆H₅)₂PCH=CHP (C₆H₅)₂, (C₆F₅)₂P(CH₂)₂P(C₆F₅)₂, (C₆H₅)₂P(CH₂)₂P(C₆H₅)₂, (C₆H₅)₂P(CH₂)₃P(C₆H₅)₂, (C₆H₅)₂P(CH₂)₄P(C₆H₅)₂, (C₆H₅)₂P(CH₂)₅P(C₆H₅)₂, (C₆H₅)₂PCH(CH₃)CH(CH₃)P(C₆H₅)₂ and (C₆H₅)₂PCH(CH₃)CH₂P(C₆H₅)₂, where Ph is phenyl, Tol is tolyl, biph is biphenyl, Bu is butyl and Pr is propyl.

4. Hydrogenated nitrile rubbers according to Claim 1, **characterized in that** the phosphine component (i) present is triphenylphosphine.

5. Hydrogenated nitrile rubbers according to any of Claims 1 to 4, **characterized in that** the phosphine sulphide or diphosphine sulphide component (ii) comprises sulphides of phosphines or diphosphines, preferably of phosphines of the general formula (1-a) or diphosphines of the general formula (1-b).

6. Hydrogenated nitrile rubbers according to any of Claims 1 to 5, **characterized in that** the phosphine sulphide component (ii) present is triphenylphosphine sulphide.

7. Hydrogenated nitrile rubber according to any of Claims 1 to 6, **characterized in that** it has repeat units derived from at least acrylonitrile and 1,3-butadiene.

8. Process for producing hydrogenated nitrile rubbers according to any of Claims 1 to 7, **characterized in that** a hydrogenated nitrile rubber having a content of phosphines, diphosphines or mixtures thereof within a range of 0.15-5% by weight, based on the hydrogenated nitrile rubber, is reacted with at least one sulphur donor having at least two sulphur atoms covalently bonded directly to one another.

9. Process according to Claim 8, **characterized in that** at least one of the sulphur donors of the general formulae (5a)-(5e) is used 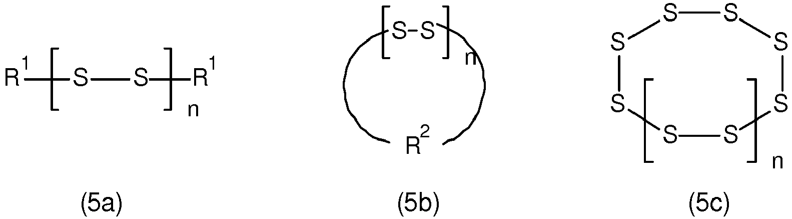 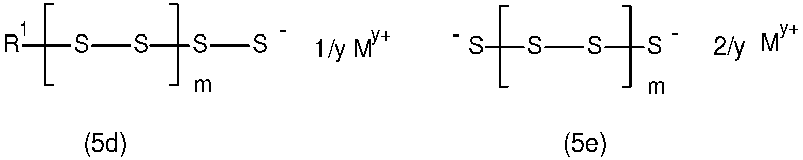 in which
**M^{y+}** is a y-valently charged cation where y is 1, 2, 3 or 4, preferably an alkali metal cation, an alkaline earth metal cation, NH₄⁺ or N(R³)₄⁺ in which R³ is the same or different and is a linear, branched, aliphatic, bridged, cycloaliphatic or wholly or partly aromatic radical,
**n** is a number in the range from 1 to 1000,
**m** is a number in the range from 0 to 998,
**R¹** is hydrogen or a radical having 1 to 20 carbon atoms, where this radical may contain up to five heteroatoms selected from the group consisting of N, P, S, 0 and Si, and may be linear, branched, aliphatic, bridged, cycloaliphatic and/or wholly or partly aromatic,
**R²** is a divalent radical which has 1 to 20 carbon atoms and may contain up to 5 heteroatoms selected from the group consisting of N, P, S and 0, and may be linear, branched, aliphatic, bridged, cycloaliphatic and/or wholly or partly aromatic.

10. Process according to Claim 8 or 9, **characterized in that** at least one sulphur donor selected from the group consisting of elemental sulphur in the form of S₈ rings or in the form of polymeric sulphur, which may be in crystalline, semi-crystalline or amorphous form, diphenyl disulphide, di(n-dodecyl) disulphide, di-(tert-dodecyl) disulphide, tetraethylthiuram disulphide, tetrabutylthiuram disulphide, dipentamethylenethiuram tetrasulphide, dimorpholyl disulphide, diethylxanthogen disulphide, diisopropylxanthogen disulphide, di-n-butylxanthogen disulphide, ammonium polysulphide, sodium polysulphide, potassium polysulphide, bis[(5-ethyl-1,3-dioxan-5-yl)methyl]xanthogen disulphide, dibenzothiazyl disulphide, 2-morpholinodithiobenzothiazole, bis(triethoxysilylpropyl) polysulphides in which the chain length of the sulphur is in the range from 2 to 4, and bis(silatranylalkyl) polysulphides.

11. Process according to any of Claims 8 to 10, **characterized in that** the molar amount of sulphur donor (calculated as S) is 5 to 300%, preferably 50 to 150% and more preferably 75 to 125% of the molar amount of the phosphine or diphosphine.

12. Process according to any of Claims 8 to 11, **characterized in that** the phosphines or diphosphines are converted to phosphine sulphides or diphosphine sulphides preferably to an extent of at least 50 mol%.

13. Process according to any of Claims 8 to 12, **characterized in that**
(1) a nitrile rubber is first subjected to a catalytic hydrogenation in organic solution and in the presence of a phosphine or diphosphine, the phosphine or diphosphine (a) being present as a ligand in the hydrogenation catalyst without further addition of phosphine or diphosphine as a cocatalyst or (b) being present as a ligand in the hydrogenation catalyst and additionally being added as a cocatalyst, or (c) being added as a cocatalyst, but with no phosphine or diphosphine present as ligand(s) in the hydrogenation catalyst, and
(2) then the hydrogenated nitrile rubber obtained, before, during or after the isolation, is contacted with and reacted with the at least one sulphur donor having at least two sulphur atoms covalently bonded directly to one another.

14. Process according to Claim 13, **characterized in that** tris(triphenylphosphine)rhodium(I) chloride, tris(triphenylphosphine)rhodium(III) chloride, tris(dimethyl sulphoxide)rhodium(III) chloride, hydridorhodiumtetrakis(triphenylphosphine) or the corresponding compounds in which triphenylphosphine has been replaced wholly or partly by tricyclohexylphosphine are used as hydrogenation catalyst.

15. Vulcanizable mixtures comprising at least one hydrogenated nitrile rubber according to any of Claims 1 to 7 and at least one crosslinking system comprising at least one crosslinker and optionally one or more crosslinking accelerators.

16. Process for producing vulcanizates, **characterized in that** a vulcanizable mixture according to Claim 15 is vulcanized, preferably in the course of a shaping process, preferably at a temperature in the range from 100°C to 200°C, more preferably from 120°C to 190°C and especially preferably from 130°C to 180°C.

17. Vulcanizates obtainable by the process according to Claim 16, preferably in the form of shaped bodies, more preferably in the form of a drive belt, of roller coverings, of a seal, of a cap, of a stopper, of a hose, of floor covering, of sealing mats or sheets, profiles or membranes.

## Revendications

1. Caoutchoucs de nitrile hydrogénés, contenant :
(i) une teneur en phosphanes, en diphosphanes ou en mélanges de ceux-ci dans la plage allant de 0 à 1,0 % en poids, par rapport au caoutchouc de nitrile hydrogéné, et
(ii) une teneur en sulfures de phosphanes, en sulfures de diphosphanes ou en mélanges de ceux-ci dans la plage allant de 0,075 à 10 % en poids, par rapport au caoutchouc de nitrile hydrogéné.

2. Caoutchoucs de nitrile hydrogénés selon la revendication 1, contenant en tant que composant (i) un phosphane de la formule générale (1-a) : 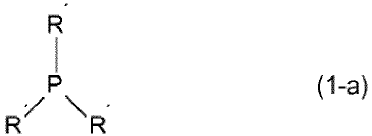 dans laquelle
les R' sont identiques ou différents, et signifient alkyle, alcényle, alcadiényle, alcoxy, aryle, hétéroaryle, cycloalkyle, cycloalcényle, cycloalcadiényle, halogène ou triméthylsilyle,
et/ou un diphosphane de la formule générale (1-b) : 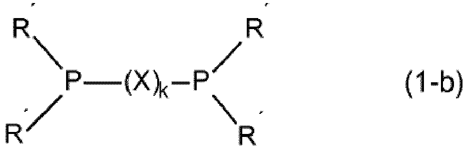
dans laquelle
les R' sont identiques ou différents, et signifient alkyle, alcényle, alcadiényle, alcoxy, aryle, hétéroaryle, cycloalkyle, cycloalcényle, cycloalcadiényle, halogène ou triméthylsilyle,
k représente 0 ou 1, et
X représente un groupe alcanediyle, alcènediyle ou alcynediyle linéaire ou ramifié.

3. Caoutchoucs de nitrile hydrogénés selon la revendication 2, **caractérisés en ce que** le phosphane de la formule générale (1-a) est choisi dans le groupe constitué par PPh₃, P(p-Tol)₃, P(o-To1)₃, PPh(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na)₃, P(iso-Pr)₃, P(CHCH₃(CH₂CH₃))₃, P(cyclopentyl)₃, P(cyclohexyl)₃, P(néopentyl)₃, P(C₆H₅CH₂)(C₆H₅)₂, P(NCCH₂CH₂)₂(C₆H₅), P[(CH₃)₃C]₂Cl, P[(CH₃)₃C]₂(CH₃), P(tert.-Bu)₂(biph), P(C₆H₁₁)₂Cl, P(CH₃)(OCH₂CH₃)₂, P(CH₂=CHCH₂)₃, P(C₄H₃O)₃, P(CH₂OH)₃, P(m-CH₃OC₆H₄)₃, P(C₆F₅)₃, P[(CH₃)₃Si]₃ et P[(CH₃O)₃C₆H₂]₃, et le diphosphane de la formule générale (1-b) est choisi dans le groupe constitué par Cl₂PCH₂CH₂PCl₂, (C₆H₁₁)₂PCH₂P(C₆H₁₁), (CH₃)₂PCH₂CH₂P(CH₃)₂, (C₆H₅)₂PCCP(C₆H₅)₂, (C₆H₅)₂PCH=CHP(C₆H₅)₂, (C₆F₅)₂P(CH₂)₂P(C₆F₅)₂, (C₆H₅)₂P(CH₂)₂P(C₆H₅)₂, (C₆H₅)₂P(CH₂)₃P(C₆H₅)₂, (C₆H₅)₂P(CH₂)₄P(C₆H₅)₂, (C₆H₅)₂P(CH₂)₅P(C₆H₅)₂, (C₆H₅)₂PCH(CH₃)CH (CH₃)P (C₆H₅)₂ et (C₆H₅)₂PCH(CH₃)CH₂P(C₆H₅)₂, Ph représentant phényle, Tol représentant tolyle, biph représentant biphényle, Bu représentant butyle et Pr représentant propyle.

4. Caoutchoucs de nitrile hydrogénés selon la revendication 1, **caractérisés en ce que** du triphénylphosphane est contenu en tant que composant phosphane (i).

5. Caoutchoucs de nitrile hydrogénés selon l'une quelconque des revendications 1 à 4, **caractérisés en ce que** le composant sulfure de phosphane ou sulfure de diphosphane (ii) consiste en des sulfures de phosphanes ou de diphosphanes, de préférence de phosphanes de la formule générale (1-a) ou de diphosphanes de la formule générale (1-b) .

6. Caoutchoucs de nitrile hydrogénés selon l'une quelconque des revendications 1 à 5, **caractérisés en ce que** du sulfure de triphénylphosphane est contenu en tant que composant sulfure de phosphane (ii).

7. Caoutchoucs de nitrile hydrogénés selon l'une quelconque des revendications 1 à 6, **caractérisés en ce qu'**il comprend des unités de répétition dérivées au moins d'acrylonitrile et de 1,3-butadiène.

8. Procédé de fabrication de caoutchoucs de nitrile hydrogénés selon l'une quelconque des revendications 1 à 7, **caractérisé en ce qu'**un caoutchouc de nitrile hydrogéné, qui présente une teneur en phosphanes, en diphosphanes ou en mélanges de ceux-ci dans une plage allant de 0,15 à 5 % en poids, par rapport au caoutchouc de nitrile hydrogéné, est mis en réaction avec au moins un donneur de soufre, qui comprend au moins deux atomes de soufre reliés directement l'un avec l'autre par une liaison covalente.

9. Procédé selon la revendication 8, **caractérisé en ce qu'**au moins un des donneurs de soufre des formules générales (5a) à (5e) est utilisé : 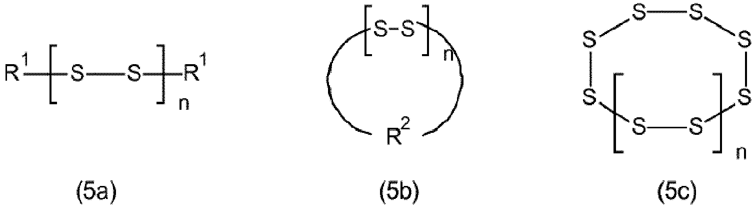 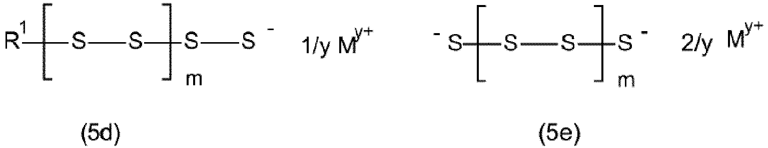 dans lesquelles
**M^{y+}** représente un cation à charge y, y représentant 1, 2, 3 ou 4, de préférence un cation de métal alcalin, un cation de métal alcalino-terreux, NH₄⁺ ou N(R³)₄⁺, les R³ étant identiques ou différents, et représentant un radical linéaire, ramifié, aliphatique, ponté, cycloaliphatique ou entièrement ou partiellement aromatique,
**n** signifie un nombre dans la plage allant de 1 à 1 000,
**m** signifie un nombre dans la plage allant de 0 à 998,
**R¹** signifie l'hydrogène ou un radical de 1 à 20 atomes C, ce radical pouvant contenir jusqu'à cinq hétéroatomes choisis dans le groupe constitué par N, P, S, 0 et Si, et pouvant être linéaire, ramifié, aliphatique, ponté, cycloaliphatique et/ou entièrement ou partiellement aromatique,
**R²** représente un radical bivalent de 1 à 20 atomes C, qui peut contenir jusqu'à 5 hétéroatomes choisis dans le groupe constitué par N, P, S et 0, et qui peut être linéaire, ramifié, aliphatique, ponté, cycloaliphatique, entièrement ou partiellement aromatique.

10. Procédé selon la revendication 8 ou 9, **caractérisé en ce qu'**au moins un donneur de soufre est choisi dans le groupe constitué par le soufre élémentaire sous la forme de cycles S₈ ou sous la forme de soufre polymère, qui peut se présenter sous forme cristalline, partiellement cristalline ou amorphe, le disulfure de diphényle, le disulfure de di-(n-dodécyle), le disulfure de di-(tert-dodécyle), le disulfure de tétraéthylthiuram, le disulfure de tétrabutylthiuram, le tétrasulfure de dipentaméthylène-thiuram, le disulfure de dimorpholyle, le disulfure de diéthylxanthogène, le disulfure de diisopropylxanthogène, le disulfure de di-n-butylxanthogène, le polysulfure d'ammonium, le polysulfure de sodium, le polysulfure de potassium, le disulfure de bis[(5-éthyl-1,3-dioxan-5-yl)-méthyl]-xanthogène, le disulfure de dibenzothiazyle, le 2-morpholinodithiobenzothiazole, les polysulfures de bis(triéthoxy-silylpropyle), dans lesquels la longueur de chaîne du soufre se situe dans la plage allant de 2 à 4, et les polysulfures de bis(silatranylalkyle).

11. Procédé selon l'une quelconque des revendications 8 à 10, **caractérisé en ce que** la quantité molaire de donneur de soufre (calculée en tant que S) est de 5 à 300 %, de préférence de 50 à 150 % et de manière particulièrement préférée de 75 à 125 % de la quantité molaire de phosphane ou de diphosphane.

12. Procédé selon l'une quelconque des revendications 8 à 11, **caractérisé en ce que** les phosphanes ou les diphosphanes sont transformés de préférence à hauteur d'au moins 50 % en moles en sulfures de phosphanes ou de diphosphanes.

13. Procédé selon l'une quelconque des revendications 8 à 12, **caractérisé en ce que**
(1) un caoutchouc de nitrile est tout d'abord soumis à une hydrogénation catalytique dans une solution organique et en présence d'un phosphane ou d'un diphosphane, le phosphane ou le diphosphane soit (a) se présentant sous la forme d'un ligand dans le catalyseur d'hydrogénation sans ajout supplémentaire de phosphane ou de diphosphane en tant que co-catalyseur, soit (b) se présentant sous la forme d'un ligand dans le catalyseur d'hydrogénation et étant en outre ajouté en tant que co-catalyseur, soit (c) étant ajouté en tant que co-catalyseur, le catalyseur d'hydrogénation ne comprenant toutefois par de phosphane ou de diphosphane en tant que ligand(s), et
(2) le caoutchouc de nitrile hydrogéné obtenu est ensuite mis en contact et mis en réaction avant, pendant ou après l'isolement avec ledit au moins un donneur de soufre, qui comprend au moins deux atomes de soufre directement reliés l'un avec l'autre par une liaison covalente.

14. Procédé selon la revendication 13, **caractérisé en ce que** le chlorure de tris(triphénylphosphane)-rhodium (I), le chlorure de tris(triphénylphosphane)-rhodium (III), le chlorure de tris(diméthylsulfoxyde)-rhodium (III), l'hydrido-rhodium-tétrakis(triphénylphosphane) et les composés correspondants, dans lesquels la triphénylphosphine est remplacée en totalité ou en partie par de la tricyclohexylphosphine, sont utilisés en tant que catalyseur d'hydrogénation.

15. Mélanges vulcanisables contenant au moins un caoutchouc de nitrile hydrogéné selon l'une quelconque des revendications 1 à 7 et au moins un système de réticulation contenant au moins un agent de réticulation et éventuellement un ou plusieurs accélérateurs de réticulation.

16. Procédé de fabrication de vulcanisats, **caractérisé en ce qu'**un mélange vulcanisable selon la revendication 15 est vulcanisé, de préférence dans le cadre d'un procédé de façonnage, de préférence à une température dans la plage allant de 100 °C à 200 °C, de manière particulièrement préférée de 120 °C à 190 °C, et de manière notamment préférée de 130 °C à 180 °C.

17. Vulcanisats pouvant être obtenus par le procédé selon la revendication 16, de préférence sous la forme de corps moulés, de manière particulièrement préférée sous la forme d'une courroie, de revêtements de cylindres, d'un joint, d'un capuchon, d'un bouchon, d'un tuyau, d'un revêtement de sol, de mats ou plaques d'étanchéité, de profilés ou de membranes.
